(19) Europäisches Patentamt
European Patent Office
Office européen des brevets

(11) EP 4 378 723 A1

(12) EUROPEAN PATENT APPLICATION
published in accordance with Art. 153(4) EPC

(43) Date of publication:
05.06.2024 Bulletin 2024/23

(21) Application number: 22849118.9

(22) Date of filing: 28.06.2022

(51) International Patent Classification (IPC):
*B60K 1/04* (2019.01) *B60H 1/22* (2006.01)
*B60K 7/00* (2006.01) *B60K 11/04* (2006.01)
*H02K 9/19* (2006.01)

(52) Cooperative Patent Classification (CPC):
B60H 1/22; B60K 1/04; B60K 7/00; B60K 11/04; H02K 9/19

(86) International application number:
PCT/JP2022/025646

(87) International publication number:
WO 2023/008048 (02.02.2023 Gazette 2023/05)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 28.07.2021 JP 2021123077

(71) Applicant: Hitachi, Ltd.
Tokyo 100-8280 (JP)

(72) Inventors:
- TAKAHASHI, Akeshi
Tokyo 100-8280 (JP)
- TOYODA, Hiroyuki
Tokyo 100-8280 (JP)
- KOYAMA, Masaki
Tokyo 100-8280 (JP)
- ENOMOTO, Yuji
Tokyo 100-8280 (JP)
- NAKATSU, Kinya
Tokyo 100-8280 (JP)

(74) Representative: MERH-IP Matias Erny Reichl Hoffmann
Patentanwälte PartG mbB
Paul-Heyse-Strasse 29
80336 München (DE)

# (54) HEAT CYCLE SYSTEM, IN-WHEEL MOTOR, AND VEHICLE

(57) The purpose of the present invention is to provide a low-cost heat cycle system that can reduce power consumption; an in-wheel motor that is driven by using this heat cycle system; and a vehicle in which this heat cycle system is installed. This heat cycle system 400 is provided with: a compressor 100; an accumulator 501; an electric drive unit 200 comprising an electric motor 210; a refrigerant compressed by the compressor 100; and an indoor heat exchanger 321 and an outdoor heat exchanger 311 responsible for heat exchange of the refrigerant. The heat cycle system 400 comprises a four-way valve 102 that comprises a single circulation path for circulating the refrigerant and that can switch the connection destination of a refrigerant discharge section of the compressor 100 to the indoor heat exchanger 321 or the outdoor heat exchanger 311. A cooling unit 211 of the electric drive unit 210 is arranged upstream of the accumulator 501 in the flow of the refrigerant.

EP 4 378 723 A1

FIG. 2A

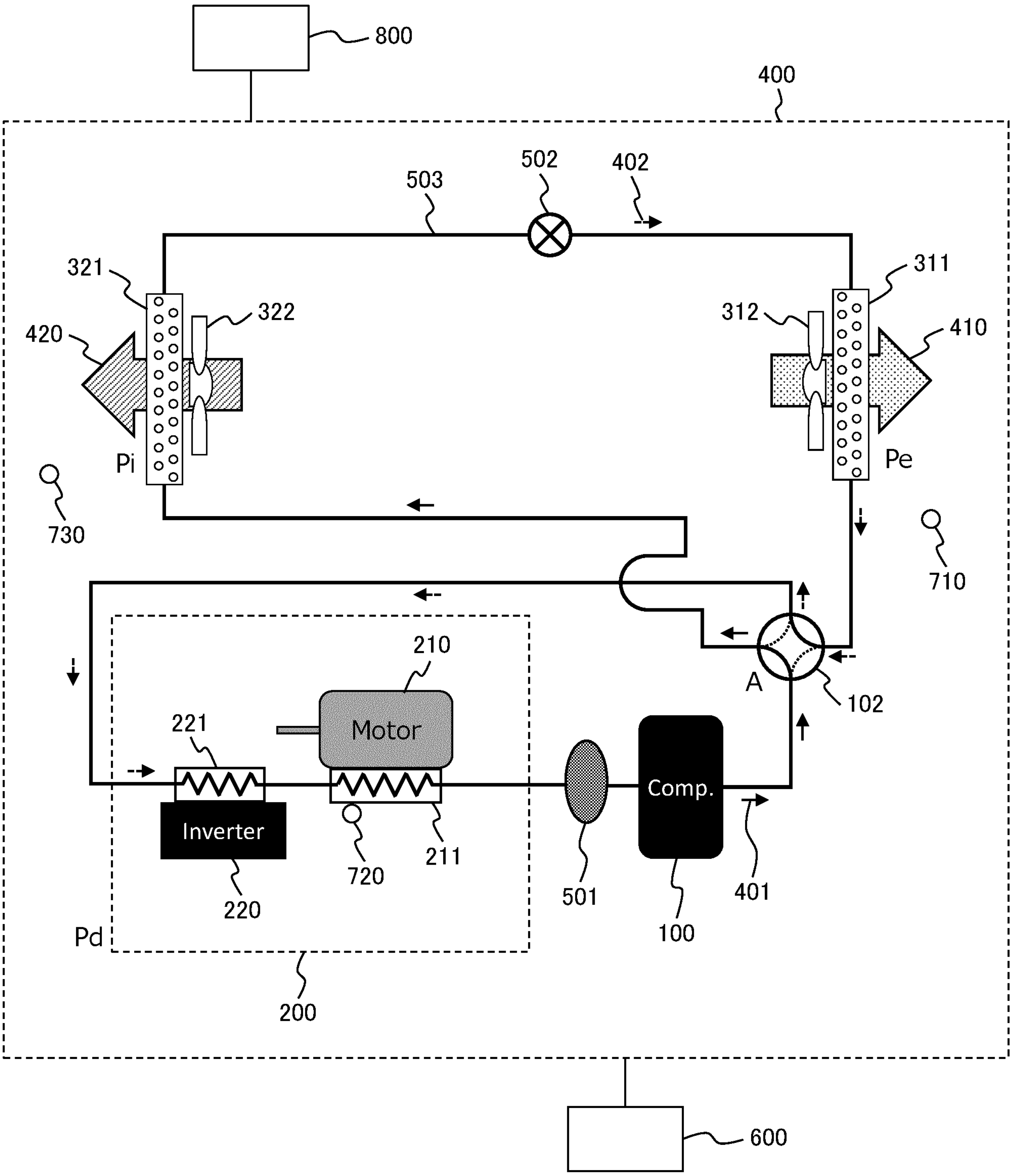
800
400
503
502
402
321
322
311
312
420
410
Pi
Pe
730
710
210
Motor
221
102
A
Comp.
Inverter
720
211
501
100
401
220
Pd
200
600

# Description

## Technical Field

The present invention relates to a heat cycle system that includes an air conditioning system, a cooling system, and the like mounted in a mobile vehicle such as an automobile, a construction machine, a railway vehicle, and the like.

## Background Art

In recent years, electrification of automobiles has rapidly progressed, and there is an increasing need to reduce power consumption (power cost hereinbelow) of an electric drive system. In particular, in an electric vehicle (EV hereinbelow), because it is necessary to supply heating energy in winter from a battery, there is a problem that a cruising distance is significantly reduced. In an existing engine vehicle, heating energy is supplied by the exhaust heat of an engine, and hence this problem does not occur.

Here, heating energy of an EV is supplied in roughly two forms, one using a PTC heater (electric resistance heating), and the other using a heat pump (heat cycle of a household air conditioner). The former has a problem in that power consumption is large because heating is performed by electric resistance, but the configuration is simple, and there is a significant advantage in that introduction costs can be suppressed. A dedicated air-cooling air conditioner is mounted in an existing engine vehicle, but the introduction costs can also be suppressed in that the dedicated air-cooling air conditioner can be used as is. Because the latter heat pump is configured for the purpose of both cooling and heating, there is a problem that the number of parts and the part size increase in comparison with a dedicated air-cooling air conditioner, but the latter heat pump excels in reducing power consumption.

Patent Literature 1 discloses a technique that enables heating, cooling, and dehumidification by means of one set of heat pump cycles. Patent Literature 2 discloses a technique wherein a heat exchanger of an electric drive system and an outdoor heat exchanger for air conditioning are commonly utilized by using a refrigerant for air conditioning in cooling the electric drive system, and the number of heat exchangers is reduced from the conventional three to two (in Patent Literature 2, the two heat exchangers are referred to as a condenser and an evaporator).

## Citation List

### Patent Literature

PTL 1: JP H6-213531 A

PTL 2: WO 2019/098224 A

## Summary of Invention

### Technical Problem

In an EV, an electric drive system (e-Axle hereinbelow) that includes a motor, an inverter, and the like is adopted, and the e-Axle is cooled by a water-cooling system or an oil-cooling system. Therefore, a heat exchanger, a circulation pump, piping, and the like are required for the e-Axle, and there is a problem that the vehicle cost increases due to an increase in the number of parts, and also the problem of reducing power costs due to the increase in the vehicle weight. In a case where the heat pump as disclosed in Patent Literature 1 is used, an outdoor heat exchanger and an indoor heat exchanger are additionally required, and an air conditioning compressor, a refrigerant pipe, and the like are further required, and thus the number of parts becomes enormous.

In order to solve this problem, in Patent Literature 2, the e-Axle heat exchanger and the outdoor heat exchanger for air conditioning are commonly utilized by using the refrigerant for air conditioning to cool the e-Axle, and the number of heat exchangers is reduced from the conventional three to two. However, because the pipe for supplying the refrigerant to the e-Axle needs to be branched from the pipe for air conditioning, a flow regulating valve is additionally required. In addition to an expansion valve for air conditioning, an e-Axle expansion valve is additionally required. Further, in addition to the air conditioning pipe, an e-Axle branch pipe is additionally required. Therefore, even if the number of heat exchangers can be reduced, in addition to causing an increase in the number of additional parts and increased costs, there are many problems such as an increase in the laying surface area of the additional parts and a decrease in the degree of freedom of the layout, as well as a weight reduction effect not being obtained.

As described above, in the prior art, it is difficult to avoid an increase in cost and weight when introducing an e-Axle cooling system.

An object of the present invention is to provide a low-cost heat cycle system capable of reducing power consumption, an in-wheel motor that is driven using the heat cycle system, and a vehicle equipped with the heat cycle system.

### Solution to Problem

In order to achieve the above object, the present invention includes various embodiments, and as an example, the drive heat cycle system of the present invention is:

a heat cycle system for controlling indoor air conditioning of a vehicle, the heat cycle system including:

a compressor;

an accumulator;
an electric drive unit which includes an electric motor and an electrical component that supplies appropriate power to the electric motor;
a refrigerant compressed by the compressor; and
an indoor heat exchanger and an outdoor heat exchanger that perform heat exchange of the refrigerant,
wherein the heat cycle system includes a single circulation path through which the refrigerant is circulated and has a four-way valve which enables a connection destination of a refrigerant discharge unit of the compressor to be switched to the indoor heat exchanger or the outdoor heat exchanger, and
wherein a cooling unit of the electric drive unit is disposed upstream of the accumulator in the flow of the refrigerant.

Advantageous Effects of Invention

According to the present invention, it is possible to provide a low-cost heat cycle system capable of reducing power consumption, an in-wheel motor that is driven using the heat cycle system, and a vehicle in which the heat cycle system is mounted.

Problems, configurations, advantageous effects other than those described above will be clarified by the Description of Embodiments hereinbelow.

Brief Description of Drawings

[FIG. 1A] FIG. 1A is an explanatory view of a drive heat cycle system according to a first embodiment of the present invention.
[FIG. 1B] FIG. 1B is an explanatory view of a drive heat cycle system according to a comparative example (first comparative example) compared with the present invention.
[FIG. 1C] FIG. 1C is an explanatory view of a drive heat cycle system according to a comparative example (second comparative example) compared with the present invention.
[FIG. 2A] FIG. 2A is an explanatory view of a drive heat cycle system according to the first embodiment of the present invention and in which a heating operation is performed.
[FIG. 2B] FIG. 2B is an explanatory view of a drive heat cycle system according to the first embodiment of the present invention and in which a cooling operation is performed.
[FIG. 2C] FIG. 2C is a diagram illustrating an operation pattern of the drive heat cycle system according to the first embodiment of the present invention.
[FIG. 2D] FIG. 2D is a diagram illustrating a control sequence of the drive heat cycle system according to the first embodiment of the present invention.
[FIG. 3] FIG. 3 is an explanatory view of another embodiment of the drive heat cycle system according to the first embodiment of the present invention.
[FIG. 4A] FIG. 4A is an explanatory view of a drive heat cycle system according to the second embodiment of the present invention, and is a diagram illustrating a case where an air conditioner is operated to perform heating and a battery is heated.
[FIG. 4B] FIG. 4B is an explanatory view of a drive heat cycle system according to the second embodiment of the present invention, and is a diagram illustrating a case where refrigerant is not circulated in the battery while the air conditioner is operated to perform heating.
[FIG. 4C] FIG. 4C is an explanatory view of a drive heat cycle system according to the second embodiment of the present invention, and is a diagram illustrating a case where the air conditioner heating operation is stopped and refrigerant is not circulated in the battery.
[FIG. 4D] FIG. 4D is an explanatory view of a drive heat cycle system according to the second embodiment of the present invention, and is a diagram illustrating a case where the air conditioner heating operation is stopped and refrigerant is circulated in the battery.
[FIG. 4E] FIG. 4E is an explanatory view of a drive heat cycle system according to the second embodiment of the present invention, and is a diagram illustrating a case where the air conditioner is operated to perform cooling and refrigerant is circulated in the battery.
[FIG. 4F] FIG. 4F is a diagram illustrating an operation pattern of the drive heat cycle system according to the second embodiment of the present invention.
[FIG. 4G] FIG. 4G is a diagram illustrating a control sequence of the drive heat cycle system according to the second embodiment of the present invention.
[FIG. 4H] FIG. 4H is an explanatory view of another embodiment of the drive heat cycle system according to the second embodiment of the present invention.
[FIG. 41] FIG. 4I is an explanatory view of another embodiment of the drive heat cycle system according to the second embodiment of the present invention.
[FIG. 5A] FIG. 5A is an explanatory view of a drive heat cycle system according to a third embodiment of the present invention, and is a diagram illustrating a case where an air conditioner is operated to perform heating.
[FIG. 5B] FIG. 5B is an explanatory view of a drive heat cycle system according to the third embodiment of the present invention, and is a diagram illustrating a case where the air conditioner is operated to perform cooling.
[FIG. 5C] FIG. 5C is a diagram illustrating an operation pattern of the drive heat cycle system according to the third embodiment of the present invention.

[FIG. 5D] FIG. 5D is a diagram illustrating a control sequence of the drive heat cycle system according to the third embodiment of the present invention.

[FIG. 6] FIG. 6 is an explanatory view of another embodiment of the drive heat cycle system according to the third embodiment of the present invention.

[FIG. 7A] FIG. 7A is an explanatory view of another embodiment of the drive heat cycle system according to the third embodiment of the present invention.

[FIG. 7B] FIG. 7B is an explanatory view of another embodiment of the drive heat cycle system according to the third embodiment of the present invention.

[FIG. 8A] FIG. 8A is a schematic view of an embodiment of a compressor of the drive heat cycle system of the present invention.

[FIG. 8B] FIG. 8B is a cross-sectional view of an internal structure according to one embodiment of the compressor of the drive heat cycle system of the present invention.

[FIG. 9A] FIG. 9A is a diagram according to a fourth embodiment of the present invention, and is a perspective view illustrating the exterior of an outer rotor-type in-wheel motor.

[FIG. 9B] FIG. 9B is an exploded perspective view in which the in-wheel motor of FIG. 9A is shown separated on an axis of rotation.

[FIG. 10] FIG. 10 is a schematic plan view of a vehicle according to a fifth embodiment of the present invention.

Description of Embodiments

Hereinafter, embodiments of the present invention will be described with reference to the drawings. In the following description, the same constituent elements are denoted by the same reference signs. The names and functions of such constituent elements are the same, and duplicate descriptions are avoided. The subject of the following description is a drive heat cycle system for an automobile, but the advantageous effect of the present invention is not limited thereto, and can be applied to all mobile vehicles.

[First embodiment]

Hereinafter, a first embodiment of the present invention will be described with reference to FIGS. 1 to 3.

First, a difference between the prior art and the present invention will be described with reference to FIGS. 1A to 1C.

FIG. 1A is an explanatory view of a drive heat cycle system 400 according to the first embodiment of the present invention. FIG. 1B is an explanatory view of a drive heat cycle system (conventional system) 400b according to a comparative example (first comparative example) compared with the present invention. FIG. 1C is an explanatory view of a drive heat cycle system (conventional system) 400' according to a comparative example (second comparative example) compared with the present invention.

In an EV, an electric drive unit 200 called an e-Axle that includes an electric motor (motor), an electrical component (inverter), and the like is mounted, and the electric drive unit 200 is cooled by a water-cooling system or an oil-cooling system. As illustrated in FIG. 1B, in a conventional system, a heat cycle system for air conditioning (air conditioning heat cycle system) 400a and an e-Axle heat cycle system (drive heat cycle system) 400b are configured separately. The heat cycle system 400a for air conditioning includes a compressor 100 installed in a drive component mounting space 300, an outdoor heat exchanger 311a that performs heat exchange with an outdoor space 310 by means of an outdoor fan 312a, an expansion valve 502, and an indoor heat exchanger 321 that performs heat exchange with an indoor space 320 by means of an indoor fan 322. As the e-Axle heat cycle system 400b, a heat exchanger 311b, a circulation pump 201, a pipe 503b, and the like are required separately from the above, and there is a problem that the vehicle cost increases due to an increase in the number of parts, and also the problem of reducing power costs due to the increase in the vehicle weight.

In order to solve this problem, in Patent Literature 2, as illustrated in FIG. 1C, a refrigerant 401a for air conditioning is used for cooling the electric drive unit 200, and hence the heat exchanger for the electric drive unit 200 is shared with an outdoor heat exchanger 311 for air conditioning, and the number of heat exchangers is reduced from the conventional 3 to 2. However, in order to appropriately supply the refrigerant 401a to the electric drive unit 200, it is necessary to branch the pipe 503b for the electric drive unit 200 from a pipe 503a for air conditioning on the downstream side of the outdoor heat exchanger 311, and then appropriately control the supply flow rate by using a flow regulating valve 202. Therefore, the flow regulating valve 202 is additionally required. In addition, because a low-temperature refrigerant 402a is supplied to the indoor exchanger 321 for air conditioning and a low-temperature refrigerant 402b is supplied to the electric drive unit 200, an expansion valve 502b for the electric drive unit 200 is additionally required in addition to an expansion valve 502a for air conditioning. Further, in addition to the pipe 503a for air conditioning, the branch pipe 503b for the electric drive unit 200 is additionally required. Therefore, even if the number of heat exchangers can be reduced, in addition to causing an increase in the number of additional parts and increased costs, there are many problems such as an increase in the laying surface area of the additional parts and a decrease in the degree of freedom of the layout, as well as a weight reduction effect not being obtained.

In order to solve such a problem, according to the present embodiment, a configuration was devised that simultaneously establishes an air conditioning system and a heat cycle system of an electric drive unit without increasing the number of parts. The most significant feature of the present embodiment is that, as illustrated in FIG. 1A, a pipe 503 for circulating a refrigerant 401 for air conditioning constitutes a single circulation path, and an air conditioning system and a cooling system of an electric drive unit are arranged in the single circulation path.

Here, a configuration in which the air conditioning system and the cooling system for the electric drive unit are disposed in the single circulation path signifies a configuration in which the compressor 100, the expansion valve 502, the outdoor heat exchanger 311, the indoor heat exchanger 321, and the electric drive unit 200 are arranged in one circulation path through which the same refrigerant flows. In this case, the electric drive unit 200 may be constituted by a plurality of electric drive units as per an embodiment described below, and each electric drive unit may be arranged in refrigerant circulation paths which are branched in parallel. Also in this case, when the electric drive units arranged in the refrigerant circulation paths branched in parallel are regarded as one electric drive unit group, the compressor 100, the expansion valve 502, the outdoor heat exchanger 311, the indoor heat exchanger 321, and the electric drive unit group are arranged in one circulation path through which the same refrigerant flows.

Specifically, the refrigerant 401 heated to a high temperature by the compressor 100 is dissipated by the outdoor heat exchanger 311, is changed to a low-temperature refrigerant 402 by the expansion valve 502, and then absorbs heat from the indoor heat exchanger 321 and the electric drive unit 200. That is, the refrigerant 402 supplies cooling energy to the indoor space 320 and cools the electric drive unit 200. At such time, the operation is performed such that the relationship among the calorific value Pd of the electric drive unit 200, the heat exchange capacity Pi of the indoor heat exchanger 321, and the heat exchange capacity Pe of the outdoor heat exchanger 311 is as follows.

$$Pd + Pi \leq Pe \quad (1)$$

Here, in the conventional system of FIG. 1B, the heat exchange capacity Pe1 of the outdoor heat exchanger 311a is set in accordance with the maximum value of the cooling energy, and the heat exchange capacity Pe2 of the outdoor heat exchanger 311b is set in accordance with the maximum output of the electric drive unit 200.

In the present embodiment, because the electric drive unit 200 is cooled by the refrigerant 402 for air conditioning, the electric drive unit 200 can be cooled at a temperature lower than that of the refrigerant 402b of the conventional system illustrated in FIG. 1B. That is, because the actual operation temperature can be reduced with respect to an operation upper limit temperature of the electric drive unit 200, the operation can be performed at or below the operation upper limit temperature even if the cooling capacity of the electric drive unit 200 is reduced, and as a result, the heat exchange capacity of the outdoor heat exchanger 311 can be reduced. Therefore, because the heat exchange capacity Pe of the outdoor heat exchanger 311 can be reduced relative to the total heat exchange capacity Pe1 + Pe2 of the outdoor heat exchangers 311a and 311b in a conventional system, the size and weight of the outdoor heat exchanger 311 can also be reduced. Furthermore, because the cooling pump 201, the flow regulating valve 202, the dedicated expansion valve 502b, the dedicated pipe 503b, and the like for the electric drive unit 200 are unnecessary, there is no increase in the cost of additional parts, and there is no increase in weight. In the prior art, the system cost and the weight have been increased based on the premise that the heat cycle for air conditioning and the cooling cycle of the drive unit should be controlled independently so as not to limit the user requirement for drivability (the driving performance of the vehicle). In contrast, in the present invention, by devising the above-described configuration, it is possible to meet various user requirements without causing an increase in system cost and weight.

In addition, in the present embodiment, attention is paid to the fact that a scenario in which Pe1 and Pe2 are simultaneously operated at the maximum value is extremely rare, and it is considered that the user benefits afforded by such a scenario is not very great in comparison with the high cost system illustrated in FIGS. 1B and 1C and the costs such as fuel consumption degradation due to the weight increase. That is, the present inventors considered that the size and weight of the outdoor heat exchanger should be further reduced based on the idea that reducing the system costs of EVs, which are rapidly becoming widespread, and reducing the total weight of the drive heat system to improve the power cost yield true user benefits. Specifically, the heat exchange capacity Pe of the outdoor heat exchanger 311 of the present invention is set to a value larger than the maximum calorific value Pd of the electric drive unit 200, and is set to a significantly reduced capacity relative to the total heat exchange capacity Pe1 + Pe2 of a conventional system. When the electric drive unit 200 is operated at high output and the calorific value Pd increases, the indoor fan 322 is controlled such that the heat exchange capacity Pi for supplying cooling energy becomes relatively small, and an air volume 420 flowing through the indoor heat exchanger 321 is reduced. On the other hand, when the electric drive unit 200 is operated at a low output and calorific value Pd decreases, the indoor fan 322 is controlled to increase the heat exchange capacity Pi, and the air volume 420 flowing through the indoor heat exchanger 321 is increased to supply more cooling energy.

At the start of midsummer operation, it is assumed that the cooling energy in the vehicle is maximized in the idling state. In this case, the electric drive unit 200 is not operating and the calorific value Pd is zero, and hence it is possible to supply the same cooling energy as in conventional usage. In addition, in a case where the electric drive unit 200 is continuously operated for a long time during long distance travel in midsummer, cooling of the electric drive unit 200 (calorific value Pd) is mainly performed; however, cooling energy (the heat exchange capacity Pi) for keeping the indoor temperature constant may be smaller than the maximum heat exchange capacity Pi, max of the indoor heat exchanger 321. Therefore, because the maximum heat exchange capacity Pe, max of the outdoor heat exchanger 311 is the sum of Pd and Pi, the maximum heat exchange capacity Pe, max is larger than Pd, but need not be so large.

In the above-described operation, the cooling energy is incidentally adjusted mainly by the cooling of the electric drive unit 200, but in contrast, the cooling of the electric drive unit 200 can also be incidentally adjusted mainly by the cooling energy. That is, in a case where it is desired to increase the cooling energy, the indoor fan 322 is controlled so as to increase the heat exchange capacity Pi, and the output is limited so as to increase the air volume 420 flowing through the indoor heat exchanger 321 and reduce the calorific value Pd of the electric drive unit 200. Due to such an operation, the size of the outdoor heat exchanger can be significantly reduced versus a conventional case. As described above, the heat management system of the vehicle determines whether to prioritize drivability (the vehicle driving performance) by focusing mainly on cooling the electric drive unit 200 or to focus on cooling energy, and notifies the user of the determination result via a display device or the like. From the viewpoint of prioritizing safety of the vehicle during vehicle travel, basically, drivability (vehicle driving performance) is prioritized by focusing mainly on cooling of the electric drive unit 200, whereas, in a case where the indoor temperature is remarkably high, drivability is temporarily restricted by focusing mainly on cooling energy. However, a scenario where the main focus is on cooling energy is limited to when the vehicle is parked under the hot sun and is then restarted, and the indoor temperature can be reduced even when a vehicle window is opened. Therefore, it can be said that the proportion of time occupied by this operational scenario is extremely small, and the effect in reducing user benefits is extremely small.

Note that the refrigerant 402 circulates in the outer periphery of the housing of the electric drive unit 200 and/or inside the housing. The flow path of the refrigerant 402 may be provided in the same space as the stator or the rotor of the electric motor (for example, inside the housing), or a partition wall (for example, a housing constituent member) may be provided in the storage space of the stator or the rotor, and then a flow path filled with the refrigerant 402 may be provided separately (for example, in the outer periphery of the housing). In the latter case, the storage space of the stator or the rotor of the electric motor may be filled with air or may be filled with a cooling oil different from the refrigerant 402. In a case where the storage space is filled with the cooling oil, the storage space may be fully filled, or filling may be such that a portion of the stator or the rotor is immersed. In a case where a portion of the stator or the rotor is immersed, by providing a configuration in which the cooling oil is scraped off to a portion of the rotor, the cooling oil can be stirred in the storage space by utilizing the rotational operation of the rotor. Therefore, the heat dissipation of the electric motor is further improved, and the lubricating action of the bearing and the oil-tight sealing material can be obtained. Similarly in the case of electric components, the flow path of the refrigerant 402 may be provided in the same space as a heat-generating part such as a power semiconductor, or a flow path filled with the refrigerant 402 may be provided separately after the partition wall is provided in the storage space of the power semiconductor.

The difference between the present embodiment and the prior art has been described above. FIGS. 1A to 1C illustrate the air conditioning operation mode as being limited to a case where cooling is performed, but the present invention is also applicable to an operation mode other than cooling, and details thereof will be described with reference to FIGS. 2A to 2D.

FIG. 2A is an explanatory view of the drive heat cycle system 400 according to the first embodiment of the present invention and in which a heating operation is performed. FIG. 2B is an explanatory view of the drive heat cycle system 400 according to the first embodiment of the present invention and in which a cooling operation is performed. FIG. 2C is a diagram illustrating an operation pattern of the drive heat cycle system 400 according to the first embodiment of the present invention. FIG. 2D is a diagram illustrating a control sequence of the drive heat cycle system 400 according to the first embodiment of the present invention.

Hereinafter, the configuration of the drive heat cycle system 400 according to the present embodiment will be described in more detail with reference to FIG. 2A. The drive heat cycle system 400 includes the compressor 100, an accumulator 501, the expansion valve 502, an electric motor 210 including a cooling unit 211, an electrical component (inverter) 220 including a cooling unit 221, an electric drive unit 200 including the electric motor 210 and the electrical component 220, the refrigerant 401 compressed by the compressor 100, and the indoor heat exchanger 321 and the outdoor heat exchanger 311 that perform heat exchange of the refrigerant. The drive heat cycle system includes a single circulation path through which the refrigerant is circulated, and has a four-way valve 102 which enables a connection destination of a refrigerant discharge unit of the compressor 100 to be switched to the indoor heat exchanger 321 or the outdoor heat exchanger 311. The cooling units 211 and 221 of the electric drive unit 200 are arranged upstream of the accumulator 501 in the flow of the refrigerant.

FIG. 2A illustrates a configuration during a heating operation. When the four-way valve 102 is set to a state A (first state), a pipe connected from the compressor 100 to the four-way valve 102 and a pipe connected from the four-way valve 102 to the indoor heat exchanger 321 are connected to each other. Similarly, a pipe connected from the outdoor heat exchanger 311 to the four-way valve 102 and a pipe connected from the four-way valve 102 to the electric drive unit 200 are connected to each other. Due to such a configuration, the refrigerant 401 heated to a high temperature by the compressor 100 is dissipated by the indoor heat exchanger 321, is changed to the low-temperature refrigerant 402 by the expansion valve 502, and then absorbs heat from the outdoor heat exchanger 311 and the electric drive unit 200. That is, the refrigerant 401 supplies heating energy indoors via the indoor heat exchanger 321 and cools the electric drive unit 200. At such time, operation is performed such that the relationship between the heat exchange capacity Pi of the indoor heat exchanger 321, the calorific value Pd of the electric drive unit 200, and the heat exchange capacity Pe of the outdoor heat exchanger 311 is as follows.

$$Pe + Pd \leq Pi \quad (2)$$

In this operation, the heat cycle system 400 is established when the heat absorption process of the refrigerant 402 is performed by the electric drive unit 200, and hence the heat absorption process by the outdoor exchanger 311 is not necessarily required. Therefore, if the heat exchange capacity Pe of the outdoor heat exchanger 311 is set to zero by stopping the outdoor fan 312 and setting an air volume 410 flowing through the outdoor heat exchanger 311 to zero, the maximum cooling capacity (upper limit of the calorific value Pd) of the electric drive unit 200 can be raised to be equal to the heat exchange capacity Pi of the indoor heat exchanger 321, as is clear from Formula (2). On the other hand, in a case where it is desired to reduce the heating energy supplied indoors, it is necessary to control the indoor fan 322 so as to reduce the heat exchange capacity Pi of the indoor heat exchanger 321 and reduce the air volume 420 flowing through the indoor heat exchanger 321. At such time, because the maximum cooling capacity (upper limit of the calorific value Pd) of the electric drive unit 200 is limited to be equal to the heat exchange capacity Pi, it is necessary to limit the output of the electric drive unit 200. The present invention is also capable of providing this solution, and specific means is described below using FIG. 2(c).

Note that an arrow filled with dots such as the air volume 410 represents heat absorption, and an arrow filled with oblique lines such as the air volume 420 represents heat dissipation. The same applies hereinbelow.

Further, FIG. 2B illustrates the configuration during the cooling operation. When the four-way valve 102 is set to a state B (second state), the pipe connected from the compressor 100 to the four-way valve 102 and the pipe connected from the four-way valve 102 to the outdoor heat exchanger 311 are connected to each other. Similarly, a pipe connected from the indoor heat exchanger 321 to the four-way valve 102 and a pipe connected from the four-way valve 102 to the electric drive unit 200 are connected to each other. Due to such a configuration, the refrigerant 401 heated to a high temperature by the compressor 100 is dissipated by the outdoor heat exchanger 311, is changed to low-temperature refrigerant 402 by the expansion valve 502, and then absorbs heat from the indoor heat exchanger 321 and the electric drive unit 200. That is, the refrigerant 402 supplies cooling energy indoors via the indoor heat exchanger 321 and cools the electric drive unit 200. FIG. 1A described above illustrates the above configuration in a simplified manner, and the operation of FIG. 2B overlaps with the description of FIG. 1A, and thus is omitted here.

FIG. 2C summarizes an operation method of the drive heat cycle system 400 according to the present embodiment. In FIG. 2C, a case where the temperature of electric drive unit 200 is lower than 10°C is referred to as "low", a case where the temperature is equal to the outside air temperature (10°C or higher) is referred to as "medium", and a case where the temperature is higher than the outside air temperature (10°C or higher) is referred to as "high", and the relationships between the states of the four-way valve 102 and the actions effected by the refrigerant in all the six operation modes are illustrated using three operation modes of the air conditioner, namely, heating, cooling, and stoppage. The reference signs A (first state) and B (second state) representing the states of the four-way valve 102 have the same definitions as the reference signs A and B illustrated in the vicinity of the four-way valve 102 in FIGS. 2A and 2B. In addition, the heat dissipation (heating) action effected by the refrigerant is indicated by •, and the heat absorption (cooling) action is indicated by o. #1 to #3 are cases where the temperature of the electric drive unit 200 is "low" or "medium", and a case where the electric drive unit 200 is not operating is assumed. #4 to #6 are cases where the temperature of the electric drive unit 200 is "high", and a case where the electric drive unit 200 is in an operating state or a post-operation state is assumed. Which of #1 to #3 and #4 to #6 the temperature of the electric drive unit 200 corresponds to is detected by a temperature sensor provided to the electric drive unit 200 and an outside air temperature sensor provided to the vehicle. Note that, in a cold district, the electric drive unit 200 may be "low" even while in an operating state or a post-operation state, but in this case, it can be determined that there is no need to actively cool the electric drive unit 200, and thus there is no problem in operating the electric drive unit in any of #1 to #3. Although 10°C is defined as the boundary value of the temperature of electric drive unit 200, this numerical value is not necessarily set to 10°C, and may be set to any temperature in the vicinity of 10°C as long as heating, cooling, and cooling of the electric drive unit 200 can be realized in a well-balanced manner. Hereinafter, the specific operation methods of #1 to #6 in FIG. 2C will be described in detail.

First, #1 to #3 indicate cases where the temperature of electric drive unit 200 is detected as "low" or "medium".

Among the foregoing cases, #1 indicates a case where the air conditioner operation mode is set to heating, and the four-way valve 102 is set to state A (see FIG. 2A) at such time. While dissipating the heat amount of Pi via the indoor heat exchanger 321, the refrigerant respectively absorbs the heat amount of Pe via the outdoor heat exchanger 311 and the heat amount of Pd via the cooling units 211 and 221 of the electric drive unit 200. However, the temperature of the electric drive unit 200 is "low" or "medium" and hence sufficiently low, and the heat amount Pd that can be absorbed by the electric drive unit is small. Therefore, the heat cycle system 400 is established mainly by absorbing the heat amount Pe. This operation is similar to the normal heating operation of the air conditioner. On the other hand, in a conventional air conditioner, in a case where the outside air temperature is below freezing point, the heat amount Pe that can be absorbed by the outdoor heat exchanger 311 becomes small, and thus there is a problem that sufficient heating energy cannot be supplied. The present embodiment is also capable of solving such a problem. Specifically, by applying a current pattern (hereinafter the torque zero current) such that the electric drive unit 200 does not generate a drive force, an energization loss is generated in the electric motor 210 and the electrical component 220, and the calorific value Pd corresponding to the loss is absorbed by the refrigerant. In this operation, although power is consumed to generate energization loss, heating energy equal to or more than the power consumption can be supplied by the heat pump action, and hence the power consumption of the PTC heater is significantly reduced.

Note that the drive heat cycle system 400 according to the present embodiment includes an air conditioning heat cycle system, and is sometimes referred to simply as the "heat cycle system" in the description.

Next, the operation of #2 is a case where the air conditioner operation mode is set to cooling, and at such time, the four-way valve 102 is set to state B (see FIG. 2B). While dissipating the heat amount of Pe via the outdoor heat exchanger 311, the refrigerant respectively absorbs the heat amount of Pi via the indoor heat exchanger 321 and the heat amount of Pd via the cooling units 211 and 221 of the electric drive unit 200. However, the temperature of the electric drive unit 200 is "low" or "medium" and hence sufficiently low, and the heat amount Pd that can be absorbed by the electric drive unit is small. Therefore, the heat cycle system 400 is established mainly by absorbing the heat amount Pi. This operation is similar to the normal cooling operation of the air conditioner. On the other hand, as illustrated in FIG. 2B, low-temperature refrigerant 402 always passes through the cooling units 211 and 221 of the electric drive unit 200 after passing through the indoor heat exchanger 321. Therefore, if the non-operating time of the electric drive unit 200 is long, the electric drive unit 200 can be cooled to a temperature equal to that of the refrigerant 402. In this case, because the initial temperature of the electric drive unit 200 can be kept low, the post-operation temperature becomes lower than usual, and the electric resistance value of the electric motor 210 can be reduced. In addition, because the magnetic flux amount of the permanent magnet increases, the current value can also be reduced. As a result, the energization loss can be reduced, and hence the power consumption when the electric drive unit 200 is being driven can be reduced.

Next, the operation of #3 is a case where the air conditioner operation mode is set to stoppage, and at such time, the four-way valve 102 is set to state B (see FIG. 2B). The operation is similar to the operation of #2 except that the indoor fan 322 is stopped. However, the operation of the compressor 100 and the outdoor fan 312 may be stopped.

Further, #4 to #6 indicate cases where the temperature of the electric drive unit 200 is detected as "high".

Among the foregoing cases, #4 indicates a case where the air conditioner operation mode is set to heating, and the four-way valve 102 is set to state A (see FIG. 2A) at such time. While dissipating the heat amount of Pi via the indoor heat exchanger 321, the refrigerant absorbs the heat amount of Pd via the cooling units 211 and 221 of the electric drive unit 200. In this operation, the process in which the heat amount of Pe is absorbed by the outdoor heat exchanger 311 becomes unnecessary. That is, by stopping the outdoor fan 312, the heat amount Pe absorbed via the outdoor heat exchanger 311 is set to zero. As a result, the maximum cooling capacity of the electric drive unit 200 (the upper limit of calorific value Pd) can be increased to be equal to the heat exchange capacity Pi of the indoor heat exchanger 321. On the other hand, in a case where it is desired to reduce the heating energy supplied indoors, the heat amount Pi that can be dissipated via the indoor heat exchanger 321 is reduced, and hence the heat amount Pd that can be absorbed by the electric drive unit 200 is also reduced, and the output of the electric drive unit 200 needs to be limited. In order to solve such a problem, according to the present embodiment, a method was devised for promptly switching to the operation of #6 in a case where it is necessary to reduce the heating energy in the operation of #4.

#6 is a case where the air conditioner operation mode is set to stoppage, and at such time, the four-way valve 102 is set to state B (see FIG. 2B). The indoor fan 322 stops. The compressor 100 and the outdoor fan 312 operate, and the refrigerant dissipates the heat amount of Pe via the outdoor heat exchanger 311, and absorbs the heat amount of Pd via the cooling units 211 and 221 of the electric drive unit 200 after passing through the indoor heat exchanger 321 (the indoor fan 322 does not absorb heat because same has stopped). In this operation, the heat amount Pd that can be absorbed by the electric drive unit 200 can be raised to be equal to the heat exchange capacity Pe of the outdoor heat exchanger 311, and hence it is not necessary to limit the output of the electric drive unit 200.

On the other hand, when the operation of #6 is continued, a state in which heating energy is not supplied continues, and thus the indoor temperature decreases. Therefore, when the indoor temperature falls below an arbitrary threshold value 1, which is based on the air conditioner set temperature (for example, a temperature 1°C lower than the air conditioner set temperature), the operation is promptly switched to #4. Further, when the operation of #4 is continued, a state in which sufficient heating energy is supplied continues, and thus the indoor temperature rises. Therefore, when the indoor temperature exceeds an arbitrary threshold value 2, which is based on the air conditioner set temperature (for example, a temperature 1°C higher than the air conditioner set temperature), the operation is promptly switched to the #6 operation (hereinafter referred to as operation pattern switching control). As a result, the indoor temperature can be maintained around the air conditioner set temperature, and at the same time, the heat amount Pd that can be absorbed by the electric drive unit 200 can be increased to be equal to the heat exchange capacity Pi of the indoor heat exchanger 321 or the heat exchange capacity Pe of the outdoor heat exchanger 311. Therefore, in addition to enabling sufficient cooling of the electric drive unit 200 even during the operation of this unit, there is no need to limit the output.

The operation of the remaining #5 is a case where the air conditioner operation mode is set to cooling and at such time, the four-way valve 102 is set to state B (see FIG. 2B). The operation is similar to the operation of #6 except that the indoor fan 322 is turned ON. While dissipating the heat amount Pe via the outdoor heat exchanger 311, the refrigerant respectively absorbs the heat amount Pi via the indoor heat exchanger 321 and the heat amount Pd of the electric drive unit 200. In this operation, the more the cooling energy (the heat amount Pi) is reduced, the more the heat amount Pd that can be absorbed by the electric drive unit 200 can be increased. That is, because the cooling capacity of the electric drive unit 200 can be improved, the temperature during the operation of the electric drive unit 200 can be kept low, and the energization loss and the power consumption can be greatly reduced.

The operation pattern of the drive heat cycle system 400 according to the present embodiment described above is controlled by a drive heat cycle system controller 600. As illustrated in FIG. 2D, the control sequence of the drive heat cycle system controller 600 includes steps S0 to S3. Note that #1 to #6 in FIG. 2D have the same definitions as those of the operation patterns #1 to #6 illustrated in FIG. 2C.

First, in step S0, the outside air temperature is detected by an outside air temperature sensor 710 provided to the vehicle. In addition, the temperature of the electric drive unit 200 is detected by a temperature sensor 720 provided to the electric drive unit. An indoor temperature is detected by a temperature sensor 730 provided in the indoor space 320. An air conditioner set temperature set using an operation panel 800 is detected. Next, an electric drive unit temperature determination unit 601 in step S1 uses the temperature detected in step S0 to determine whether the temperature of the electric drive unit 200 corresponds to any of "low", "medium", and "high". Next, the air conditioner operation mode determination unit 602 in step S2 uses the temperature detected in step S0 to determine whether the air conditioner operation mode corresponds to any of cooling, heating, and stoppage. In a case where the air conditioner is OFF, it is determined that the air conditioner is stopped. When the air conditioner is turned on or the air conditioner set temperature is changed, a determination calculation is executed in step S2 each time, and in a case where the indoor temperature is lower than the air conditioner set temperature, it is determined that the air conditioner operation mode is heating, and in a case where the indoor temperature is equal to or higher than the air conditioner set temperature, it is determined that the air conditioner operation mode is cooling. Next, in step S3, the four-way valve 102, the indoor fan 322, the outdoor fan 312, and a torque zero current are controlled by a four-way valve controller 603, an indoor fan controller 604, an outdoor fan controller 605, and a torque zero current controller 606. Specifically, the state of the four-way valve 102 is set to A or B by using the determination results in steps S1 and S2. Similarly, the indoor fan 322 and the outdoor fan 312 are set to ON or OFF, respectively. In addition, the torque zero current controller 606 also uses the temperature of the outside air temperature sensor 710 to determine whether to apply a torque zero current to the electric drive unit 200.

Which of the operation patterns #1 to #6 is pertinent is uniquely derived from the combination of the determination results in step S1 and step S2, and, for a derived operation pattern, the states of the four-way valve 102, the indoor fan 322, the outdoor fan 312, and the torque zero current to be controlled are uniquely determined. In a case where the operation pattern #1 is derived, a torque zero current is applied in a case where the outside air temperature falls below a preset threshold value (for example, 0°C) . In a case where the operation pattern #4 is derived, switching to the operation pattern #6 is repeated by the operation pattern switching control described above.

As described above, with the configuration according to the present embodiment, it is possible to provide an air conditioning system and a cooling system which enable power consumption to be reduced and which are low cost, and a mobile vehicle in which the air conditioning system and the cooling system are mounted.

FIG. 3 is an explanatory view of another embodiment of the drive heat cycle system 400 according to the first embodiment of the present invention.

The drive heat cycle system 400 of FIG. 3 is different from that of FIG. 2A in that the cooling unit 211 of the electric motor 210 and the cooling unit 221 of the electrical component 220 are arranged in parallel. Due to such a configuration, because the temperature of the refrigerant passing through the electric motor 210 can be reduced in comparison with FIG. 2, the temperature during the operation of the electric drive unit 200 can be kept low, and the energization loss and the power consumption can be greatly reduced. In FIG. 3, there is one inlet for the flow path provided in the housing of the electric drive unit 200, and the flow paths of the electric motor 210 and the flow path of the electrical component 220 are branched inside the housing. However, for the purpose of simplifying the refrigerant flow path in the housing, inlets for the respective flow paths of the electric motor 210 and the electrical component 220 may be provided in the housing.

[Second embodiment]

Hereinafter, a second embodiment of the present invention will be described with reference to FIGS. 4A to 4G.

FIG. 4A is an explanatory view of a drive heat cycle system 400 according to the second embodiment of the present invention, and is a diagram illustrating a case where an air conditioner is subjected to a heating operation and a battery 230 is heated.

The drive heat cycle system in FIG. 4A is different from that in FIG. 2A in that a battery 230 and a change-over valve 103 are added to the single circulation path for circulating the refrigerant. According to the present embodiment, in a simple heat cycle system including a single circulation path, the electric drive unit 200 can be appropriately cooled, and the battery 230 can also be appropriately heated or cooled. The principles underlying same will be described below.

FIG. 4A illustrates a case where the air conditioner is operated to perform heating in winter and the battery is heated. By setting the change-over valve 103 to state B (fourth state), the pipe connected from the four-way valve 102 to the change-over valve 103 and the pipe connected from the change-over valve 103 to the battery 230 are connected to each other. Similarly, a pipe connected from the indoor heat exchanger 321 to the change-over valve 103 and a pipe connected from the change-over valve 103 to the battery 230 are connected to each other. In addition, by placing the four-way valve 102 in state A (first state), the refrigerant 401 the temperature of which has been raised by the compressor 100 is dissipated by the battery 230 and the indoor heat exchanger 321, is changed to low-temperature refrigerant 402 by the expansion valve 502, and then absorbs heat from the outdoor heat exchanger 311 and the electric drive unit 200. That is, while heating the battery 230, the refrigerant 401 supplies heating energy indoors via the indoor heat exchanger 321 and cools the electric drive unit 200. At such time, the relationship between the heat amount Pb for heating the battery, the heat exchange capacity Pi of the indoor heat exchanger 321, the calorific value Pd of the electric drive unit 200, and the heat exchange capacity Pe of the outdoor heat exchanger 311 is as follows.

$$Pe + Pd \leq Pi + Pb \quad (3)$$

However, when a large amount of high-temperature refrigerant 401 is supplied from the compressor 100 to the battery 230, a significant temperature difference occurs between the inside and the outside of the constituent members of the battery 230, and the life of the battery 230 decreases. Therefore, when the battery 230 is heated, the supply amount of the refrigerant 401 to the battery 230 is appropriately controlled by driving the compressor 100 with a light load. In winter, the outside air temperature is low, and the temperature of the refrigerant 401 discharged from the compressor 100 is also low, and hence, in combination with the above-described light load drive, heating can be performed without generating a significant a temperature difference in the constituent members of the battery 230, and a decrease in life can be avoided. In a case where the outside air temperature is below freezing point, the heat amount Pe that can be absorbed by the outdoor heat exchanger 311 is small, but when the EV is traveling, the calorific value Pd of the electric drive unit 200 can be absorbed, and hence the heat cycle system is established without any problem. On the other hand, when the EV is stopped and the electric drive unit 200 is not operating, sometimes sufficient heating energy cannot be supplied to the battery 230. In this case, by applying a current pattern (a torque zero current) such that the electric drive unit 200 does not generate a drive force, an energization loss is generated in the electric motor 210 and the electrical component 220, and the calorific value Pd corresponding to the loss is absorbed by the refrigerant. It is accordingly possible to supply appropriate heating energy to the battery 230 even in a sub-freezing environment. Note that the power corresponding to the above-described energization loss and the power for driving the compressor 100 are supplied from the battery 230, but because the power is extremely small in comparison with the power supplied to the electric drive unit 200 during EV travel, the load for the battery 230 is also small, and this operation does not cause a significant reduction in lifespan.

FIG. 4B is an explanatory view of the drive heat cycle system 400 according to the second embodiment of the present invention, and is a diagram illustrating a case where refrigerant is not circulated in the battery 230 while the air conditioner is operated to perform heating.

FIG. 4B also corresponds to a state in which heating is stopped after the battery 230 is sufficiently heated in FIG. 4A. A difference from FIG. 4A is that a pipe connected from the four-way valve 102 to the change-over valve 103 and a pipe connected from the indoor heat exchanger 321 to the change-over valve 103 are connected to each other by setting the change-over valve 103 to state A (third state). In addition, two pipes connected from the change-over valve 103 to the battery 230 are connected to each other. As a result, the refrigerant does not circulate through the battery 230. In addition, by placing the four-way valve 102 in state A (first state), the refrigerant 401 the temperature of which has been raised by the compressor 100 is dissipated by the indoor heat exchanger 321, is changed into low-temperature refrigerant 402 by the expansion valve 502, and then absorbs heat from the outdoor heat exchanger 311 and the electric drive unit 200. That is, the refrigerant 401 supplies heating energy indoors via the indoor heat exchanger 321 and cools the electric drive unit 200. The heat exchange balance at such time is as illustrated in Formula (3), but because the heating of the battery 230 is stopped, Pb on the right side becomes zero.

In this operation, the heat cycle system 400 is established when the heat absorption process of the refrigerant 402 is performed by the electric drive unit 200, and hence the heat absorption process by the outdoor exchanger 311 is not necessarily required. Therefore, if the heat exchange capacity Pe of the outdoor heat exchanger 311 is set to zero by stopping the outdoor fan 312 and setting an air volume 410 flowing through the outdoor heat exchanger 311 to zero, the maximum cooling capacity (upper limit of the calorific value Pd) of the electric drive unit 200 can be raised to be equal to the heat exchange capacity Pi of the indoor heat exchanger 321, as is clear from Formula (3). On the other hand, in a case where it is desired to reduce the heating energy supplied indoors, it is necessary to control the indoor fan 322 so as to reduce the heat exchange capacity Pi of the indoor heat exchanger 321 and reduce the air volume 420 flowing through the indoor heat exchanger 321. At such time, because the maximum cooling capacity (upper limit of the calorific value Pd) of the electric drive unit 200 is limited to be equal to the heat exchange capacity Pi, it is necessary to limit the output of the electric drive unit 200.

In order to avoid such a situation, in a case where it is desired to reduce the heating energy supplied indoors, the air conditioner operation mode is stopped as illustrated in FIG. 4C.

FIG. 4C is an explanatory view of a drive heat cycle system 400 according to the second embodiment of the present invention, and is a diagram illustrating a case where the air conditioner heating operation is stopped and refrigerant is not circulated in the battery 230.

At such time, the four-way valve 102 is set to state B (second state), and the change-over valve 103 is set to state A (third state). The indoor fan 322 stops. The relationship between the calorific value Pd of the electric drive unit 200 and the heat exchange capacity Pe of the outdoor heat exchanger 311 is as follows.

$$Pd \leq Pe \quad (4)$$

In this operation, because the change-over valve 103 is set to state A, the refrigerant 402 does not pass through the battery 230. On the other hand, when the compressor 100 and the outdoor fan 312 are operated, the refrigerant dissipates the heat amount of Pe via the outdoor heat exchanger 311, and then absorbs the heat amount of Pd via the cooling units 211 and 221 of the electric drive unit 200. Therefore, the heat amount Pd that can be absorbed by the electric drive unit 200 can be raised to be equal to the heat exchange capacity Pe of the outdoor heat exchanger 311 as can be seen from Formula (4), and hence it is not necessary to limit the output of the electric drive unit 200. On the other hand, a state in which heating energy is not supplied continues, and thus the indoor temperature decreases. Therefore, by repeating the switching between FIGS. 4B and 4G using the operation pattern switching control described above, the indoor temperature can be maintained near the air conditioner set temperature.

Further, in a case where the battery needs to be cooled, the change-over valve 103 is switched to state B as illustrated in FIG. 4D. FIG. 4D is an explanatory view of the drive heat cycle system 400 according to the second embodiment of the present invention, and is a diagram illustrating a case where the air conditioner heating operation is stopped and refrigerant is circulated in the battery 230.

In this case, the four-way valve 102 is set to state B (second state) and the change-over valve 103 is set to state B (fourth state), and the indoor fan 322 is stopped. While the compressor 100 and the outdoor fan 312 are operating, and the refrigerant dissipates the heat amount of Pe via the outdoor heat exchanger 311, the refrigerant passes through the indoor heat exchanger 321 (the indoor fan 322 does not absorb heat because same has stopped) and then absorbs the heat amount of Pb in the battery 103 and absorbs the heat amount of Pd via the cooling units 211 and 221 of the electric drive unit 200. At such time, the following relational formula is established.

$$Pb + Pd \leq Pe \quad (5)$$

This operation is also applied when the battery 230 is rapidly charged. Note that, in a case where the battery 230 is rapidly charged, it is assumed that the electric drive unit 200 is not operating, and thus Pd in Formula (5) is zero. Therefore, as is clear from Formula (5), because the heat amount Pb that can be absorbed by the battery 230 can be raised to be equal to the heat exchange capacity Pe of the outdoor heat exchanger 311, it is possible to solve the problem that the charging time cannot be shortened due to the heat generation of the battery at the time of rapid charging. In addition, because the battery 230 is cooled by the air conditioning refrigerant 402, the battery 230 can be cooled at a lower temperature than conventionally. That is, because the actual operation temperature can be reduced relative to the operation upper limit temperature of the battery 230, high temperature operation of the battery 230 can be avoided, and a decrease in life can be avoided. Furthermore, the low-temperature refrigerant 402, which has passed through the battery 230, always passes through the cooling units 211 and 221 of the electric drive unit 200, and hence, if the non-operating time of the electric drive unit 200 is long, the electric drive unit 200 can be cooled to a temperature equal to that of the refrigerant 402. Therefore, because the initial temperature of the electric drive unit 200 can be kept low, the post-operation temperature becomes lower than usual, and the electric resistance value of the electric motor 210 can be reduced. In addition, because the magnetic flux amount of the permanent magnet increases, the current value can also be reduced. As a result, the energization loss can be reduced, and hence the power consumption when the electric drive unit 200 is being driven can be reduced.

In a case where the air conditioner is operated to perform cooling, the indoor fan 322 is turned ON from the state of FIG. 4D, and thus enters the state of FIG. 4E. FIG. 4E is an explanatory view of the drive heat cycle system 400 according to the second embodiment of the present invention, and is a diagram illustrating a case where the air conditioner is operated to perform cooling and refrigerant is circulated in the battery 230.

In this case, the four-way valve 102 is set to state B (second state), and the change-over valve 103 is set to state B (fourth state), and hence the indoor fan 322 is driven.

At such time, the relationship between the heat exchange capacity Pe of the outdoor heat exchanger 311, the heat exchange capacity Pi of the indoor heat exchanger 321, a heat absorption amount Pb from the battery, and the calorific value Pd of the electric drive unit 200 is as follows.

$$Pi + Pb + Pd \leq Pe \quad (6)$$

In this operation, the more the cooling energy (the heat amount Pi) is reduced, the more the heat amount Pb that can be absorbed by the battery 230 and the heat amount Pd that can be absorbed by the electric drive unit 200 can be increased. That is, because the cooling capacity of the battery 230 can be improved, high temperature operation of the battery 230 can be avoided, and a decrease in life can be avoided. Furthermore, because the cooling capacity of the electric drive unit 200 can be improved, the temperature during the operation of the electric drive unit 200 can be kept low, and the energization loss and the power consumption can be greatly reduced.

It is indicated above that, in a simple heat cycle system that includes a single circulation path, the electric drive unit 200 can be appropriately cooled, and the battery 230 can also be appropriately heated or cooled. In the prior art, in order not to limit user demand for drivability, the refrigerant is circulated by providing separate pipes for each of the heat cycle system for air conditioning, the cooling system of the electric drive unit 200, and the heat cycle system of the battery 230. Therefore, in addition to causing an increase in the number of additional parts and increased costs, there are many problems such as an increase in the laying surface area of the additional parts and a decrease in the degree of freedom of the layout, as well as a weight increase and a reduced power cost. In the present invention, in addition to cooling the electric drive unit 200, the battery 230 can also be freely heated or cooled by means of a single circulation path through which the refrigerant 402 for air conditioning flows. It is thus possible to cool the battery 230 and the electric drive unit 200 at a lower temperature than conventionally. That is, because the actual operation temperature can be reduced relative to an operation upper limit temperature of the battery 230 and the electric drive unit 200, the operation can be performed at or below the operation upper limit temperature even if the cooling capacity of the battery 230 and the electric drive unit 200 is reduced, and as a result, the heat exchange capacity, the size, and the weight of the outdoor heat exchanger 311 can be reduced. It is thus possible to meet various user requirements without causing an increase in system cost and weight.

Next, a method for operating the drive heat cycle system 400 according to the second embodiment of the present invention will be described. FIG. 4F is a diagram illustrating an operation pattern of the drive heat cycle system 400 according to the second embodiment of the present invention.

The difference from FIG. 2C is that the temperature of the battery 203 and the state of the change-over valve 103 are added. Reference signs A and B representing states of the four-way valve 102 and the change-over valve 103 have the same definitions as reference signs A and B illustrated in the vicinity of the four-way valve 102 and the vicinity of the change-over valve 103 in FIGS. 4A to 4E. #1 to #3 are cases where the temperatures of the electric drive unit 200 and the battery 230 are both "low", and it is assumed that the vehicle is started in winter (the battery 230 needs to be heated). #4 to #6 are cases where the temperatures of the electric drive unit 200 and the battery 230 are both "medium", and it is assumed that the vehicle is started in a period other than winter (heating of the battery 230 is not necessary). #7 to 9 are cases where the temperature of the electric drive unit 200 is "low" or "medium" and the temperature of the battery 230 is "high", and are mainly assumed at the time of rapid charging. #10 to #12 are cases where the temperatures of the electric drive unit 200 and the battery 230 are both "high", and are mainly assumed at the time of vehicle travel. The temperatures of the electric drive unit 200 and the battery 230 are detected by temperature sensors respectively provided therein. Note that, because the operating temperature range of the battery is generally about 10 to 40°C, the boundary value between the "low" and "medium" temperatures is set to 10°C for the purpose of avoiding a decrease in the life of the battery. However, this numerical value is not necessarily set to 10°C, and may be set to any temperature in the vicinity of 10°C as long as the temperature is a temperature enabling a decrease in the life of the battery to be avoided. The specific operation methods of #1 to #12 in FIG. 4F will be described in detail hereinbelow.

First, #1 to #3 are cases where the temperatures of the electric drive unit 200 and the battery 230 are both detected as "low". At such time, the electric drive unit 200 is not operating, or even when operating, the temperature is in a "low" state, and thus the battery 230 is in a state requiring heating.

Among the foregoing cases, #1 indicates a case where the air conditioner operation mode is set to heating, and the four-way valve 102 is set to state A and the change-over valve 103 is set to state B (see FIG. 4A) at such time. While dissipating the heat amounts of Pb + Pi via the battery 230 and the indoor heat exchanger 321, the refrigerant respectively absorbs the heat amounts of Pe + Pd via the outdoor heat exchanger 311 and the electric drive unit 200. However, the temperature of the electric drive unit 200 is "low" and hence sufficiently low, and the heat amount Pd that can be absorbed by this unit is small. Therefore, the heat cycle system 400 is established mainly by absorbing the heat amount Pe. In a case where the outdoor air temperature is below freezing point, there is a problem that the heat amount Pe that can be absorbed by the outdoor heat exchanger 311 becomes small; however, in this case, an energization loss Pd is generated by applying a torque zero current, thereby securing the heat absorption amount required to establish the heat cycle. On the other hand, because the heating energy Pb to the battery 230 is suppressed, there is an advantage that heating can be performed without generating a significant temperature difference in the constituent members of the battery 230 from the viewpoint of preventing a decrease in the life of the battery.

Next, the operation of #2 is a case where the air conditioner operation mode is set to cooling. Although it is very rare that such an operation is performed in a state where the temperatures of the electric drive unit 200 and the battery 230 are both "low" (a state where the outside air temperature is low), the present invention is capable of handling such an operation. At such time, the four-way valve 102 is set to state B, the change-over valve 103 is set to state A, and the refrigerant does not circulate in the battery 230. While dissipating the heat amount of Pe via the outdoor heat exchanger 311, the refrigerant respectively absorbs the heat amounts of Pi + Pd via the indoor heat exchanger 321 and electric drive unit 200. However, the temperature of the electric drive unit 200 is "low" and hence sufficiently low, and the heat amount Pd that can be absorbed by this unit is small. Therefore, the heat cycle system 400 is established mainly by absorbing the heat amount Pi. In this operation, heating energy cannot be supplied to the battery 230. On the other hand, it is necessary to supply a small amount of power from the battery 230 in order to drive the compressor 100, and the battery 230 self-heats by means of this power supply, and hence the temperature gradually rises from the "low" state. Therefore, because the battery temperature can be raised so as to fall within an appropriate operation range without generating a significant temperature difference in the constituent members of the battery 230, it is possible to prevent a decrease in life without heating the battery.

Next, the operation of #3 is a case where the air conditioner operation mode is set to stoppage, and is the same as the operation of #1 except that the indoor fan 322 is stopped and the heat dissipation amount Pi is set to zero.

Next, #4 to #6 are cases where the temperatures of the electric drive unit 200 and the battery 230 are both detected as "medium". At such time, the electric drive unit 200 is in a non-operating state. In addition, the temperature of the battery 230 falls within an appropriate operating temperature range, and heating is unnecessary.

Among such cases, #4 indicates a case where the air conditioner operation mode is set to heating. At such time, the four-way valve 102 is set to state A, and the change-over valve 103 is set to state A (see FIG. 4B). The refrigerant does not circulate through the battery 230. While dissipating the heat amount of Pi via the indoor heat exchanger 321, the refrigerant respectively absorbs the heat amounts Pe + Pd via the outdoor heat exchanger 311 and the electric drive unit 200. However, the temperature of the electric drive unit 200 is "medium" and hence sufficiently low, and the heat amount Pd that can be absorbed by this unit is small. Therefore, the heat cycle system 400 is established mainly by absorbing the heat amount Pe.

Next, the operation of #5 is a case where the air conditioner operation mode is set to cooling. At such time, the four-way valve 102 is set to state B, and the change-over valve 103 is set to state B (see FIG. 4E). While dissipating the heat amount of Pe via the outdoor heat exchanger 311, the refrigerant respectively absorbs the heat amounts of Pi + Pb + Pd via the indoor heat exchanger 321, the battery 230, and the electric drive unit 200. However, the temperature of the electric drive unit 200 is "medium" and hence sufficiently low, and the heat amount Pd that can be absorbed by this unit is small. Therefore, the heat cycle system 400 is established mainly by absorbing the heat amount Pi. In this operation, it is necessary to supply a small amount of power from the battery 230 in order to drive the compressor 100, and the battery 230 self-heats by means of this power supply, but the calorific value Pb at that time can be absorbed (cooled) by the refrigerant 402. Furthermore, when the non-operating time of the electric drive unit 200 is long, the electric drive unit 200 can be cooled to a temperature equal to that of the refrigerant 402. In this case, because the initial temperature of the electric drive unit 200 can be kept low, the post-operation temperature becomes lower than usual, and the energization loss can be reduced, and hence the power consumption during the driving of the electric drive unit 200 can be reduced.

Next, the operation of #6 is a case where the air conditioner operation mode is set to stoppage, and is the same as the operation of #5 except that the indoor fan 322 is stopped to set the heat absorption amount Pi to zero.

Subsequently, in #7 to #9, the temperature of the electric drive unit 200 is detected as "low" or "medium", and the temperature of the battery 230 is detected as "high". At such time, the electric drive unit 200 is in a non-operating state. On the other hand, the temperature of the battery 230 rises due to charging or discharging, and the battery is in a state where cooling is necessary. A typical operation mode is assumed at the time of rapid charging.

Among such cases, the operation of #7 is the same as the operation of #4 except in a case where the air conditioner operation mode is set to heating and when the temperature of the battery 230 is "high". Because the battery 230 has a configuration in which the refrigerant does not circulate, the battery 230 cannot be cooled, and thus, without further treatment, a decrease in life results. In order to solve such a problem, in the present invention, a method was devised for appropriately switching the operation of #7 to the operation of #9.

The operation of #9 is a case where the air conditioner operation mode is set to stoppage, and is the same as the operation of #6 except that the heat absorption amount Pb in the battery 230 is large. In this operation, the heat amount Pb that can be absorbed by the battery 230 can be raised to be substantially equal to the heat exchange capacity Pe of the outdoor heat exchanger 311, and hence a decrease in the life of the battery 230 can be avoided.

On the other hand, when the operation of #9 is continued, a state in which heating energy is not supplied continues, and thus the indoor temperature decreases. Therefore, by repeating the switching to the operation pattern #7 using the operation pattern switching control described above, the indoor temperature can be maintained near the air conditioner set temperature, and at the same time, the heat amount Pb that can be absorbed by the battery 230 can be increased to be equal to the heat exchange capacity Pi of the indoor heat exchanger 321 or the heat exchange capacity Pe of the outdoor heat exchanger 311. Therefore, a decrease in the life of the battery 230 can be avoided.

Next, the operation of #8 is a case where the air conditioner operation mode is set to cooling, and is the same as the operation of #5 except that the calorific value Pb of the battery 230 is large.

Subsequently, in #10 to #12, the temperature of the electric drive unit 200 is detected as "high", and the temperature of battery 230 is detected as "high". At such time, the electric drive unit 200 is in an operating state or a post-operation state. On the other hand, the temperature of the battery 230 rises due to charging or discharging, and the battery is in a state where cooling is necessary. A typical operation mode is assumed at the time of travel or after travel, and at the time of charging after travel.

Among such cases, #10 indicates a case where the air conditioner operation mode is set to heating. At such time, the four-way valve 102 is set to state A, and the change-over valve 103 is set to state A (see FIG. 4B). The refrigerant dissipates the heat amount of Pi via the indoor heat exchanger 321 and absorbs the heat amount of Pd via the electric drive unit 200. In this operation, the process in which the heat amount of Pe is absorbed by the outdoor heat exchanger 311 becomes unnecessary. Therefore, by stopping the outdoor fan 312, the heat amount Pe absorbed via the outdoor heat exchanger 311 is set to zero. As a result, the maximum cooling capacity of the electric drive unit 200 (the upper limit of calorific value Pd) can be increased to be equal to the heat exchange capacity Pi of the indoor heat exchanger 321. On the other hand, in a case where it is desired to reduce the heating energy supplied indoors, the heat amount Pi that can be dissipated via the indoor heat exchanger 321 is reduced, and hence the heat amount Pd that can be absorbed by the electric drive unit 200 is also reduced, and the output of the electric drive unit 200 needs to be limited. In addition, because the refrigerant does not circulate in the battery 230, the battery 230 cannot be cooled, which brings about a decrease in life. In order to solve such a problem, according to the present embodiment, a method was devised for promptly switching to the operation of #12 in a case where it is necessary to reduce heating energy in the operation of #10 or in a case where it is necessary to cool the battery 230.

The operation of #12 is the same as the operation of #6 except that the air conditioner operation mode is set to stoppage and the heat absorption amounts Pb + Pd in the battery 230 and the electric drive unit 200 are large. With this operation, the heat amounts Pb + Pd that can be absorbed by the battery 230 and the electric drive unit 200 can be raised to be equal to the heat exchange capacity Pe of the outdoor heat exchanger 311, and hence it is not necessary to limit the output of the electric drive unit 200, and it is also possible to avoid a decrease in the life of the battery 230.

On the other hand, when the operation of #12 is continued, a state in which heating energy is not supplied continues, and thus the indoor temperature decreases. Therefore, by repeating the switching to the operation pattern #10 by using the operation pattern switching control described above, the indoor temperature can be maintained near the air conditioner set temperature, and at the same time, the heat amounts Pb + Pd that can be absorbed by the battery 230 and the electric drive unit 200 can be increased to be equal to the heat exchange capacity Pi of the indoor heat exchanger 321 or the heat exchange capacity Pe of the outdoor heat exchanger 311. Therefore, in addition to enabling sufficient cooling of the electric drive unit 200, there is no need to limit the output, and it is also possible to avoid a decrease in the life of the battery 230.

The remaining operation of #11 is a case where the air conditioner operation mode is set to cooling, and is the same as the operation of #5 except that the calorific values Pb and Pd of the battery 230 and the electric drive unit 200 are large.

The operation pattern of the drive heat cycle system 400 according to the present embodiment described above is controlled by a drive heat cycle system controller 600. FIG. 4G is a diagram illustrating a control sequence of the drive heat cycle system 400 according to the second embodiment of the present invention.

As illustrated in FIG. 4G, the control sequence of the drive heat cycle system controller 600 includes steps S0 to S4. Note that #1 to #12 in FIG. 4G have the same definitions as those of the operation patterns #1 to #12 illustrated in FIG. 4F.

First, in step S0, the outside air temperature is detected by an outside air temperature sensor 710 provided to the vehicle. In addition, the temperature of the electric drive unit 200 and the temperature of the battery 230 are respectively detected by temperature sensors 720, 740 provided to these units. An indoor temperature is detected by a temperature sensor 730 provided in the indoor space 320. An air conditioner set temperature is also detected. Next, an electric drive unit temperature determination unit 601 in step S1 uses the temperature detected in step S0 to determine whether the temperature of the electric drive unit 200 corresponds to any of "low", "medium", and "high". Next, the battery temperature determination unit 607 in step S2 uses the temperature detected in step S0 to determine whether the temperature of the battery 230 corresponds to "low", "medium", or "high". Next, the air conditioner operation mode determination unit 602 in step S3 uses the temperature detected in step S0 to determine whether the air conditioner operation mode corresponds to any of cooling, heating, and stoppage. In a case where the air conditioner is OFF, it is determined that the air conditioner is stopped. When the air conditioner is turned ON by the operation panel 800 or the air conditioner set temperature is changed, a determination calculation is executed each time, and in a case where the indoor temperature is lower than the air conditioner set temperature, heating is determined, and in a case where the indoor temperature is higher, cooling is determined. Next, in step S4, the four-way valve 102, the change-over valve 103, the indoor fan 322, the outdoor fan 312, and a torque zero current are controlled by a four-way valve controller 603, a change-over valve controller 608, an indoor fan controller 604, an outdoor fan controller 605, and a torque zero current controller 606. Specifically, by using the determination results in steps S1 to S3, the states of the four-way valve 102 and the change-over valve 103 are set to A or B, respectively. Similarly, the indoor fan 322 and the outdoor fan 312 are set to ON or OFF, respectively. In addition, the torque zero current controller 606 also uses the temperature of the outside air temperature sensor 710 to determine whether to apply a torque zero current to the electric drive unit 200.

Which of the operation patterns #1 to #12 is pertinent is uniquely derived from the combination of the determination results in step S1 to step 3, and, for a derived operation pattern, the states of the four-way valve 102, the change-over valve 103, the indoor fan 322, the outdoor fan 312, and the torque zero current to be controlled are uniquely determined. In a case where the operation patterns #1 and #3 are derived, a torque zero current is applied in a case where the outside air temperature falls below a preset threshold value (for example, 0°C). In a case where the operation pattern #7 is derived, therefore, switching to the operation pattern #9 is repeated using the operation pattern switching control described above. The same switching is repeated for the operation patterns #10 and #12.

As described above, with the configuration according to the present embodiment, it is possible to provide an air conditioning system and a cooling system which enable power consumption to be reduced and which are low cost, and a mobile vehicle in which the air conditioning system and the cooling system are mounted.

FIG. 4H is an explanatory view of another embodiment of the drive heat cycle system 400 according to the second embodiment of the present invention. FIG. 4I is an explanatory view of another embodiment of the drive heat cycle system 400 according to the second embodiment of the present invention.

As illustrated in FIGS. 4H and 41, the change-over valve 103 and the battery 230 may be disposed in a path connecting the indoor heat exchanger 322 and the expansion valve 502. The operation modes of FIGS. 4H and 4I are similar to the contents described in FIGS. 4F and 4G, and only the arrangement of the change-over valve 103 and the battery 230 is different. With the arrangement of FIG. 4H, the high-temperature refrigerant 401 supplied from the compressor 100 always dissipates heat in the indoor heat exchanger 322. Therefore, because the refrigerant 401 is not shared by the battery 230 at a high temperature, a significant temperature difference does not occur between the inside and the outside of the constituent members of the battery 230 in comparison with FIG. 4A, and a decrease in the life of the battery 230 can be avoided.

In this example, the battery 230, which supplies power to the electric drive unit 200, the expansion valve 502, which changes a refrigerant at a high temperature to a low-temperature refrigerant, and the change-over valve 103 to which the battery 230 is connected are provided. The battery 230, the change-over valve 103, and the expansion valve 502 are arranged in a single circulation path of the refrigerant, and the battery 230 and the change-over valve 103 are arranged in a path connecting the indoor heat exchanger 322 and the expansion valve 502 in the single circulation path. The change-over valve 103 freely switches between a third state (state A) in which the connection destination is the battery 230 and the refrigerant is not circulated in the battery 230, and a fourth state (state B) in which the refrigerant is also circulated in the battery 230 in the single circulation path.

[Third embodiment]

Hereinafter, a third embodiment of the present invention will be described with reference to FIGS. 5A to 5D. FIG. 5A is an explanatory view of a drive heat cycle system according to a third embodiment of the present invention, and is a diagram illustrating a case where an air conditioner is operated to perform heating. A difference from FIG. 4A is that the battery 230 is disposed between the electric drive unit 200 and the compressor 100, and the change-over valve 103 is unnecessary. According to the present embodiment, in a simple heat cycle system including a single circulation path, the electric drive unit 200 can be appropriately cooled, and the battery 230 can also be appropriately heated or cooled without using the change-over valve 103. The principles underlying same will be described below.

In a case where a heating operation is performed as illustrated in FIG. 5A, by placing the four-way valve 102 in state A, the refrigerant 401 the temperature of which has been raised by the compressor 100 is dissipated by the indoor heat exchanger 321, is changed into the low-temperature refrigerant 402 by the expansion valve 502, and then absorbs heat from the outdoor heat exchanger 311 and the electric drive unit 200. The battery 230 is heated or cooled, which is passively determined by the battery temperature. A detailed operation thereof will be described below with reference to FIG. 5C. In a case where the battery 230 is heated, the relationship between the heat amount Pb for heating the battery, the heat exchange capacity Pi of the indoor heat exchanger 321, the calorific value Pd of the electric drive unit 200, and the heat exchange capacity Pe of the outdoor heat exchanger 311 is as follows.

$$Pe + Pd - Pb \leq Pi \quad (7)$$

On the other hand, in a case where the battery 230 is cooled, the following formula is obtained.

$$Pe + Pd + Pb \leq Pi \quad (8)$$

In the formula (8), Pb represents a calorific value from the battery.

FIG. 5B is an explanatory view of a drive heat cycle system according to the third embodiment of the present invention, and is a diagram illustrating a case where the air conditioner is operated to perform cooling. By placing the four-way valve 102 in state B, the refrigerant 401 the temperature of which has been raised by the compressor 100 is dissipated by the outdoor heat exchanger 311, is changed into the low-temperature refrigerant 402 by the expansion valve 502, and then absorbs heat from the indoor heat exchanger 321, the electric drive unit 200 and the battery 230. A detailed operation thereof will be described below with reference to FIG. 5C. The relationship between the heat exchange capacity Pe of the outdoor heat exchanger 311, the heat exchange capacity Pi of the indoor heat exchanger 321, the calorific value Pd of the electric drive unit 200, and the heat absorption amount Pb from the battery is as follows:

$$Pi + Pd + Pb \leq Pe \quad (9).$$

Next, a method for operating the drive heat cycle system 400 according to the third embodiment of the present invention will be described. FIG. 5C is a diagram illustrating an operation pattern of the drive heat cycle system according to the third embodiment of the present invention.

The difference from FIG. 4F is that the state of the change-over valve 103 disappears. Hereinafter, the specific operation methods of #1 to #12 in FIG. 5C will be described in detail.

First, #1 to #3 are cases where the temperatures of the electric drive unit 200 and the battery 230 are both detected as "low". At such time, the electric drive unit 200 is not operating, or even when operating, the temperature is in a "low" state, and thus the battery 230 is in a state requiring heating.

Among the foregoing cases, #1 indicates a case where the air conditioner operation mode is set to heating, and the four-way valve 102 is set to state A (see FIG. 5A) at such time. The refrigerant dissipates the heat amount of Pi via the indoor heat exchanger 321 and absorbs the heat amount of Pe via the outdoor heat exchanger 311. However, in a case where the outdoor air temperature is below freezing point, there is a problem that the heat amount Pe that can be absorbed by the outdoor heat exchanger 311 becomes small, and hence, in this case, an energization loss Pd is generated by applying a torque zero current, thereby securing the heat absorption amount required to establish the heat cycle. As a result, when the refrigerant passes through the battery 230, the heating energy Pb can be supplied to the battery. It is also necessary to supply a small amount of power from the battery 230 in order to drive the compressor 100, and the battery 230 self-heats by means of this power supply, and hence the temperature gradually rises from the "low" state. Therefore, because the battery temperature can be raised so as to fall within an appropriate operation range without generating a significant temperature difference in the constituent members of the battery 230, it is possible to prevent a decrease in the life of the battery.

Next, the operation of #2 is a case where the air conditioner operation mode is set to cooling. Although it is very rare that such an operation is performed in a state where the temperatures of the electric drive unit 200 and the battery 230 are both "low" (a state where the outside air temperature is low), the present embodiment is capable of handling such an operation. At such time, the four-way valve 102 is set to state B (see FIG. 5B). While dissipating the heat amount of Pe via the outdoor heat exchanger 311, the refrigerant respectively absorbs the heat amounts of Pi via the indoor heat exchanger 321. Similarly to the operation #1, it is necessary to supply a small amount of power from the battery 230 in order to drive the compressor 100, and the battery 230 self-heats by means of this power supply, and hence the temperature gradually rises from the "low" state. In addition, it is also possible to increase the heating energy Pb to the battery by applying a torque zero current to the electric drive unit 200 to generate the energization loss Pd.

Next, the operation of #3 is a case where the air conditioner operation mode is set to stoppage, and is the same as the operation of #2 except that the indoor fan 322 is stopped to set the heat absorption amount Pi to zero.

As described above, the operation of #1 to #3 according to the present embodiment is excellent in that the battery 230 is disposed between the electric drive unit 200 and the compressor 100, an energization loss is generated by the torque zero current applied to the electric drive unit 200, and the refrigerant absorbs the heat of the energization loss, thus enabling the battery 230 to be heated.

Next, #4 to #6 are cases where the temperatures of the electric drive unit 200 and the battery 230 are both detected as "medium". At such time, the electric drive unit 200 is in a non-operating state. In addition, the temperature of the battery 230 falls within an appropriate operating temperature range, and heating is unnecessary.

Among the foregoing cases, #4 indicates a case where the air conditioner operation mode is set to heating, and the four-way valve 102 is set to state A (see FIG. 5A) at such time. While dissipating the heat amount of Pi via the indoor heat exchanger 321, the refrigerant respectively absorbs the heat amounts of Pe + Pd + Pb via the outdoor heat exchanger 311, the electric drive unit 200, and the battery 230. However, the temperatures of the electric drive unit 200 and the battery 230 are both "medium" and hence sufficiently low, and the heat amounts Pd and Pb that can be absorbed by these units are small. Therefore, the heat cycle system 400 is established mainly by absorbing the heat amount Pe. In this operation, it is necessary to supply a small amount of power from the battery 230 in order to drive the compressor 100, and the battery 230 self-heats by means of this power supply, but the calorific value Pb at that time can be absorbed (cooled) by the refrigerant 402. Furthermore, when the non-operating time of the electric drive unit 200 is long, the electric drive unit 200 can be cooled to a temperature equal to that of the refrigerant 402. In this case, because the initial temperature of the electric drive unit 200 can be kept low, the post-operation temperature becomes lower than usual, and the energization loss can be reduced, and hence the power consumption during the driving of the electric drive unit 200 can be reduced.

Next, the operation of #5 is a case where the air conditioner operation mode is set to cooling. At such time, the four-way valve 102 is set to state B (see FIG. 5B). While dissipating the heat amount of Pe via the outdoor heat exchanger 311, the refrigerant respectively absorbs the heat amounts of Pi + P1b + Pd via the indoor heat exchanger 321, the battery 230, and the electric drive unit 200. In comparison with the operation of #4, the relationship between the heat dissipation and the heat absorption in Pi and Pe is reversed, but it can be said that the electric drive unit 200 and the battery 230 are similar to the operation of #4.

Next, the operation of #6 is a case where the air conditioner operation mode is set to stoppage, and is the same as the operation of #5 except that the indoor fan 322 is stopped to set the heat absorption amount Pi to zero.

Subsequently, in #7 to #9, the temperature of the electric drive unit 200 is detected as "low" or "medium", and the temperature of the battery 230 is detected as "high". At such time, the electric drive unit 200 is in a non-operating state. On the other hand, the temperature of the battery 230 rises due to charging or discharging, and the battery is in a state where cooling is necessary. A typical operation mode is assumed at the time of rapid charging.

#7 represents a case where the air conditioner operation mode is set to heating. At such time, the four-way valve 102 is set to state A (see FIG. 5A). While dissipating the heat amount of Pi via the indoor heat exchanger 321, the refrigerant absorbs the heat amount of Pd + Pb via the electric drive unit 200 and the battery 230. In this operation, the process in which the heat amount of Pe is absorbed by the outdoor heat exchanger 311 is unnecessary. That is, by stopping the outdoor fan 312, the heat amount Pe absorbed via the outdoor heat exchanger 311 is set to zero. In addition, the temperature of the electric drive unit 200 is "low" or "medium" and hence sufficiently low, and the heat amount Pd absorbed by this unit is small. As a result, the maximum cooling capacity of the battery 230 (the upper limit of calorific value Pb) can be increased to be substantially equal to the heat exchange capacity Pi of the indoor heat exchanger 321. As a result, it is possible to solve the problem that the charging time cannot be shortened due to the problem of heat generation of the battery during rapid charging. On the other hand, in a case where it is desired to reduce the heating energy supplied indoors, the heat amount Pi that can be dissipated via the indoor heat exchanger 321 is reduced, and hence the heat amount Pb that can be absorbed by the battery 230 is also reduced, leading to insufficient cooling of the battery 230. In order to solve such a problem, according to the present embodiment, a method was devised for promptly switching to the operation of #9 in a case where it is necessary to reduce heating energy in the operation of #7 or in a case where it is necessary to increase the cooling energy of the battery 230.

#9 is a case where the air conditioner operation mode is set to stoppage, and is the same as the operation of #6 except that the heat absorption amount Pb in the battery 230 is large. In this operation, the heat amount Pb that can be absorbed by the battery 230 can be raised to be equal to the heat exchange capacity Pe of the outdoor heat exchanger 311, and hence insufficient cooling and a decrease in the life of the battery 230 can be avoided.

On the other hand, when the operation of #9 is continued, a state in which heating energy is not supplied continues, and thus the indoor temperature decreases. Therefore, by repeating the switching to the operation pattern #7 by using the operation pattern switching control described above, the indoor temperature can be maintained near the air conditioner set temperature, and at the same time, the heat amount Pb that can be absorbed by the battery 230 can be increased to be substantially equal to the heat exchange capacity Pi of the indoor heat exchanger 321 or the heat exchange capacity Pe of the outdoor heat exchanger 311. Therefore, a decrease in the life of the battery 230 can be avoided.

Next, the operation of #8 is a case where the air conditioner operation mode is set to cooling, and is the same as the operation of #5 except that the heat absorption amount Pb of the battery 230 is large.

Subsequently, in #10 to #12, the temperature of the electric drive unit 200 is detected as "high", and the temperature of battery 230 is detected as "high". At such time, the electric drive unit 200 is in an operating state or a post-operation state. On the other hand, the temperature of the battery 230 rises due to charging or discharging, and the battery is in a state where cooling is necessary. A typical operation mode is assumed at the time of travel or after travel, and at the time of charging after travel.

Among the foregoing cases, #10 indicates a case where the air conditioner operation mode is set to heating, and the four-way valve 102 is set to state A (see FIG. 5A) at such time. While dissipating the heat amount of Pi via the indoor heat exchanger 321, the refrigerant absorbs the heat amount of Pd + Pb via the electric drive unit 200 and the battery 230. In this operation, the process in which the heat amount of Pe is absorbed by the outdoor heat exchanger 311 becomes unnecessary. Therefore, by stopping the outdoor fan 312, the heat amount Pe absorbed via the outdoor heat exchanger 311 is set to zero. As a result, the maximum cooling capacity of the electric drive unit 200 and the battery 230 (the upper limit of calorific values Pd + Pb) can be increased to be equal to the heat exchange capacity Pi of the indoor heat exchanger 321. On the other hand, in a case where it is desired to reduce the heating energy supplied indoors, the heat amount Pi that can be dissipated via the indoor heat exchanger 321 is reduced, and hence the heat amount Pd + Pb that can be absorbed by the electric drive unit 200 and the battery 230 is also reduced, which results in an output limit of the electric drive unit 200 and insufficient cooling of the battery 230. In order to solve such a problem, according to the present embodiment, a method was devised for promptly switching to the operation of #12 in a case where it is necessary to reduce heating energy in the operation of #10 or in a case where it is necessary to cool the battery 230.

#12 indicates a case where the air conditioner operation mode is set to stoppage and is the same as the operation of #9 except that the heat absorption amount Pd in the electric drive unit 200 is large. With this operation, the heat amounts Pb + Pd that can be absorbed by the battery 230 and the electric drive unit 200 can be raised to be equal to the heat exchange capacity Pe of the outdoor heat exchanger 311, and hence it is not necessary to limit the output of the electric drive unit 200, and it is also possible to avoid insufficient cooling and a decrease in the life of the battery 230.

On the other hand, when the operation of #12 is continued, a state in which heating energy is not supplied continues, and thus the indoor temperature decreases. Therefore, by repeating the switching to the operation pattern #7 by using the operation pattern switching control described above, the indoor temperature can be maintained near the air conditioner set temperature, and at the same time, the heat amounts Pb + Pd that can be absorbed by the battery 230 and the electric drive unit 200 can be increased to be equal to the heat exchange capacity Pi of the indoor heat exchanger 321 or the heat exchange capacity Pe of the outdoor heat exchanger 311. Therefore, in addition to enabling sufficient cooling of the electric drive unit 200, there is no need to limit the output, and it is also possible to avoid a decrease in the life of the battery 230.

The remaining operation of #11 is a case where the air conditioner operation mode is set to cooling, and is the same as the operation of #8 except that the calorific value Pd of the electric drive unit 200 is large.

The operation pattern of the drive heat cycle system 400 according to the present embodiment described above is controlled by a drive heat cycle system controller 600. FIG. 5D is a diagram illustrating a control sequence of the drive heat cycle system according to the third embodiment of the present invention.

As illustrated in FIG. 5D, the control sequence of the drive heat cycle system controller 600 includes steps S0 to S4. Note that #1 to #12 in FIG. 5D have the same definitions as those of the operation patterns #1 to #12 illustrated in FIG. 5C. In addition, because steps S0 to S3 are the same as those in FIG. 4G, the description thereof is omitted. Furthermore, the process of step S4 is the same as that in FIG. 4G except that control of the change-over valve is unnecessary.

Which of the operation patterns #1 to #12 is pertinent is uniquely derived from the combination of the determination results in step S1 to step 3, and, for a derived operation pattern, the states of the four-way valve 102, the indoor fan 322, the outdoor fan 312, and the torque zero current to be controlled are uniquely determined. In a case where the operation patterns #1 to #3 are derived, a torque zero current is applied in a case where the outside air temperature falls below a preset threshold value (for example, 0°C). Further, in a case where the operation pattern #7 is derived, switching to the operation pattern #9 is repeated using the operation pattern switching control described above. The same switching is repeated for the operation patterns #10 and #12.

As described above, with the configuration according to the present embodiment, it is possible to provide an air conditioning system and a cooling system which enable power consumption to be reduced and which are low cost, and a mobile vehicle in which the air conditioning system and the cooling system are mounted.

Another embodiment of the drive heat cycle system 400 according to the third embodiment will be described with reference to FIG. 6. FIG. 6 is an explanatory view of another embodiment of the drive heat cycle system according to the third embodiment of the present invention.

The difference from FIG. 5A is that electric drive units 200a and 200b are arranged in parallel. Specifically, a case where the electric drive units are arranged on the front wheels and the rear wheels, respectively, and a case where the electric drive units are arranged on each wheel like in-wheel motors, or the like, are assumed. Note that, although FIG. 6 illustrates a case where there are two electric drive units, there may be three or more electric drive units. In this configuration, batteries 230a and 230b are respectively arranged between the electric drive units 200a and 200b, and the compressor 100. As a result, the temperature difference between the inlet and the outlet of the batteries 230a and 230b can be reduced, and hence a decrease in battery life can be avoided.

Even in a conventional system, the same advantageous effect can be afforded by branching the pipe for supplying the refrigerant to the battery into two pipes, but it is difficult to equally cool the two batteries because the amount of heat dissipation from the pipe varies depending on the path of the pipe, and the flow rate of the branched pipe also varies. Therefore, a phenomenon readily results where, while the inlet temperature is kept low in one battery, the inlet temperature is high and the outlet temperature is further increased in the other battery. As a result, there is a problem that a significant temperature difference occurs between the inside and the outside of the constituent members of the battery, and the life of the battery is reduced.

In the configuration of the present embodiment, the electric drive unit 200a and the battery 230a, and the electric drive unit 200b and the battery 230b are arranged in respective sets. As a result, the electric drive units 200a and 200b can be appropriately cooled according to the principle described in FIGS. 5A to 5D, and the batteries 230a and 230b can also be appropriately heated or cooled. Because the refrigerant is supplied in parallel to the two batteries, the refrigerant always passes through the process of absorbing heat in the electric drive units 200a and 200b before the refrigerant reaches the batteries, and hence the refrigerant can be controlled to a substantially uniform temperature. Therefore, the two batteries can be heated or cooled almost equally, and the temperature difference between the inlet and the outlet of the batteries 230a and 230b can be reduced.

Note that, in the present embodiment, the two electric drive units 200a and 200b are respectively provided with electric motors 210a and 210b that include cooling units 211a and 211b and temperature sensors 720a and 720b, and electrical components (inverters) 220a and 220b that include cooling units 221a and 221b.

Another embodiment of the drive heat cycle system 400 according to the third embodiment will be described with reference to FIG. 7A. FIG. 7A is an explanatory view of another embodiment of the drive heat cycle system according to the third embodiment of the present invention.

The difference from FIG. 6 is that, while the output of 200b is smaller than that of the electric drive unit 200a, the battery capacity of 230b is larger than that of the battery 230a. Specifically, it is assumed that electric drive units having different outputs are disposed on the front wheel and the rear wheel, respectively. In this configuration, a high-output electric drive unit 200a (calorific value Pd1) and a small-capacity battery 230a (calorific value Pb1) are arranged as a set. Similarly, a low-output electric drive unit 200b (calorific value Pd2) and a large-capacity battery 230b (calorific value Pb2) are arranged as a set. As a result, the calorific values Pd1 + Pb1 and Pd2 + Pb2 on the two paths can be equalized. As a result, the temperature difference between the batteries 230a and 230b can be reduced, and hence a decrease in battery life can be avoided.

Another embodiment of the third embodiment of the present invention will also be described with reference to FIG. 7B. FIG. 7B is an explanatory view of another embodiment of the drive heat cycle system according to the third embodiment of the present invention.

As illustrated in FIG. 7B, it is also possible to arrange the low-output electric drive unit 200b and the battery 230 as a set without arranging the battery between the high-output electric drive unit 200a and the compressor 100.

[Fourth embodiment]

In FIGS. 8A and 8B, the structure of the compressor 100 will be described below.

FIG. 8A is a schematic view of an embodiment of a compressor of the drive heat cycle system of the present invention. As illustrated in FIG. 8A, the compressor 100 is formed flat and integrated with the electric drive unit 200, thereby achieving space savings. In a conventional system, because the compressor 100 and the electric drive unit 200 are individually arranged, in order to realize the configuration of the present invention described in the first to third embodiments, a pipe connecting the compressor and the electric drive unit is required, and there is a problem that the vehicle cost increases due to an increase in the number of components, and also the problem of reducing power costs due to the increase in the vehicle weight.

In contrast, with the configuration as shown in FIG. 8A, the number of pipes interconnecting the electric drive unit 200 and the compressor 100 can be significantly reduced. In the third embodiment, the electric drive unit 200a and the compressor 100 may be configured as illustrated in FIG. 8A after the configuration illustrated in FIG. 7B.

Hereinafter, an internal structure of compressor 100 will be described with reference to FIG. 8B. FIG. 8B is a cross-sectional view of an internal structure according to one embodiment of the compressor in the drive heat cycle system of the present invention. In the present embodiment, in comparison with FIG. 8A, a compressor motor 101 is configured inside (on the inner side of) a pressure vessel 70.

A compression mechanism unit 20 is formed by engaging a spiral wrap which stands upright on a fixed scroll member 21, and a spiral wrap which stands upright on an orbiting scroll member 22. The orbiting scroll member 22 is supported by a rotor support member 4 disposed on the inner periphery of the rotor 1. The rotor support member 4 is also mechanically coupled to a crankshaft 31. The rotor 1 includes a rotor core 2 and a permanent magnet 3, and a stator 11 is disposed on the outer peripheral side via a predetermined gap provided in the radial direction. The stator 11 includes a stator core 12 and a stator winding 13, and as a result of the stator winding 13 being energized, generates a rotational torque together with the rotor 1. The rotor 1 and the rotation support member 4 are rotatably supported by bearings 30a and 30b.

The compression operation is performed by the orbiting scroll member 22 being turned by the rotor support member 4 and the crankshaft 31. Among compression chambers 23 formed by the fixed scroll member 21 and the orbiting scroll member 22, the compression chamber located on the outermost diameter side moves toward the centers of both scroll members 21 and 22 in step with the orbiting motion, and the volume gradually decreases. When the compression chamber reaches the vicinity of the centers of the scroll members 21 and 22, the compressed gas in the compression chamber 23 is discharged from a discharge port 24 in which communicates with the compression chamber 23. The discharged compressed gas reaches a lower portion of the pressure vessel 70 through a gas passage (not illustrated) provided to the fixed scroll member 21, the rotor support member 4, the stator 11, and the like, and is discharged to the outside of the compressor from a discharge pipe (not illustrated) provided on a lateral wall of the pressure vessel 70. An oil reservoir 71 is provided in a lower portion of the pressure vessel 70. The oil in the oil reservoir 71 passes through an oil hole provided in the crankshaft 31 due to a pressure difference caused by the rotational movement, and is used for lubrication of a sliding part between the orbiting scroll member 21 and the crankshaft 31, the bearings 30a and 30b, and the like.

With the above configuration, the compressor 100 can be formed flat, and hence it is possible to arrange the compressor 100 integrally with the electric drive unit 200, thereby achieving space savings.

[Fifth Embodiment]

An embodiment of an in-wheel motor 1000 will be described with reference to FIGS. 9A and 9B. FIG. 9A is a diagram according to a fourth embodiment of the present invention, and is a perspective view illustrating the exterior of an outer rotor-type in-wheel motor 1000. FIG. 9B is an exploded stereogram in which the in-wheel motor 1000 of FIG. 9A is shown separated on an axis of rotation.

The in-wheel motor 1000 includes a wheel 1020, a rotor assembly 1070, a stator assembly 1080, an electrical component 220, and a first case part 1040. The rotor assembly 1070 includes a rotor, a rotor case 1041, and a second case part 1042. The stator assembly 1080 includes a stator 1081 and a stator case 1090. Attached to the in-wheel motor 1000 is a disc brake 1110 that generates a braking force for braking the vehicle wheel. The in-wheel motor 1000 is attached to a frame (vehicle body frame) constituting the vehicle body via the suspension device 1120.

In the in-wheel motor 1000 according to the present embodiment, the electric drive unit 200 is directly connected to the wheel only by a mechanical coupling part, without a gear being interposed therebetween.

In the present embodiment, an outer rotor-type in-wheel motor 1000 has been provided for illustrative purposes, but the present invention may also be applied to an inner rotor-type in-wheel motor.

By applying the electric drive unit 200 (the electric motor 210 and the electrical component 220) having the heat cycle system 400 according to the present embodiment to the in-wheel motor 1000, it is possible to provide a low-cost cooling system capable of reducing power consumption.

[Sixth embodiment]

FIG. 10 is a schematic plan view of a vehicle 1600 according to a fifth embodiment of the present invention.

An electric motor 210 is mounted in the vehicle 1600. The electric motor 210 is fixed and supported on a cart 1640 by a support member 1610. A rotor of the electric motor 210 is directly connected to an axle 1630, and the electric motor 210 drives wheels 1620 via the axle 1630. A battery 1650 and an electrical component 220 that converts DC power of the battery 1650 into AC power and supplies the AC power to the electric motor 210 are provided.

In the vehicle 1600 according to the present embodiment, the electric drive unit 200 including the electric motor 210 and the electrical component 220 is incorporated in the heat cycle system 400 described in any of the above-described embodiments. In this case, the electric drive unit 200 may be configured such that the torque of the electric drive unit 200 is directly transmitted to the wheels 1620. Alternatively, the electric drive unit 200 may be configured such that the torque of the electric drive unit 200 is transmitted to the wheels via the transmission.

As described above, by applying the heat cycle system 400 and the electric drive unit 200 (the electric motor 210 and the electrical component 220) according to the present embodiment to the vehicle 1600, it is possible to provide an air conditioning system and a cooling system which enable power consumption to be reduced and which are low cost.

Note that the present invention is not limited to or by the above-described embodiments and includes various modifications. For example, the above-described embodiments have been described in detail to facilitate understanding of the present invention, and are not necessarily limited to or by embodiments having all the configurations described. In addition, part of the configuration of one embodiment can be replaced with the configuration of another embodiment, and the configuration of the other embodiment can also be added to the configuration of the one embodiment. Moreover, it is possible to add other configurations to part of the configuration of each embodiment, and to delete or replace part of the configuration of the embodiments.

Reference Signs List

| | |
|---|---|
| 1 | rotor of compressor motor |
| 2 | rotor core of compressor motor |
| 3 | permanent magnet of compressor motor |
| 4 | rotor support member of compressor motor |
| 11 | stator of compressor motor |
| 12 | stator core of compressor motor |
| 13 | stator winding of compressor motor |
| 20 | compression mechanism unit |
| 21 | fixed scroll member |
| 22 | orbiting scroll member |
| 23 | compression chamber |
| 24 | discharge port |
| 30 | bearing |
| 31 | crankshaft |
| 70 | pressure vessel |
| 100 | compressor |
| 101 | compressor motor |
| 102 | four-way valve |
| 103 | change-over valve |
| 200 | electric drive unit (e-Axle) |
| 201 | cooling pump |
| 202 | flow regulating valve |
| 210 | electric motor |
| 211 | electric motor cooling unit |
| 220 | electrical component |
| 221 | electrical component cooling unit |
| 230 | battery |
| 300 | drive component mounting space |
| 310 | outdoors |
| 311 | outdoor heat exchanger |
| 312 | outdoor fan |
| 320 | indoors |
| 321 | indoor heat exchanger |
| 322 | indoor fan |
| 400 | heat cycle system |
| 401 | arrow indicating flow direction of refrigerant (high temperature) |
| 402 | arrow indicating flow direction of refrigerant (low temperature) |
| 410 | arrow indicating flow direction of air flowing through outdoor unit |
| 420 | arrow indicating flow direction of air flowing through indoor unit |
| 501 | accumulator |
| 502 | expansion valve |
| 503 | pipe |
| 600 | heat cycle system controller |
| 601 | electric drive unit temperature determination unit |
| 602 | air conditioner operation mode determination unit |
| 603 | four-way valve controller |
| 604 | indoor fan controller |
| 605 | outdoor fan controller |
| 606 | torque zero current controller |
| 607 | battery temperature determination unit |
| 608 | change-over valve controller |
| 710 | outside air temperature sensor |
| 720 | temperature sensor of electric drive unit 200 |
| 730 | indoor temperature sensor |
| 740 | temperature sensor of battery 230 |

1000 in-wheel motor
1600 vehicle

## Claims

1. A heat cycle system for controlling indoor air conditioning of a vehicle, the heat cycle system comprising:

   a compressor;
   an accumulator;
   an electric drive unit which includes an electric motor and an electrical component that supplies appropriate power to the electric motor;
   a refrigerant compressed by the compressor; and
   an indoor heat exchanger and an outdoor heat exchanger that perform heat exchange of the refrigerant,
   wherein the heat cycle system includes a single circulation path through which the refrigerant is circulated and has a four-way valve which enables a connection destination of a refrigerant discharge unit of the compressor to be switched to the indoor heat exchanger or the outdoor heat exchanger, and
   wherein a cooling unit of the electric drive unit is disposed upstream of the accumulator in the flow of the refrigerant.

2. The heat cycle system according to claim 1,

   wherein the four-way valve is set to a first state in which the connection destination of the refrigerant discharge unit of the compressor is connected to the indoor heat exchanger, and thus the refrigerant supplies heating energy indoors, and
   wherein the four-way valve is operated such that a relationship between a calorific value Pd of the electric drive unit, a heat exchange capacity Pi of the indoor heat exchanger, and a heat exchange capacity Pe of the outdoor heat exchanger is

$$Pe + Pd \leq Pi.$$

3. The heat cycle system according to claim 1,

   wherein the four-way valve is set to a second state in which the connection destination of the refrigerant discharge unit of the compressor is connected to the outdoor heat exchanger, and thus the refrigerant supplies cooling energy indoors, and
   wherein the four-way valve is operated such that a relationship between a calorific value Pd of the electric drive unit, a heat exchange capacity Pi of the indoor heat exchanger, and a heat exchange capacity Pe of the outdoor heat exchanger is

$$Pd + Pi \leq Pe.$$

4. The heat cycle system according to claim 1, wherein, while maintaining a state in which a mechanical operation of the electric drive unit is stopped, an energization loss is generated in the electric drive unit and the refrigerant is made to absorb heat of a calorific value Pd corresponding to the energization loss.

5. The heat cycle system according to claim 1, wherein a cooling unit of the electrical component is disposed upstream of a cooling unit of the electric motor in the flow of the refrigerant.

6. The heat cycle system according to claim 1, wherein a cooling unit of the electrical component is disposed in parallel with a cooling unit of the electric motor in the flow of the refrigerant.

7. The heat cycle system according to claim 4, further comprising:

   an outside air temperature sensor that detects an outside air temperature;
   an electric drive unit temperature sensor that detects a temperature of the electric drive unit;
   an indoor temperature sensor that detects an indoor temperature;
   an indoor fan that promotes heat exchange of the indoor heat exchanger;
   an outdoor fan that promotes heat exchange of the outdoor heat exchanger;
   an electric drive unit temperature determination unit that determines the temperature of the electric drive unit on the basis of detection information of the outside air temperature sensor and the electric drive unit temperature sensor;
   an air conditioning operation mode determination unit that determines an operation mode of the indoor air conditioning on the basis of detection information of the indoor temperature sensor and a set temperature of the indoor air conditioning; and
   a heat cycle system controller that controls the four-way valve, the indoor fan, the outdoor fan, and the generation of the energization loss, on the basis of determination calculation results of the electric drive unit temperature determination unit and the air conditioning operation mode determination unit.

**8.** The heat cycle system according to claim 7,

wherein, in a case where the four-way valve is set to a first state in which the connection destination of the refrigerant discharge unit of the compressor is connected to the indoor heat exchanger, the refrigerant supplies heating energy indoors, and the detection temperature from the indoor temperature sensor exceeds an arbitrary threshold value which is based on the set temperature,
the heat cycle system controller stops the indoor fan and sets the four-way valve to a second state in which the connection destination of the refrigerant discharge unit of the compressor is connected to the outdoor heat exchanger.

**9.** The heat cycle system according to claim 7, wherein, in a case where the four-way valve is set to a second state in which the connection destination of the refrigerant discharge unit of the compressor is connected to the outdoor heat exchanger, the indoor fan is stopped, and the detection temperature from the indoor temperature sensor is below an arbitrary threshold value which is based on the set temperature,
the heat cycle system controller operates the indoor fan and sets the four-way valve to a first state in which the connection destination of the refrigerant discharge unit of the compressor is connected to the indoor heat exchanger.

**10.** The heat cycle system according to claim 7,

wherein, in a case where the four-way valve is set to a first state in which the connection destination of the refrigerant discharge unit of the compressor is connected to the indoor heat exchanger, the refrigerant supplies heating energy indoors, and the detection temperature from the outside air temperature sensor is below an arbitrary threshold value,
the heat cycle system controller issues a command to generate the energization loss.

**11.** The heat cycle system according to claim 1, further comprising:

a battery that supplies power to the electric drive unit,
wherein the battery is disposed downstream of the cooling unit of the electric drive unit and upstream of the accumulator, in the flow of the refrigerant.

**12.** The heat cycle system according to claim 11,

wherein the four-way valve is set to a first state in which the connection destination of the refrigerant discharge unit of the compressor is connected to the indoor heat exchanger, the refrigerant supplies heating energy indoors, and supplies heating energy to the battery, and
wherein the four-way valve is operated such that a relationship between a calorific value Pd of the electric drive unit, a heat exchange capacity Pi of the indoor heat exchanger, a heat exchange capacity Pe of the outdoor heat exchanger, and a heat amount Pb for heating the battery is

$$Pe + Pd - Pb \leq Pi.$$

**13.** The heat cycle system according to claim 11,

wherein the four-way valve is set to a first state in which the connection destination of the refrigerant discharge unit of the compressor is connected to the indoor heat exchanger, the refrigerant supplies heating energy indoors, and cools the battery, and
wherein the four-way valve is operated such that a relationship between a calorific value Pd of the electric drive unit, a heat exchange capacity Pi of the indoor heat exchanger, a heat exchange capacity Pe of the outdoor heat exchanger, and a calorific value Pb of the battery is

$$Pe + Pd + Pb \leq Pi.$$

**14.** The heat cycle system according to claim 11,

wherein the four-way valve is set to a second state in which the connection destination of the refrigerant discharge unit of the compressor is connected to the outdoor heat exchanger, and the refrigerant supplies cooling energy indoors, and
wherein the four-way valve is operated such that a relationship between a calorific value Pd of the electric drive unit, a heat exchange capacity Pi of the indoor heat exchanger, a heat exchange capacity Pe of the outdoor heat exchanger, and a calorific value Pb of the battery is

$$Pi + Pd + Pb \leq Pe.$$

**15.** The heat cycle system according to claim 11, further comprising:

at least two sets of the electric drive unit,
wherein the battery is disposed in the flow of the refrigerant, downstream of at least one set of the electric drive units.

16. The heat cycle system according to claim 11, further comprising:

an outside air temperature sensor that detects an outside air temperature;
an electric drive unit temperature sensor that detects a temperature of the electric drive unit;
an indoor temperature sensor that detects an indoor temperature;
a battery temperature sensor that detects a battery temperature;
an indoor fan that promotes heat exchange of the indoor heat exchanger;
the respective indoor heat exchangers and an outdoor fan;
an electric drive unit temperature determination unit that determines the temperature of the electric drive unit on the basis of detection information of the outside air temperature sensor and the electric drive unit temperature sensor;
an air conditioning operation mode determination unit that determines an operation mode of the indoor air conditioning on the basis of detection information of the indoor temperature sensor and a set temperature of the indoor air conditioning;
a battery temperature determination unit that determines the temperature of the battery on the basis of the detection information of the outside air temperature sensor and the battery temperature sensor; and
a heat cycle system controller that causes the refrigerant to absorb the energization loss generated by the electric drive unit while maintaining a state in which the mechanical operation of the electric drive unit is stopped, and to absorb a calorific value Pd corresponding to the energization loss, and
that controls the four-way valve, the indoor fan, the outdoor fan, and the generation of the energization loss generated by the electric drive unit while maintaining the state in which the mechanical operation of the electric drive unit is stopped, on the basis of determination calculation results of the electric drive unit temperature determination unit and the air conditioning operation mode determination unit,
wherein the refrigerant is made to absorb the calorific value Pd corresponding to the energization loss.

17. The heat cycle system according to claim 16,

wherein, in a case where the four-way valve is set to a first state in which the connection destination of the refrigerant discharge unit of the compressor is connected to the indoor heat exchanger, the refrigerant supplies heating energy indoors and cools the battery, and the detection temperature from the indoor temperature sensor exceeds an arbitrary threshold value which is based on the set temperature,
the heat cycle system controller stops the indoor fan and sets the four-way valve to a second state in which the connection destination of the refrigerant discharge unit of the compressor is connected to the outdoor heat exchanger.

18. The heat cycle system according to claim 16,

wherein, in a case where the four-way valve is set to a second state in which the connection destination of the refrigerant discharge unit of the compressor is connected to the outdoor heat exchanger, the indoor fan is stopped, and the detection temperature from the indoor temperature sensor is below an arbitrary threshold value which is based on the set temperature,
the heat cycle system controller operates the indoor fan and sets the four-way valve to a first state in which the connection destination of the refrigerant discharge unit of the compressor is connected to the indoor heat exchanger.

19. The heat cycle system according to claim 16,

wherein, in a case where the four-way valve is set to a first state in which the connection destination of the refrigerant discharge unit of the compressor is connected to the indoor heat exchanger, the refrigerant supplies heating energy to the battery, and the detection temperature from the outside air temperature sensor is below an arbitrary threshold value,
the heat cycle system controller issues a command to generate the energization loss.

20. The heat cycle system according to claim 1, further comprising:

a battery for supplying power to the electric drive unit; and
a change-over valve disposed between the four-way valve and the indoor heat exchanger in the single circulation path,
wherein the change-over valve freely switches between a third state in which the connection destination is the battery and the refrigerant is not circulated in the battery, and a fourth state in which the refrigerant is also circulated in the battery in the single circulation path.

21. The heat cycle system according to claim 20,

wherein the four-way valve is set to a first state in which the connection destination of the refrigerant discharge unit of the compressor is connected to the indoor heat exchanger, and the refrigerant supplies heating energy indoors,
wherein the change-over valve is set to the fourth state and the refrigerant supplies heating energy to the battery, and
wherein the four-way valve is operated such that a relationship between a calorific value Pd of the electric drive unit, a heat exchange capacity Pi of the indoor heat exchanger, a heat exchange capacity Pe of the outdoor heat exchanger, and a heat amount Pb for heating the battery is

$$Pe + Pd \leq Pi + Pb.$$

**22.** The heat cycle system according to claim 20,

wherein, in a case where the four-way valve is set to a first state in which the connection destination of the refrigerant discharge unit of the compressor is connected to the indoor heat exchanger, and the refrigerant supplies heating energy indoors, and
the change-over valve is set to the third state and the refrigerant is not circulated in the battery, the four-way valve is operated such that a relationship between a calorific value Pd of the electric drive unit, a heat exchange capacity Pi of the indoor heat exchanger, a heat exchange capacity Pe of the outdoor heat exchanger, and a calorific value Pb of the battery is

$$Pe + Pd \leq Pi.$$

**23.** The heat cycle system according to claim 20,

wherein, when the four-way valve is set to a second state in which the connection destination of the refrigerant discharge unit of the compressor is connected to the outdoor heat exchanger, the change-over valve is set to the third state, and the indoor fan of the indoor heat exchanger is in a stopped state,
the four-way valve is operated such that a relationship between a calorific value Pd of the electric drive unit and a heat exchange capacity Pe of the outdoor heat exchanger is

$$Pd \leq Pe.$$

**24.** The heat cycle system according to claim 20,

wherein, when the four-way valve is set to a second state in which the connection destination of the refrigerant discharge unit of the compressor is connected to the outdoor heat exchanger, the change-over valve is set to the fourth state, and the indoor fan of the indoor heat exchanger is in a stopped state,
the four-way valve is operated such that a relationship between a calorific value Pd of the electric drive unit, a heat exchange capacity Pe of the outdoor heat exchanger, and a calorific value Pb of the battery is

$$Pb + Pd \leq Pe.$$

**25.** The heat cycle system according to claim 20,

wherein, when the four-way valve is set to a second state in which the connection destination of the refrigerant discharge unit of the compressor is connected to the outdoor heat exchanger, the change-over valve is set to the fourth state, and the refrigerant is supplying cooling energy indoors,
the four-way valve is operated such that a relationship between a calorific value Pd of the electric drive unit, a heat exchange capacity Pi of the indoor heat exchanger, a heat exchange capacity Pe of the outdoor heat exchanger, and a calorific value Pb of the battery is

$$Pi + Pb + Pd \leq Pe.$$

**26.** The heat cycle system according to claim 20, further comprising:

an outside air temperature sensor that detects an outside air temperature;
an electric drive unit temperature sensor that detects a temperature of the electric drive unit;
an indoor temperature sensor that detects an indoor temperature;
a battery temperature sensor that detects a battery temperature;
an indoor fan that promotes heat exchange of the indoor heat exchanger;
the respective indoor heat exchangers and an outdoor fan;
an electric drive unit temperature determination unit that determines the temperature of the electric drive unit on the basis of detection information of the outside air temperature sensor and the electric drive unit temperature sensor;
an air conditioning operation mode determination unit that determines an operation mode of the indoor air conditioning on the basis of detection information of the indoor temperature sensor and a set temperature of the indoor air conditioning;

a battery temperature determination unit that determines the temperature of the battery on the basis of the detection information of the outside air temperature sensor and the battery temperature sensor; and

a heat cycle system controller that causes the refrigerant to absorb the energization loss generated by the electric drive unit while maintaining a state in which the mechanical operation of the electric drive unit is stopped, and to absorb a calorific value Pd corresponding to the energization loss, and

that controls the four-way valve, the indoor fan, the outdoor fan, and the generation of the energization loss generated by the electric drive unit while maintaining the state in which the mechanical operation of the electric drive unit is stopped, on the basis of determination calculation results of the electric drive unit temperature determination unit and the air conditioning operation mode determination unit,

wherein the refrigerant is made to absorb the calorific value Pd corresponding to the energization loss.

**27.** The heat cycle system according to claim 26,

wherein, in a case where the four-way valve is set to a first state in which the connection destination of the refrigerant discharge unit of the compressor is connected to the indoor heat exchanger, the change-over valve is set to the third state, the refrigerant supplies heating energy indoors and the refrigerant is not circulated in the battery, and the detection temperature from the indoor temperature sensor exceeds an arbitrary threshold value which is based on the set temperature,

the heat cycle system controller stops the indoor fan, sets the four-way valve to a second state in which the connection destination of the refrigerant discharge unit of the compressor is connected to the outdoor heat exchanger, and sets the change-over valve to the fourth state.

**28.** The heat cycle system according to claim 26,

wherein, in a case where the four-way valve is set to a second state in which the connection destination of the refrigerant discharge unit of the compressor is connected to the outdoor heat exchanger, the change-over valve is set to the fourth state, the indoor fan is stopped, and the detection temperature from the indoor temperature sensor is below an arbitrary threshold value which is based on the set temperature,

the heat cycle system controller operates the indoor fan, sets the four-way valve to a first state in which the connection destination of the refrigerant discharge unit of the compressor is connected to the indoor heat exchanger, and sets the change-over valve to the third state.

**29.** The heat cycle system according to claim 26,

wherein, in a case where the four-way valve is set to a first state in which the connection destination of the refrigerant discharge unit of the compressor is connected to the indoor heat exchanger, the change-over valve is set to the fourth state, the refrigerant supplies heating energy to the battery, and the detection temperature from the outside air temperature sensor is below an arbitrary threshold value,

the heat cycle system controller issues a command to generate the energization loss.

**30.** The heat cycle system according to claim 1, further comprising:

a battery that supplies power to the electric drive unit;

an expansion valve that changes a refrigerant at a high temperature into a low-temperature refrigerant; and

a change-over valve to which the battery is connected,

wherein the battery, the change-over valve, and the expansion valve are arranged in the single circulation path,

wherein the battery and the change-over valve are arranged on a path connecting the indoor heat exchanger and the expansion valve in the single circulation path, and

wherein the change-over valve freely switches between a third state in which the connection destination is the battery and the refrigerant is not circulated in the battery, and a fourth state in which the refrigerant is also circulated in the battery in the single circulation path.

**31.** An in-wheel motor including a wheel and an electric drive unit, the in-wheel motor comprising:
the heat cycle system according to claim 1.

**32.** A vehicle including an electric drive unit, a battery, and an electrical component that converts DC power of the battery into AC power and supplies the AC power to the electric drive unit, the vehicle comprising:

the heat cycle system according to claim 1,

wherein the electric drive unit is integrated in the heat cycle system and configured such that the torque of the electric drive unit is transmitted directly to the wheels.

**33.** A vehicle including an electric drive unit, a battery, and an electrical component that converts DC power of the battery into AC power and supplies the AC power to the electric drive unit, the vehicle comprising:

the heat cycle system according to claim 1, wherein the electric drive unit is integrated in the heat cycle system and configured such that the torque of the electric drive unit is transmitted to the wheels via a transmission.

FIG. 1A

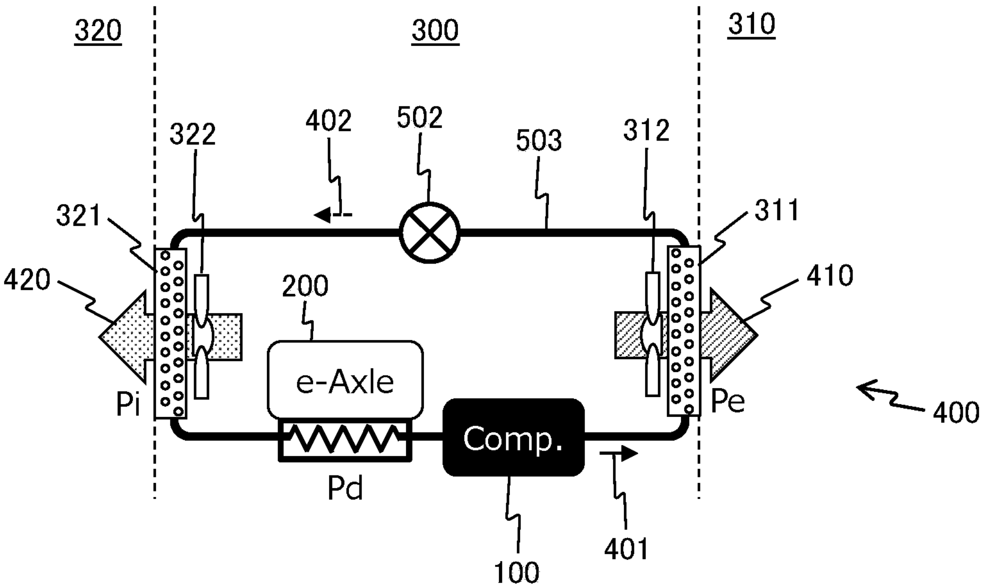
320
300
310
322
402
502
503
312
321
311
420
200
410
e-Axle
Pi
Pe
400
Comp.
Pd
100
401

FIG. 1B

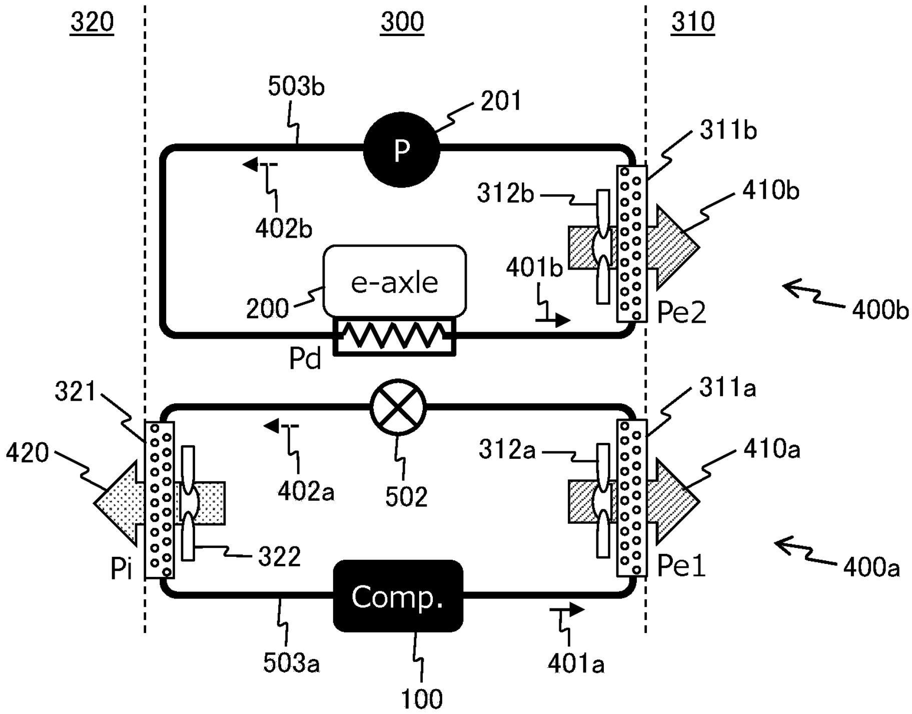
320
300
310
503b
201
P
311b
312b
410b
402b
e-axle
401b
200
Pe2
400b
Pd
321
311a
420
312a
410a
402a
502
322
Pi
Pe1
400a
Comp.
503a
100
401a

FIG. 1C

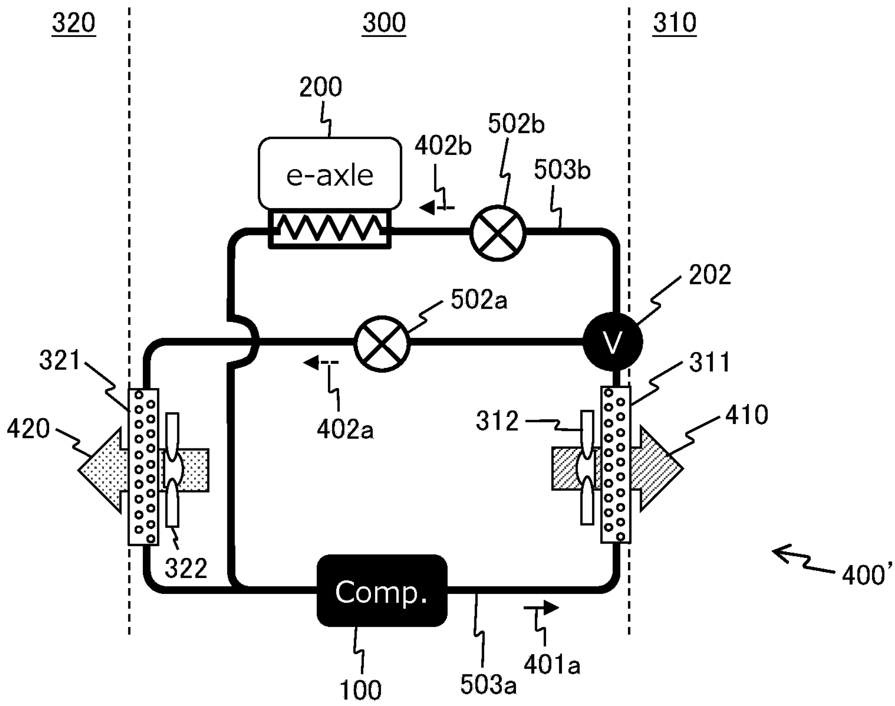
320
300
310
200
502b
402b
503b
e-axle
202
502a
321
V
311
420
402a
312
410
322
400'
Comp.
100
503a
401a

FIG. 2A

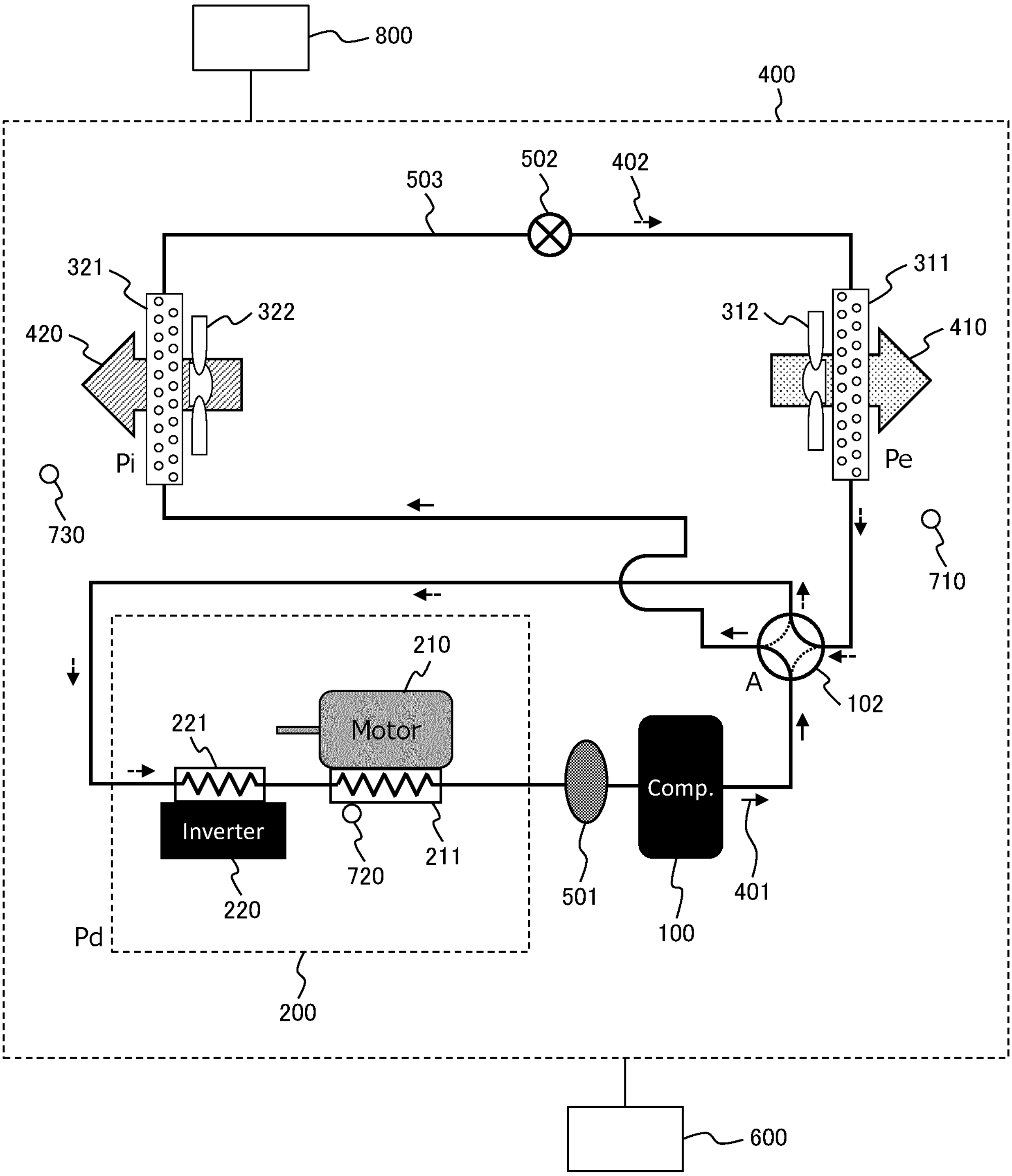
800
400
503
502
402
321
322
311
312
420
410
Pi
Pe
730
710
A
102
210
221
Motor
Comp.
Inverter
720
211
501
401
100
220
Pd
200
600

FIG. 2B

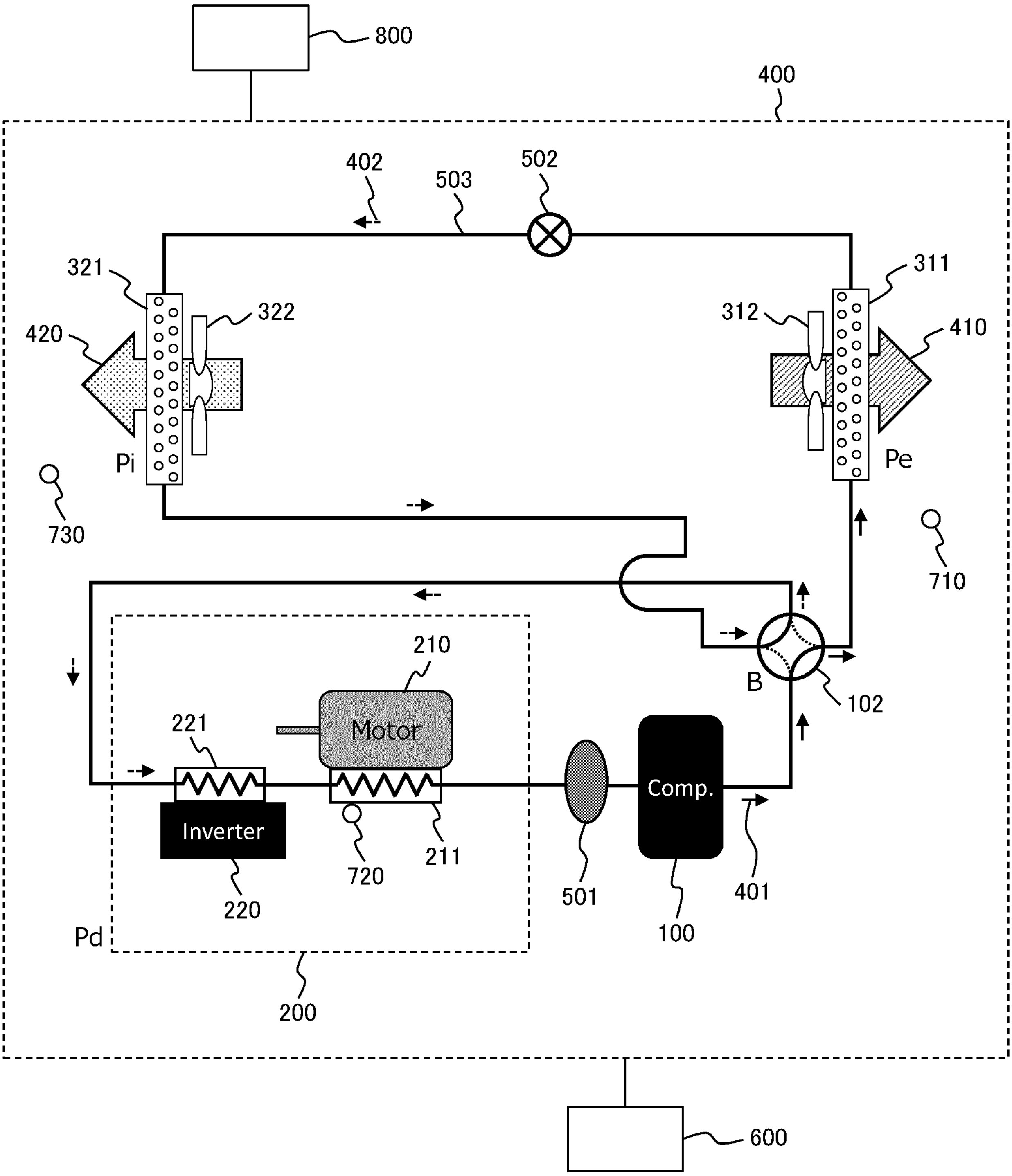
800
400
402
503
502
321
322
311
312
420
410
Pi
Pe
730
710
210
221
Motor
Inverter
720
211
220
Pd
200
B
102
Comp.
501
100
401
600

FIG. 2C

| # | TEMPERATURE OF ELECTRIC DRIVE UNIT 200 *1 | AIR CONDITIONER OPERATION MODE | | | STATE OF FOUR-WAY VALVE 102 | ACTION BY REFRIGERANT *2 | | |
|---|---|---|---|---|---|---|---|---|
| | | HEATING | COOLING | STOPPAGE | | INDOOR HEAT EXCHANGER 321 Pi | OUTDOOR HEAT EXCHANGER 311 Pe | ELECTRIC DRIVE UNIT200 Pd |
| 1 | LOW/MEDIUM (NOT OPERATING) | ○ | | | A | ● | ○ | ○*3 |
| 2 | | | ○ | | B | ○ | ● | ○ |
| 3 | | | | ○ | B | − | ● | ○ |
| 4 | HIGH (OPERATING/POST-OPERATION) | ○ | | | A | ● | − | ○ |
| 5 | | | ○ | | B | ○ | ● | ○ |
| 6 | | | | ○ | B | − | ● | ○ |

*1 LOW: LESS THAN 10°C, MEDIUM: EQUAL TO OUTSIDE AIR TEMPERATURE (EQUAL TO OR MORE THAN 10°C), HIGH: HIGHER THAN OUTSIDE AIR TEMPERATURE (EQUAL TO OR MORE THAN 10°C)
*2 ● : HEAT DISSIPATION (HEATING), ○ : HEAT ABSORPTION (COOLING)
*3 APPLY TORQUE ZERO CURRENT IN CASE WHERE OUTSIDE AIR TEMPERATURE IS EQUAL TO OR LESS THAN THRESHOLD VALUE (FOR EXAMPLE, 0°C)

FIG. 2D

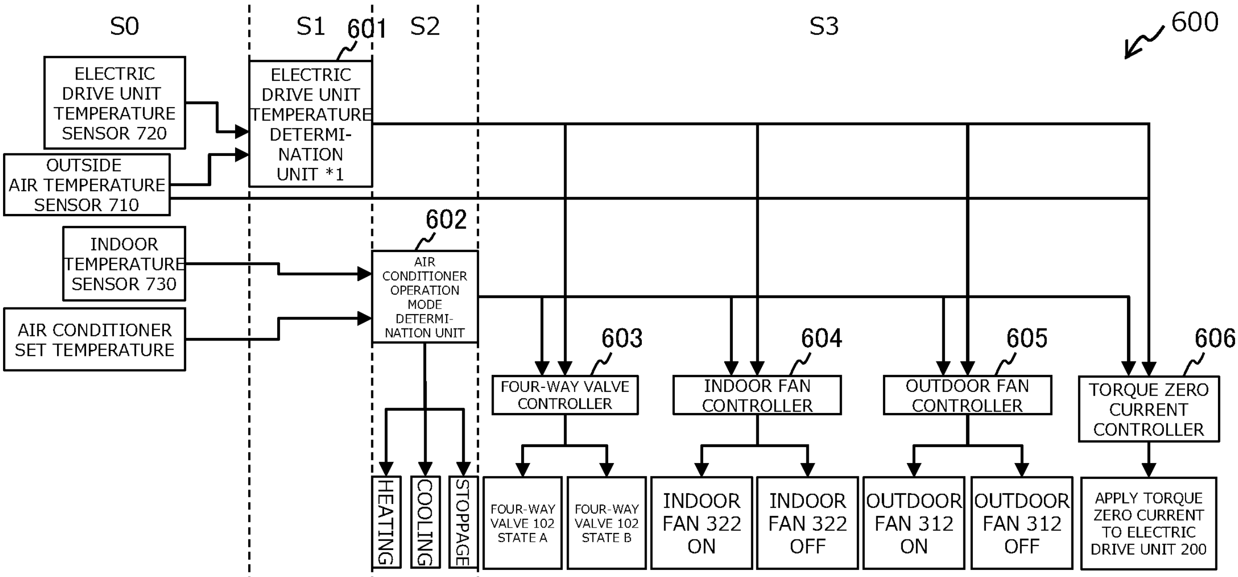


| | | | | | | | | | | | |
|---|---|---|---|---|---|---|---|---|---|---|---|
| #1 | LOW/MEDIUM | ○ | | | ○ | | ○ | | ○ | | ○ |
| #2 | | | ○ | | | ○ | ○ | | ○ | | |
| #3 | | | | ○ | | ○ | | ○ | ○ | | |
| #4 | HIGH | ○ | | | ○ | | ○ | | | ○ | |
| #5 | | | ○ | | | ○ | ○ | | ○ | | |
| #6 | | | | ○ | | ○ | | ○ | ○ | | |

*1 LOW: LESS THAN 10ºC, MEDIUM: EQUAL TO OUTSIDE AIR TEMPERATURE (EQUAL TO OR MORE THAN 10ºC), HIGH: HIGHER THAN OUTSIDE AIR TEMPERATURE (EQUAL TO OR MORE THAN 10ºC)

FIG. 3

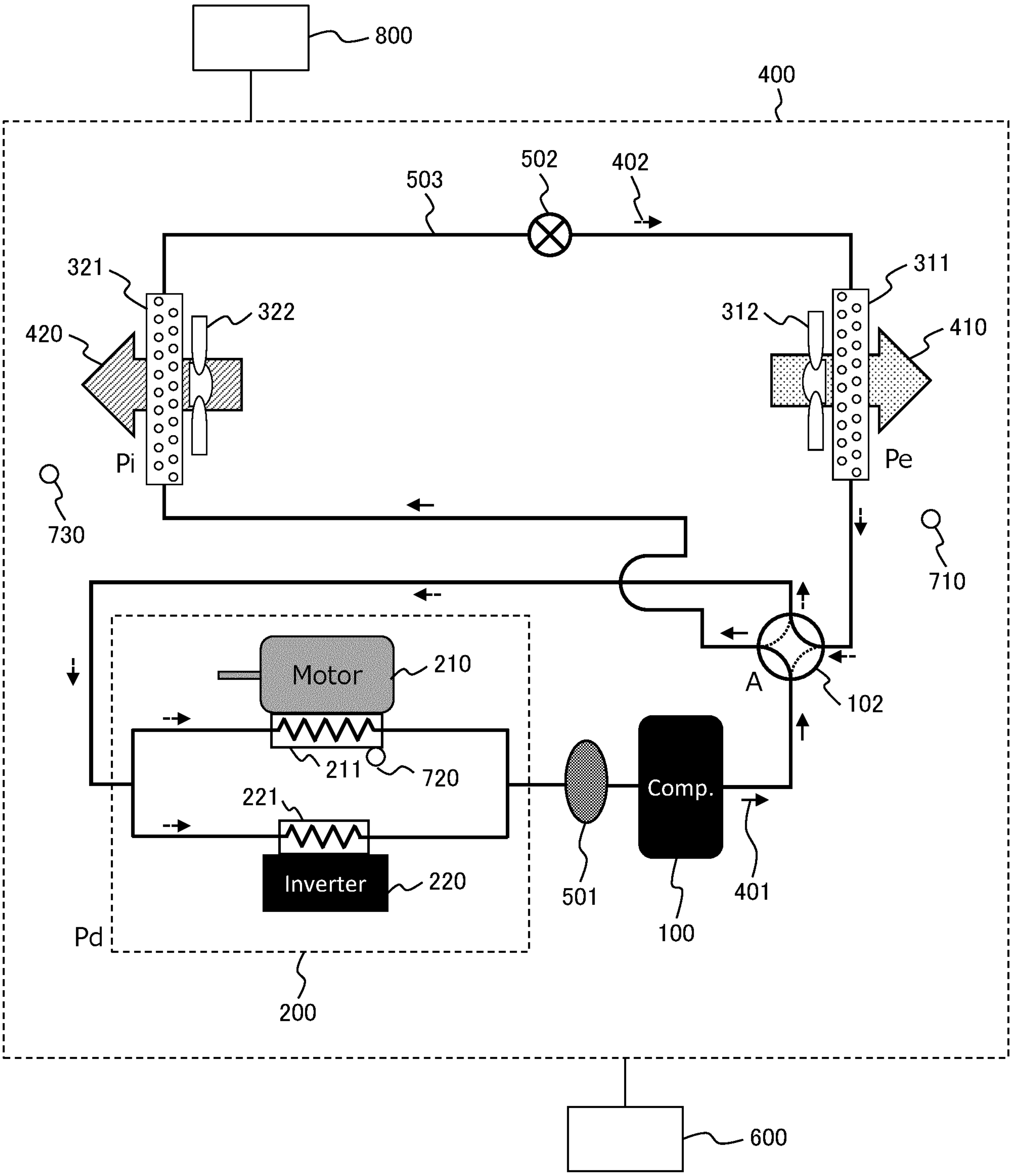
800
400
503
502
402
321
322
311
312
420
410
Pi
Pe
730
710
A
102
Motor
210
211
720
221
Comp.
Inverter
220
501
100
401
Pd
200
600

FIG. 4A

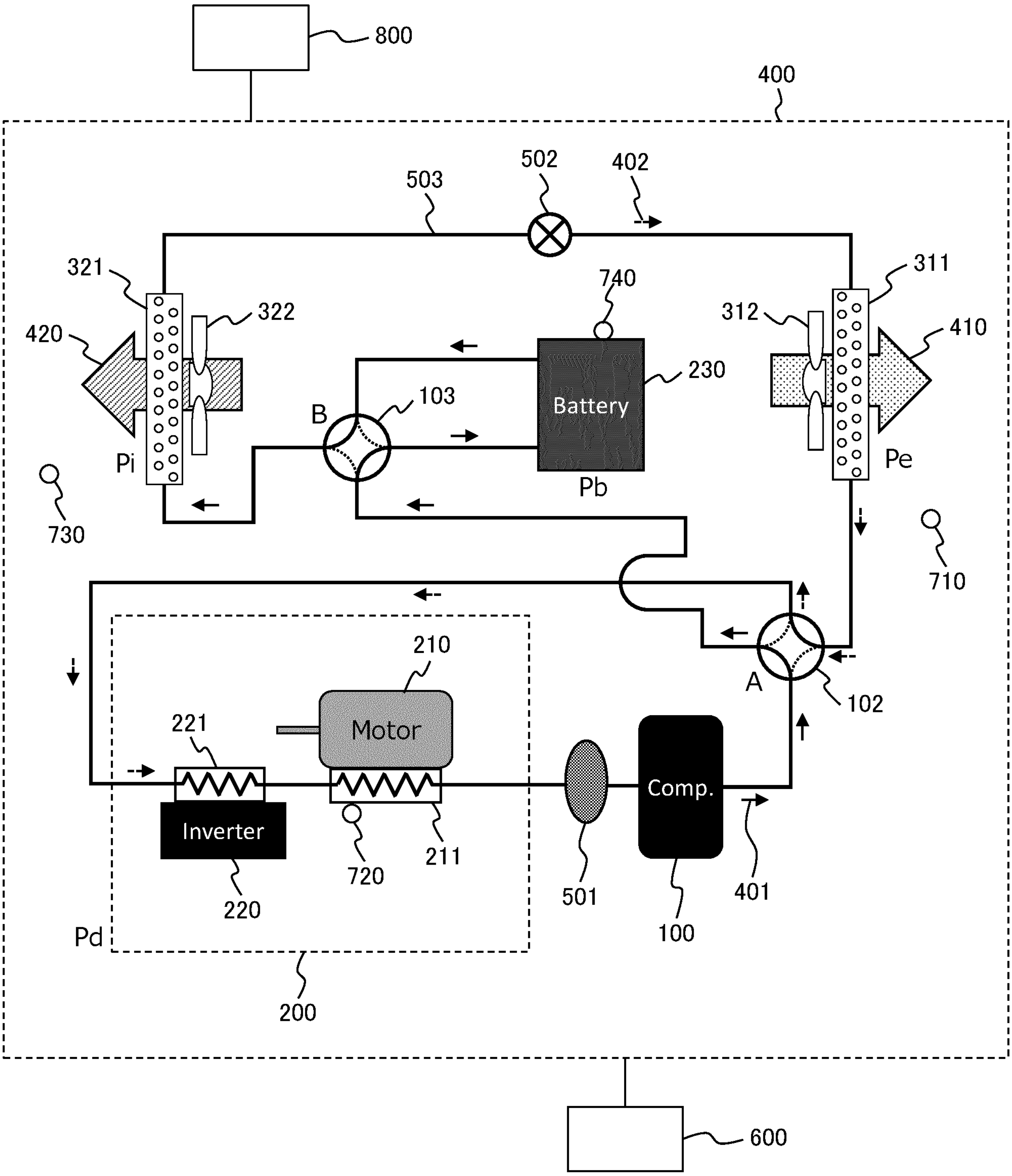
800
400
503
502
402
321
322
420
740
230
Battery
311
312
410
103
B
Pi
Pb
Pe
730
710
210
Motor
A
102
221
Comp.
Inverter
720
211
501
401
220
100
Pd
200
600

FIG. 4B

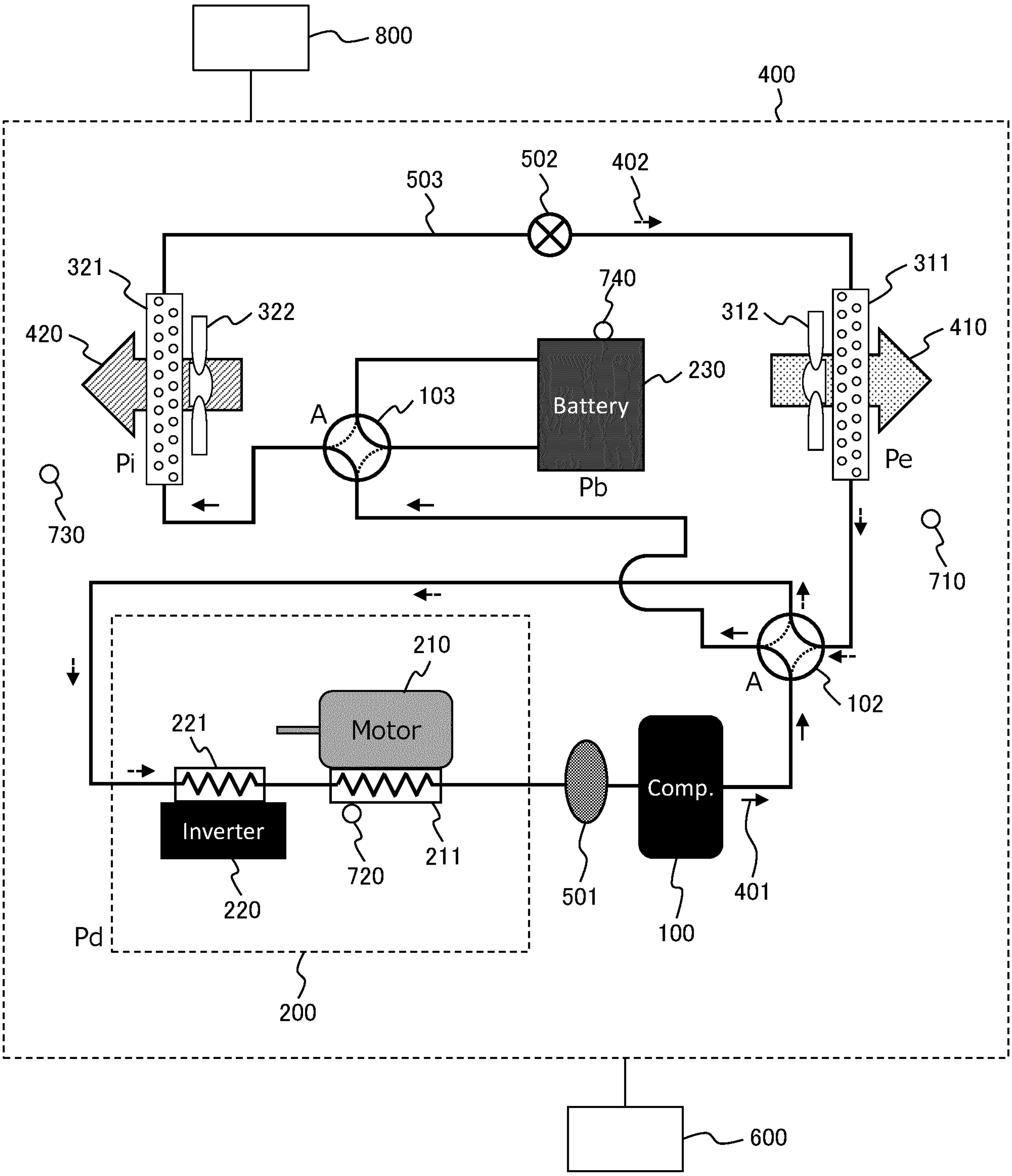
800
400
503
502
402
321
322
420
740
311
312
410
230
103
A
Battery
Pi
Pe
Pb
730
710
210
A
102
221
Motor
Inverter
720
211
501
100
401
220
Comp.
Pd
200
600

FIG. 4C

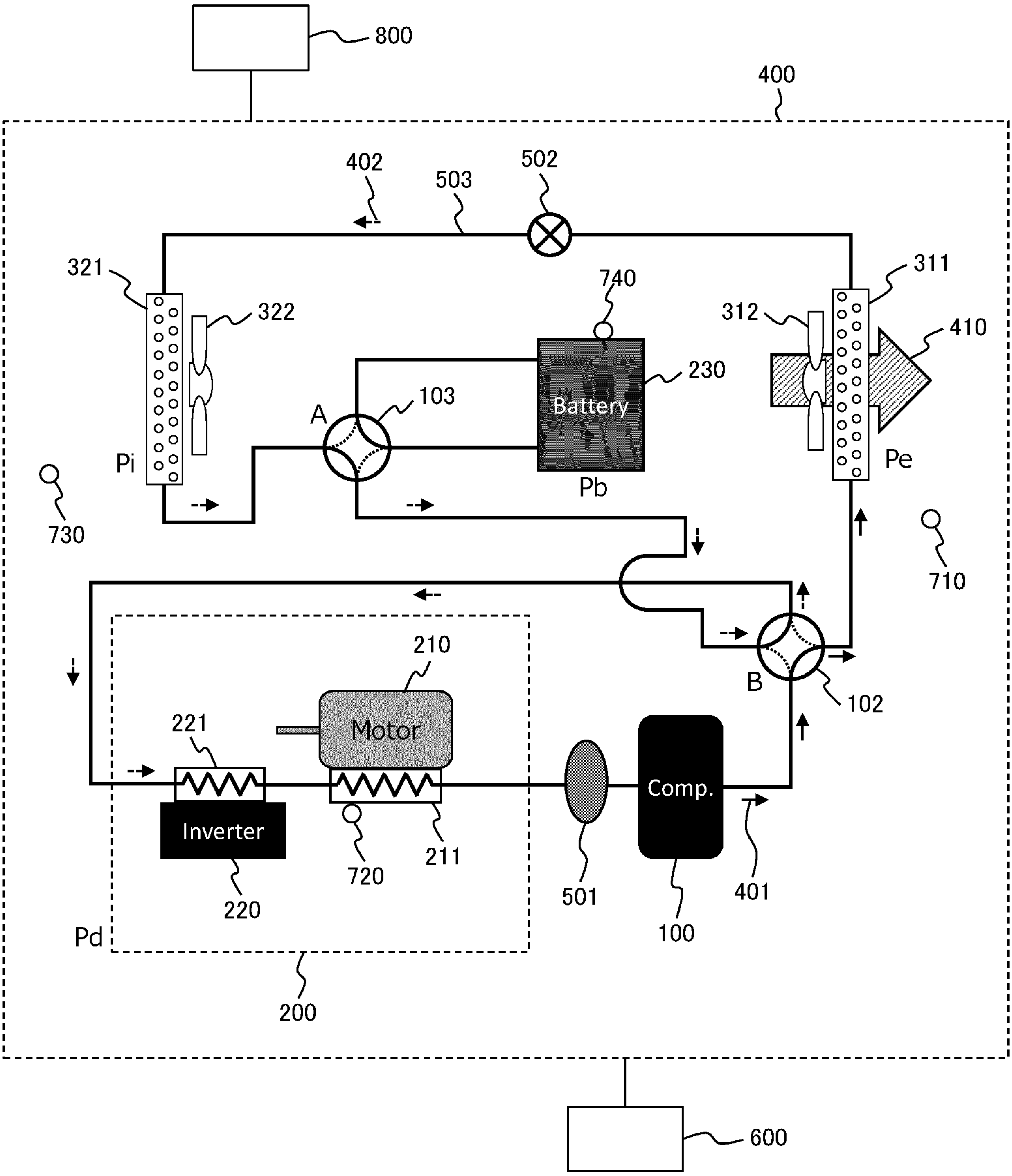
800
400
402
503
502
321
740
311
322
312
410
103
230
A
Battery
Pi
Pb
Pe
730
710
210
B
102
221
Motor
Comp.
Inverter
720
211
501
401
220
100
Pd
200
600

FIG. 4D

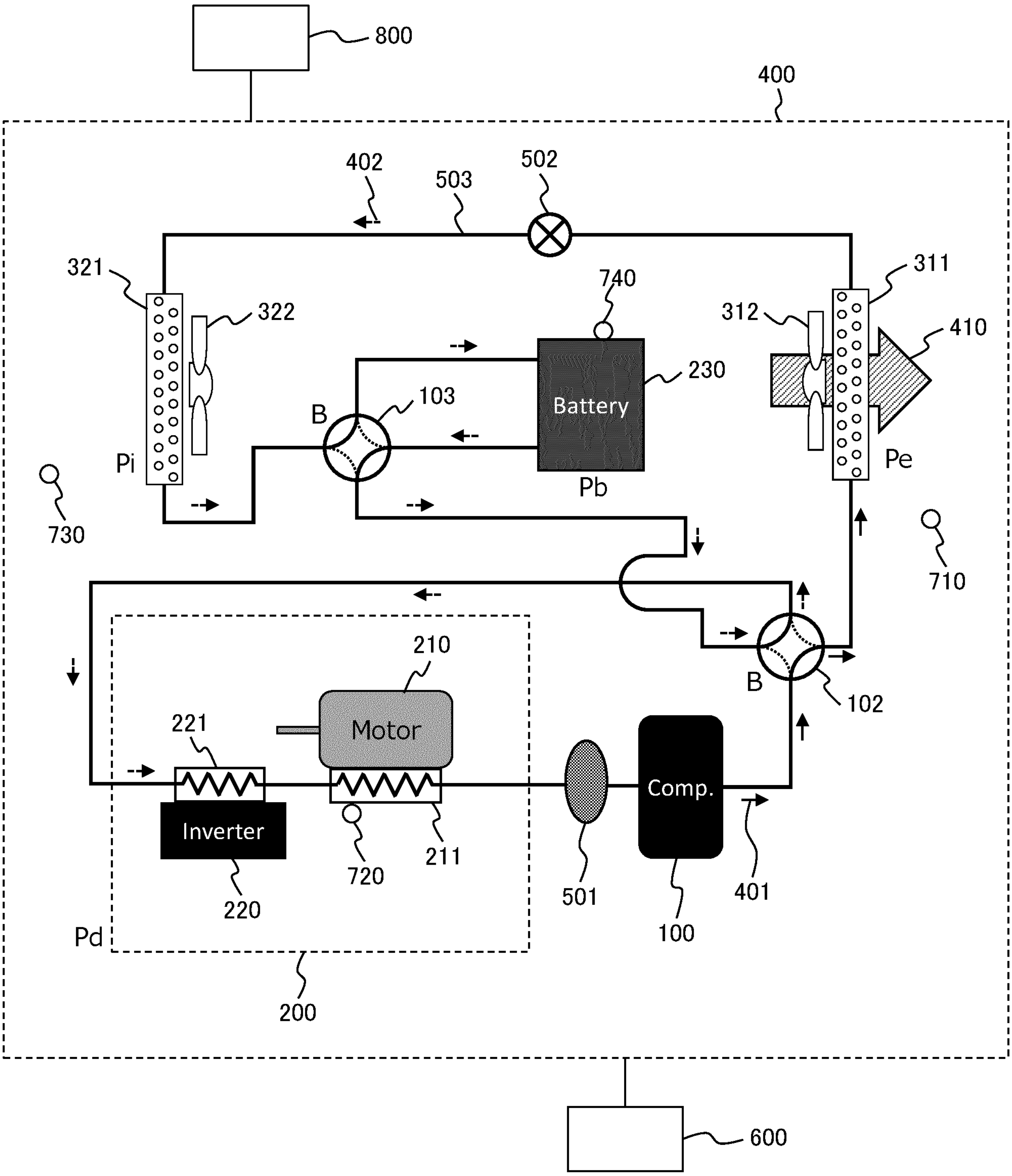
800
400
402
503
502
321
322
740
311
312
410
230
103
B
Battery
Pi
Pb
Pe
730
710
210
B
102
221
Motor
Comp.
Inverter
720
211
501
401
220
100
Pd
200
600

FIG. 4E

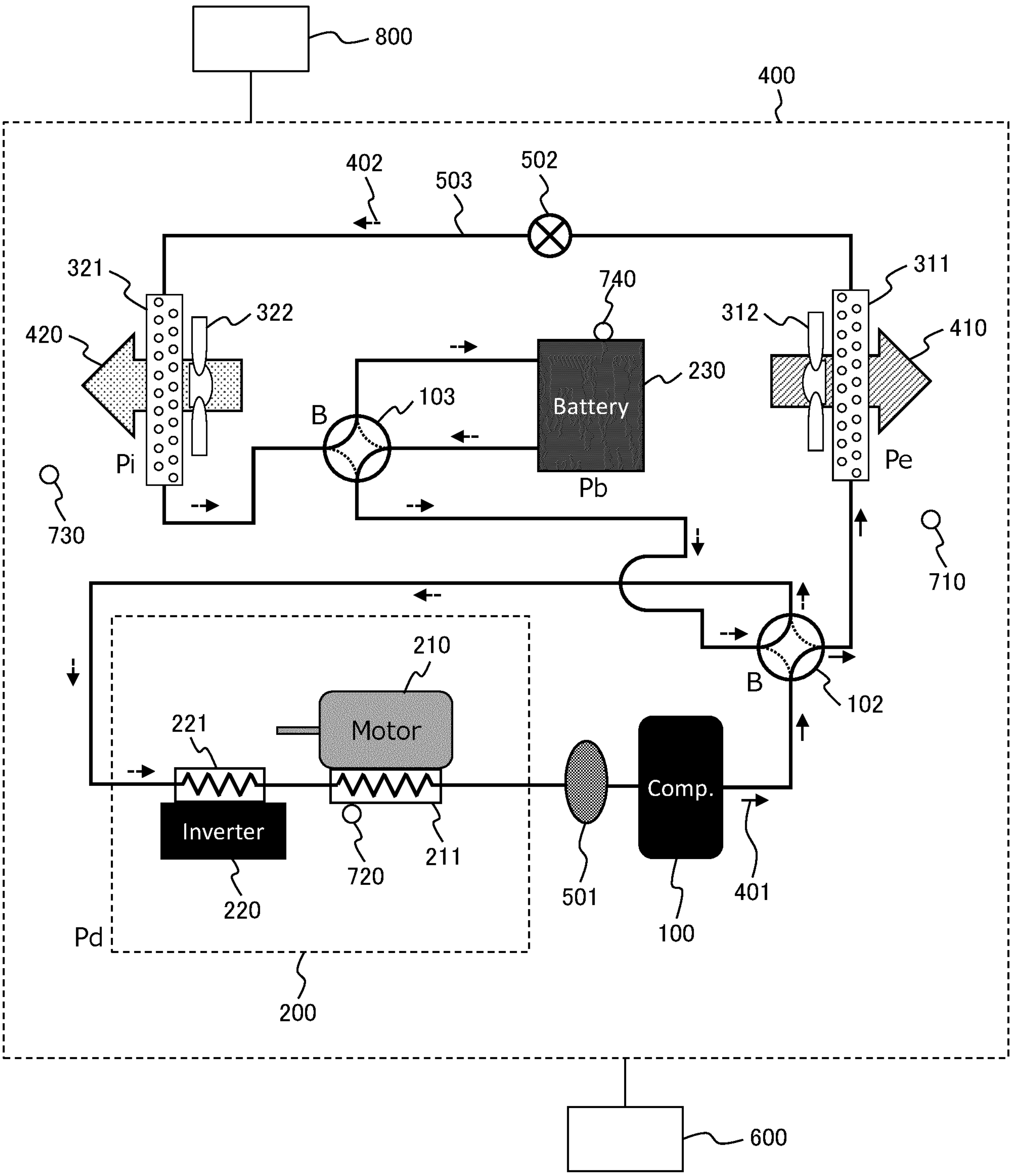
800
400
402
503
502
321
322
420
740
312
311
410
230
103
B
Battery
Pi
Pb
Pe
730
710
210
102
B
221
Motor
Comp.
Inverter
720
211
501
401
220
100
Pd
200
600

FIG. 4F

| # | TEMPERATURE OF ELECTRIC DRIVE UNIT 200 *1 | BATTERY TEMPER-ATURE *1 | AIR CONDITIONER OPERATION MODE | | | STATE OF FOUR-WAY VALVE 102 | STATE OF CHANGE-OVER VALVE 103 | ACTION BY REFRIGERANT *2 | | | |
|---|---|---|---|---|---|---|---|---|---|---|---|
| | | | HEATING | COOLING | STOPPAGE | | | INDOOR HEAT EXCHANGER 321 Pi | OUTDOOR HEAT EXCHANGER 311 Pe | BATTERY 230 Pb | ELECTRIC DRIVE UNIT 200 Pd |
| 1 | LOW (NOT OPERATING) | LOW | ○ | | | A | B | ● | ○ | ● | ○*3 |
| 2 | | | | (○) | | B | A | ○ | ● | – | ○ |
| 3 | | | | | ○ | A | B | – | ○ | ● | ○*3 |
| 4 | MEDIUM (NOT OPERATING) | MEDIUM | ○ | | | A | A | ● | ○ | – | ○ |
| 5 | | | | ○ | | B | B | ○ | ● | ○ | ○ |
| 6 | | | | | ○ | B | B | – | ● | ○ | ○ |
| 7 | LOW/MEDIUM (NOT OPERATING) | HIGH | ○ | | | A | A | ● | ○ | – | ○ |
| 8 | | | | ○ | | B | B | ○ | ● | ○ | ○ |
| 9 | | | | | ○ | B | B | – | ● | ○ | ○ |
| 10 | HIGH (OPERATING/ POST-OPERATION) | HIGH | ○ | | | A | A | ● | – | – | ○ |
| 11 | | | | ○ | | B | B | ○ | ● | ○ | ○ |
| 12 | | | | | ○ | B | B | – | ● | ○ | ○ |

*1 LOW: LESS THAN 10ºC, MEDIUM: EQUAL TO OUTSIDE AIR TEMPERATURE (EQUAL TO OR MORE THAN 10ºC), HIGH: HIGHER THAN OUTSIDE AIR TEMPERATURE (EQUAL TO OR MORE THAN 10ºC)

*2 ● : HEAT DISSIPATION (HEATING), ○ : HEAT ABSORPTION (COOLING)

*3 APPLY TORQUE ZERO CURRENT IN CASE WHERE OUTSIDE AIR TEMPERATURE IS EQUAL TO OR LESS THAN THRESHOLD VALUE (FOR EXAMPLE, 0ºC)

FIG. 4G

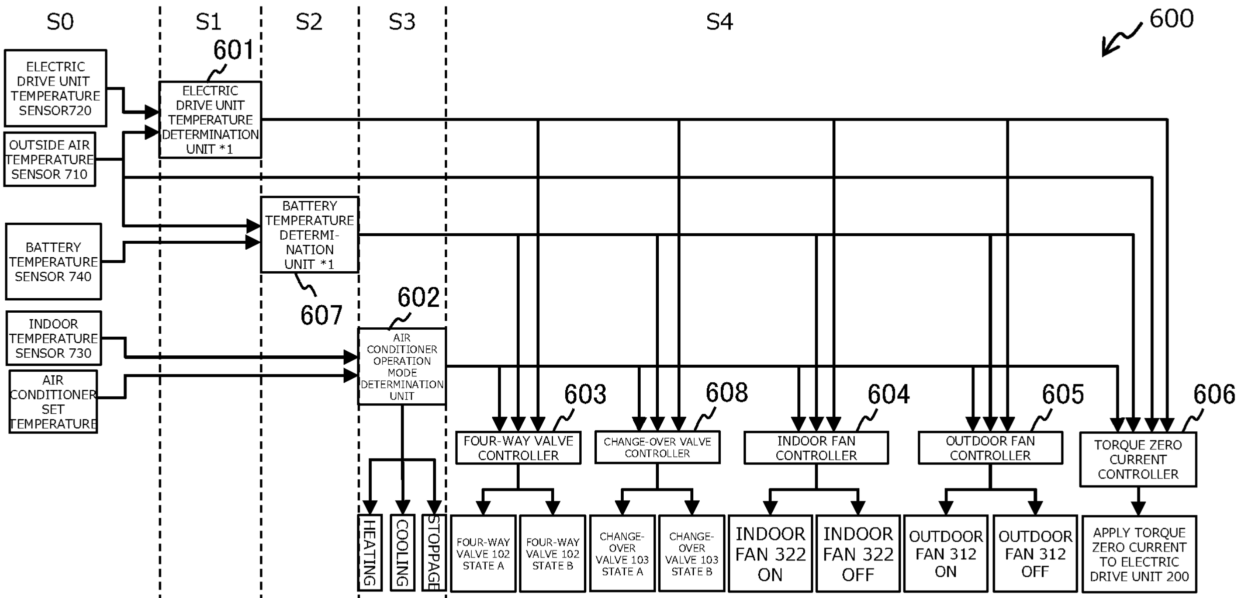


| | S1 | S2 | HEATING | COOLING | STOPPAGE | FOUR-WAY VALVE 102 STATE A | FOUR-WAY VALVE 102 STATE B | CHANGE-OVER VALVE 103 STATE A | CHANGE-OVER VALVE 103 STATE B | INDOOR FAN 322 ON | INDOOR FAN 322 OFF | OUTDOOR FAN 312 ON | OUTDOOR FAN 312 OFF | APPLY TORQUE ZERO CURRENT TO ELECTRIC DRIVE UNIT 200 |
|---|---|---|---|---|---|---|---|---|---|---|---|---|---|---|
| #1 | LOW | LOW | ○ | | | ○ | | | ○ | ○ | | ○ | | ○ |
| #2 | | | | ○ | | | ○ | ○ | | ○ | | ○ | | |
| #3 | | | | | ○ | ○ | | | ○ | | ○ | ○ | | ○ |
| #4 | MEDIUM | MEDIUM | ○ | | | ○ | | ○ | | ○ | | ○ | | |
| #5 | | | | ○ | | | ○ | | ○ | ○ | | ○ | | |
| #6 | | | | | ○ | | ○ | | ○ | | ○ | ○ | | |
| #7 | LOW/ MEDIUM | HIGH | ○ | | | ○ | | ○ | | ○ | | ○ | | |
| #8 | | | | ○ | | | ○ | | ○ | ○ | | ○ | | |
| #9 | | | | | ○ | | ○ | | ○ | | ○ | ○ | | |
| #10 | HIGH | HIGH | ○ | | | ○ | | ○ | | ○ | | | ○ | |
| #11 | | | | ○ | | | ○ | | ○ | ○ | | ○ | | |
| #12 | | | | | ○ | | ○ | | ○ | | ○ | ○ | | |

*1 LOW: LESS THAN 10ºC, MEDIUM: EQUAL TO OUTSIDE AIR TEMPERATURE (EQUAL TO OR MORE THAN 10ºC), HIGH: HIGHER THAN OUTSIDE AIR TEMPERATURE (EQUAL TO OR MORE THAN 10ºC)

FIG. 4H

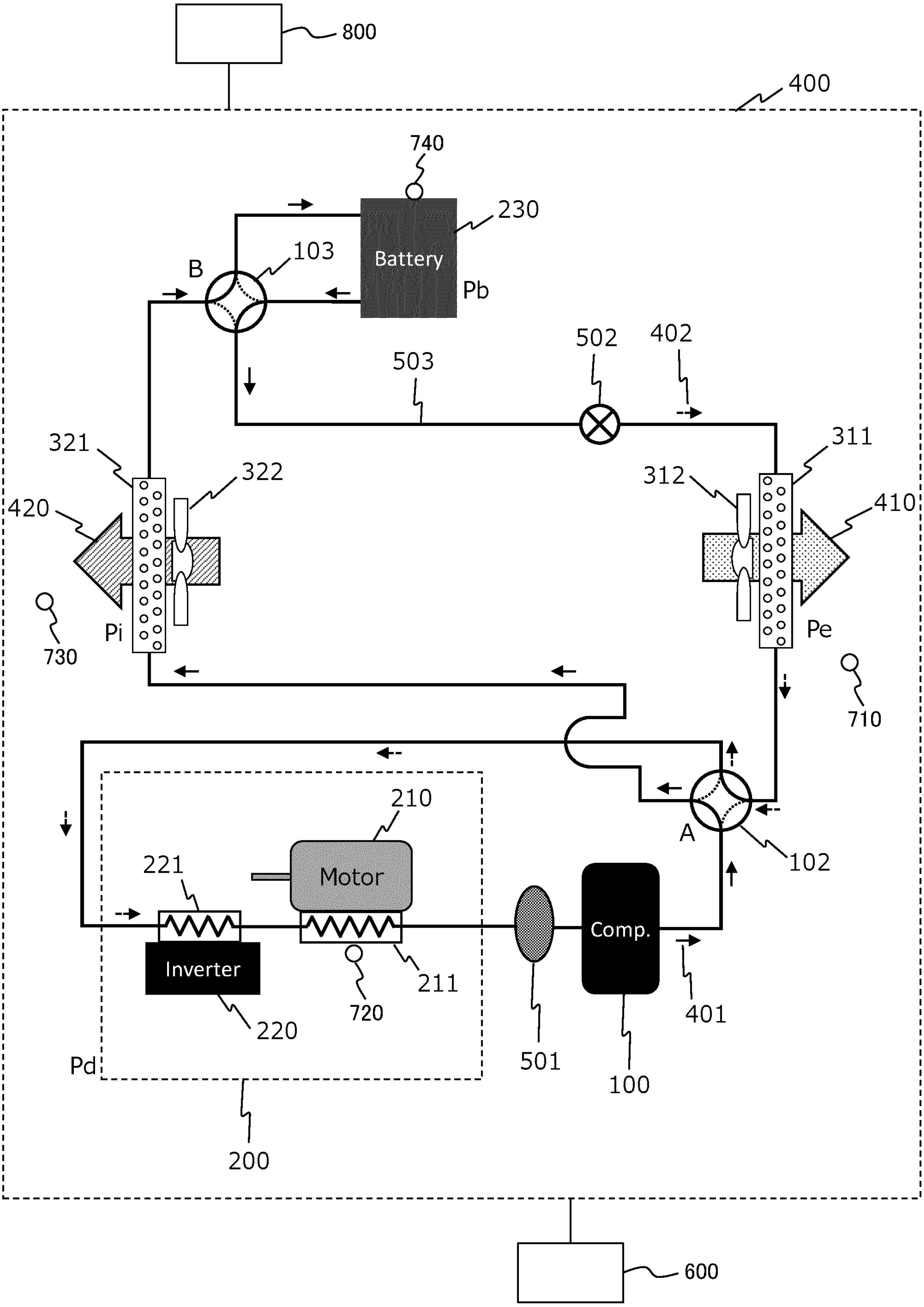
800
400
740
230
103
B
Battery
Pb
502
402
503
321
322
311
312
420
410
730
Pi
Pe
710
210
102
A
221
Motor
Comp.
Inverter
211
720
220
401
501
100
Pd
200
600

FIG. 4 I

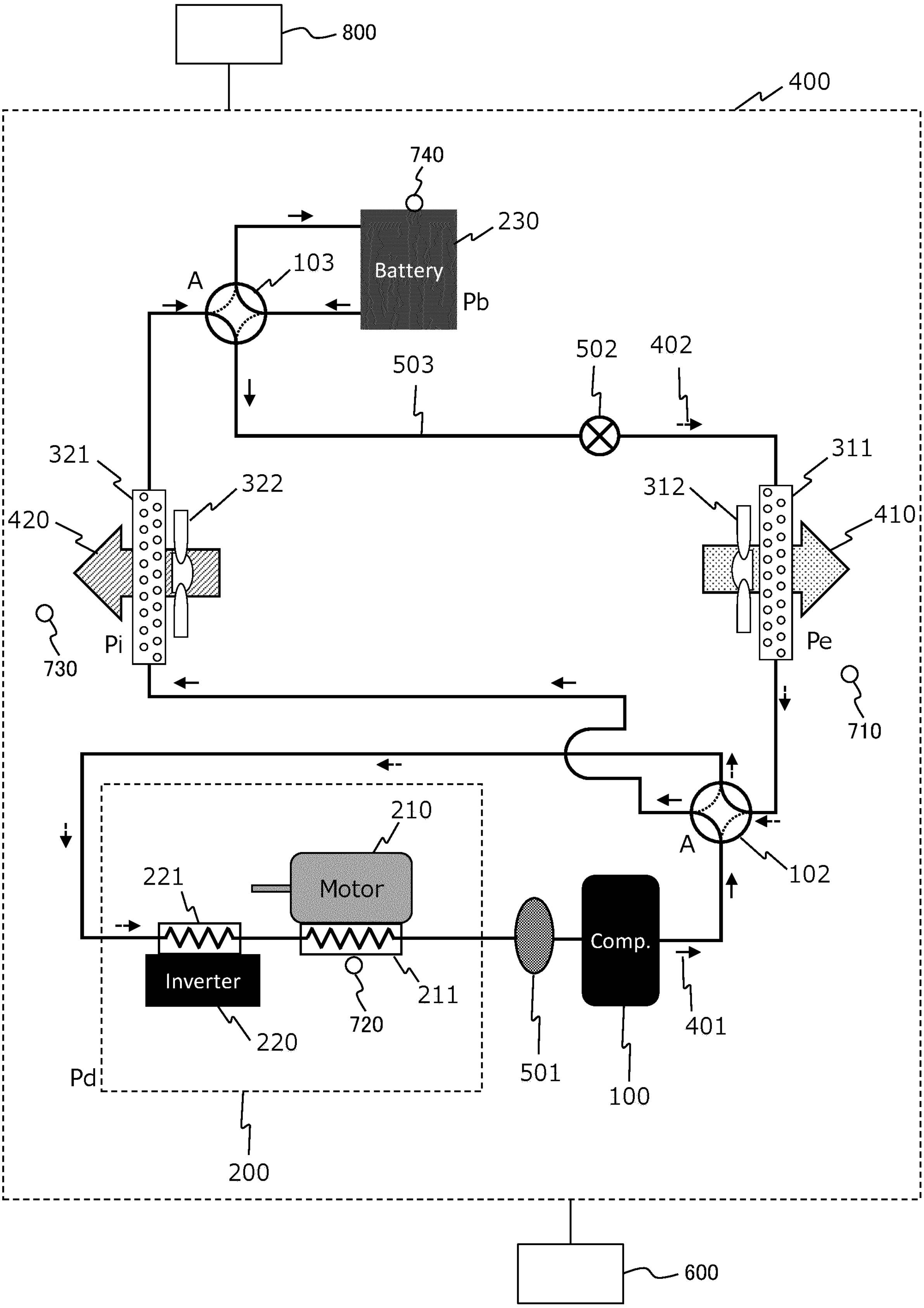
800
400
740
230
Battery
Pb
103
A
503
502
402
321
322
312
311
420
410
Pi
Pe
730
710
210
A
102
221
Motor
Comp.
Inverter
211
401
720
220
501
100
Pd
200
600

FIG. 5A

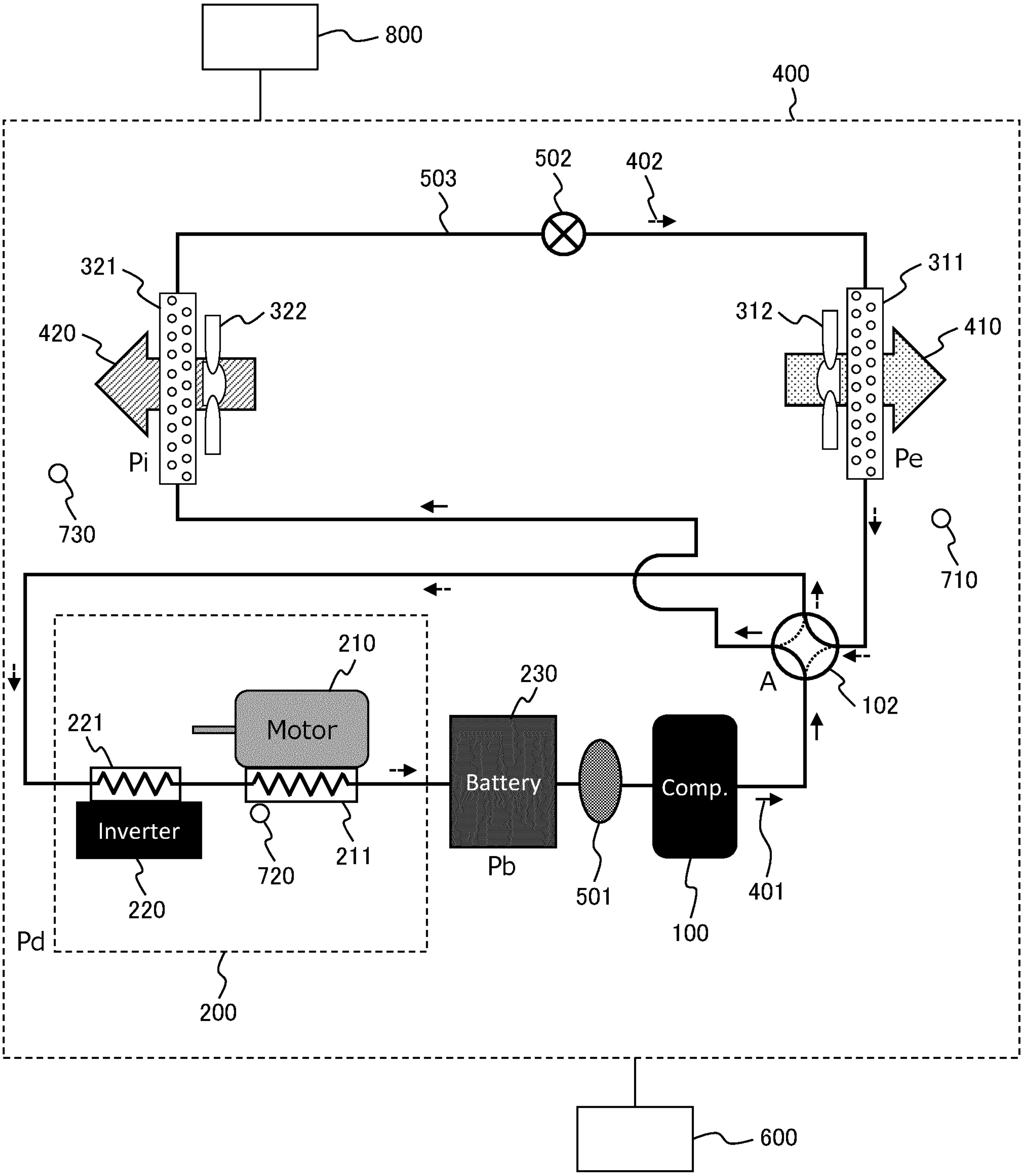
800
400
503
502
402
321
322
311
312
420
410
Pi
Pe
730
710
210
230
221
Motor
Battery
Comp.
Inverter
A
102
720
211
Pb
501
401
220
100
Pd
200
600

FIG. 5B

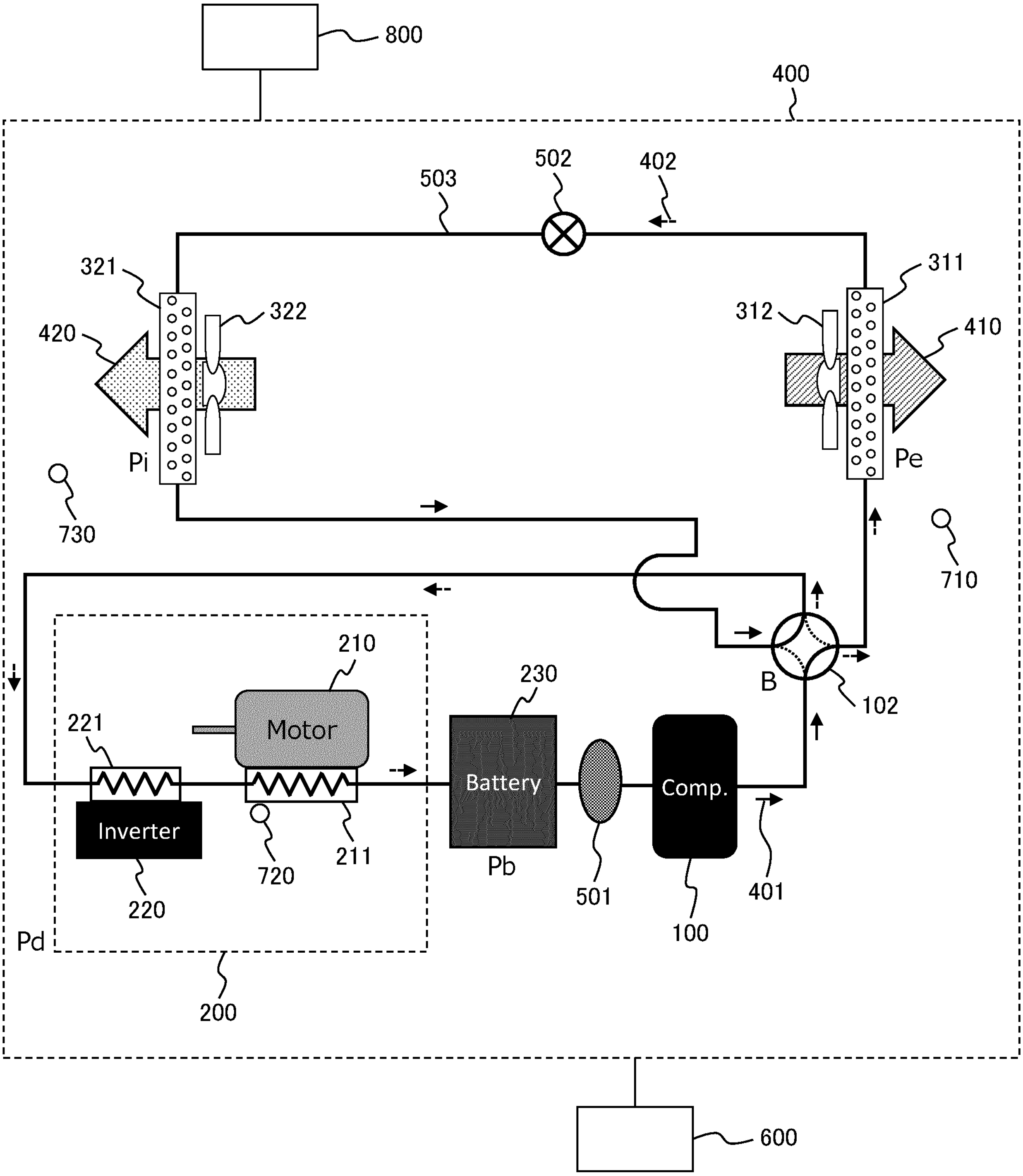
800
400
503
502
402
321
322
311
312
420
410
Pi
Pe
730
710
210
230
221
Motor
Battery
Comp.
Inverter
B
102
720
211
Pb
501
401
220
100
Pd
200
600

FIG. 5C

| # | TEMPERATURE OF ELECTRIC DRIVE UNIT 200 *1 | BATTERY TEMPER-ATURE *1 | AIR CONDITIONER OPERATION MODE | | | STATE OF FOUR-WAY VALVE 102 | ACTION BY REFRIGERANT *2 | | | |
|---|---|---|---|---|---|---|---|---|---|---|
| | | | HEATING | COOLING | STOPPAGE | | INDOOR HEAT EXCHANGER 321 Pi | OUTDOOR HEAT EXCHANGER 311 Pe | BATTERY 230 Pb | ELECTRIC DRIVE UNIT 200 Pd |
| 1 | LOW (NOT OPERATING | LOW | ○ | | | A | ● | ○ | ● | ○*3 |
| 2 | | | | ○ | | B | ○ | ● | ● | ○*3 |
| 3 | | | | | ○ | B | – | ● | ● | ○*3 |
| 4 | MEDIUM (NOT OPERATING) | MEDIUM | ○ | | | A | ● | ○ | ○ | ○ |
| 5 | | | | ○ | | B | ○ | ● | ○ | ○ |
| 6 | | | | | ○ | B | – | ● | ○ | ○ |
| 7 | LOW/MEDIUM (NOT OPERATING) | HIGH | ○ | | | A | ● | – | ○ | ○ |
| 8 | | | | ○ | | B | ○ | ● | ○ | ○ |
| 9 | | | | | ○ | B | – | ● | ○ | ○ |
| 10 | HIGH (OPERATING/ POST-OPERATION) | HIGH | ○ | | | A | ● | – | ○ | ○ |
| 11 | | | | ○ | | B | ○ | ● | ○ | ○ |
| 12 | | | | | ○ | B | – | ● | ○ | ○ |

*1 LOW: LESS THAN 10ºC, MEDIUM: EQUAL TO OUTSIDE AIR TEMPERATURE (EQUAL TO OR MORE THAN 10ºC), HIGH: HIGHER THAN OUTSIDE AIR TEMPERATURE (EQUAL TO OR MORE THAN 10ºC)
*2 ● : HEAT DISSIPATION (HEATING), ○ : HEAT ABSORPTION (COOLING)
*3 APPLY TORQUE ZERO CURRENT IN CASE WHERE OUTSIDE AIR TEMPERATURE IS EQUAL TO OR LESS THAN THRESHOLD VALUE (FOR EXAMPLE, 0ºC)

FIG. 5D

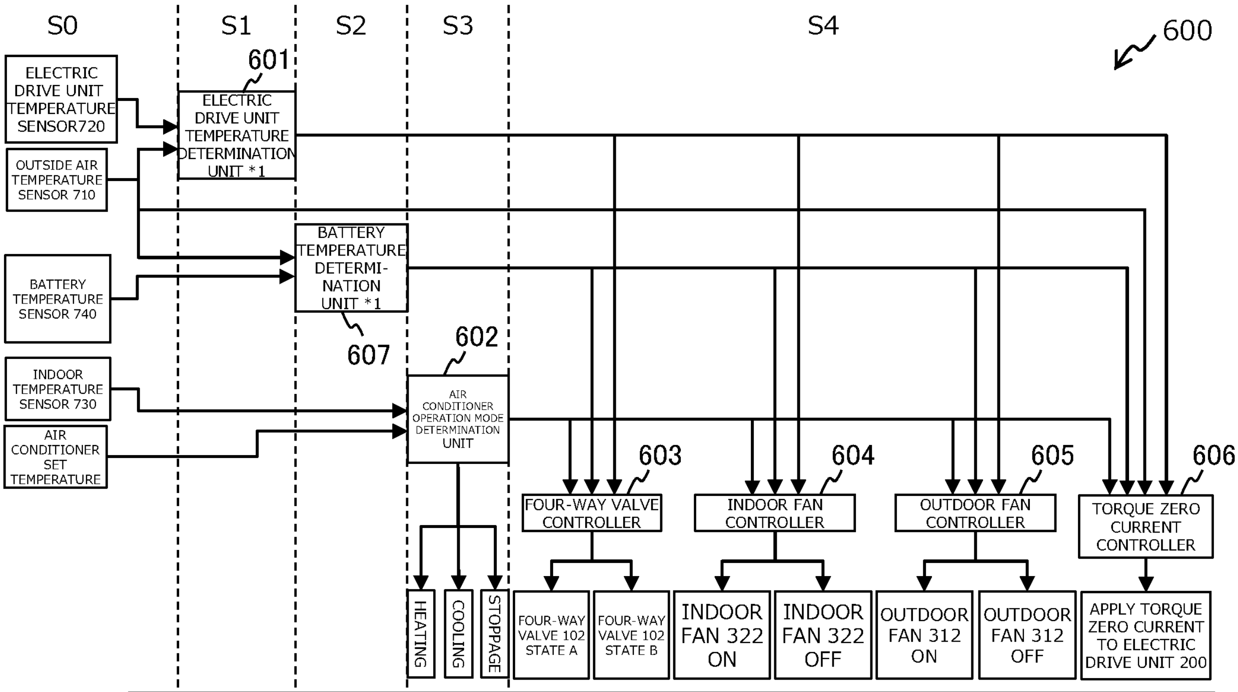


| | | | HEATING | COOLING | STOPPAGE | FOUR-WAY VALVE 102 STATE A | FOUR-WAY VALVE 102 STATE B | INDOOR FAN 322 ON | INDOOR FAN 322 OFF | OUTDOOR FAN 312 ON | OUTDOOR FAN 312 OFF | APPLY TORQUE ZERO CURRENT TO ELECTRIC DRIVE UNIT 200 |
|---|---|---|---|---|---|---|---|---|---|---|---|---|
| #1 | LOW | LOW | ○ | | | ○ | | ○ | | ○ | | ○ |
| #2 | | | | ○ | | | ○ | ○ | | ○ | | ○ |
| #3 | | | | | ○ | | ○ | | ○ | ○ | | ○ |
| #4 | MIDIUM | MIDIUM | ○ | | | ○ | | ○ | | ○ | | |
| #5 | | | | ○ | | | ○ | ○ | | ○ | | |
| #6 | | | | | ○ | | ○ | | ○ | ○ | | |
| #7 | LOW/ MIDIUM | HGH | ○ | | | ○ | | ○ | | | ○ | |
| #8 | | | | ○ | | | ○ | ○ | | ○ | | |
| #9 | | | | | ○ | | ○ | | ○ | ○ | | |
| #10 | HIGH | HIGH | ○ | | | ○ | | ○ | | | ○ | |
| #11 | | | | ○ | | | ○ | ○ | | ○ | | |
| #12 | | | | | ○ | | ○ | | ○ | ○ | | |

*1 LOW: LESS THAN 10ºC, MEDIUM: EQUAL TO OUTSIDE AIR TEMPERATURE (EQUAL TO OR MORE THAN 10ºC), HIGH: HIGHER THAN OUTSIDE AIR TEMPERATURE (EQUAL TO OR MORE THAN 10ºC)

FIG.6

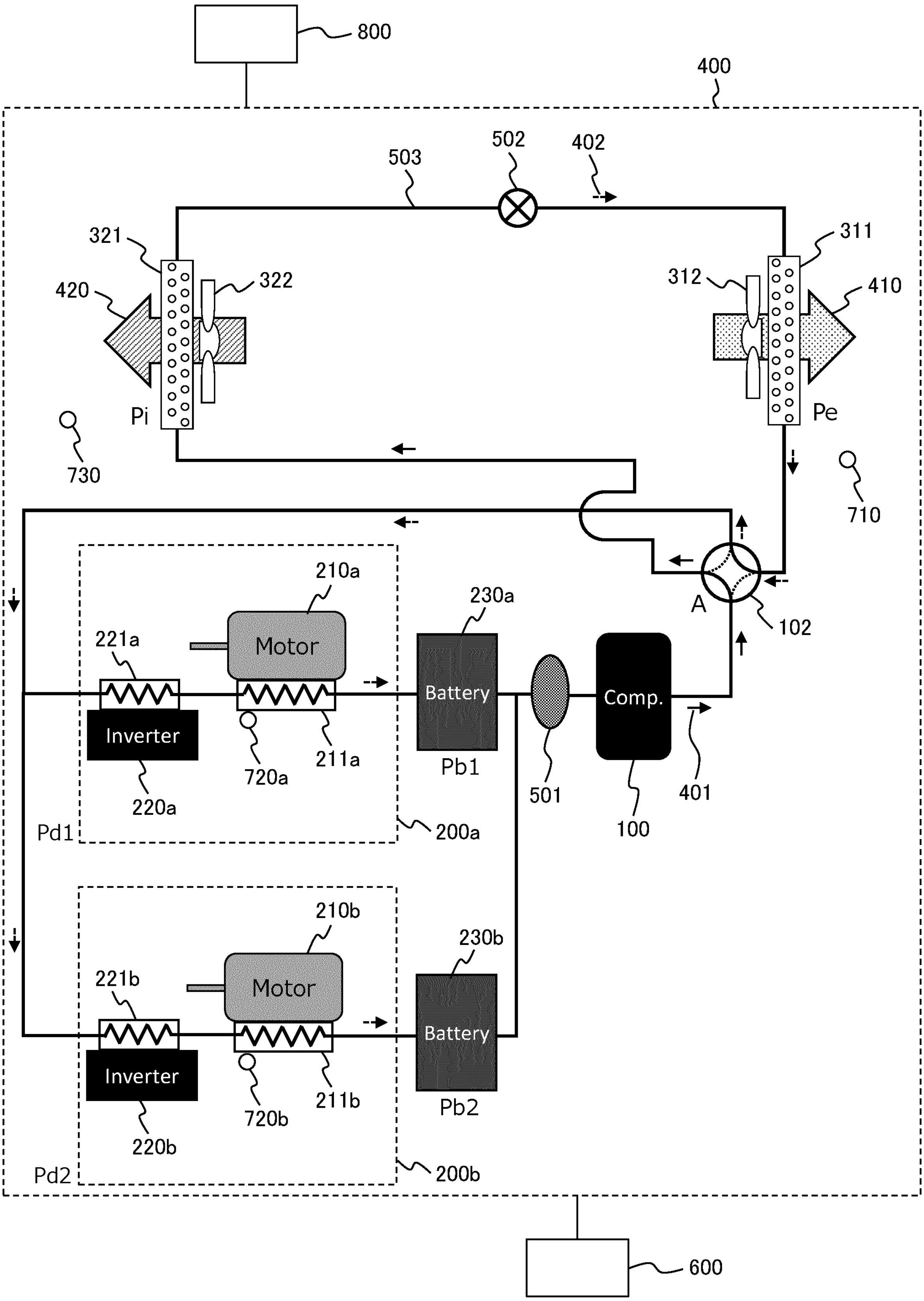
800
400
503
502
402
321
322
311
312
420
410
Pi
Pe
730
710
A
102
210a
230a
221a
Motor
Battery
Comp.
Inverter
720a
211a
Pb1
501
401
220a
100
Pd1
200a
210b
230b
221b
Motor
Battery
Inverter
720b
211b
Pb2
220b
Pd2
200b
600

FIG. 7A

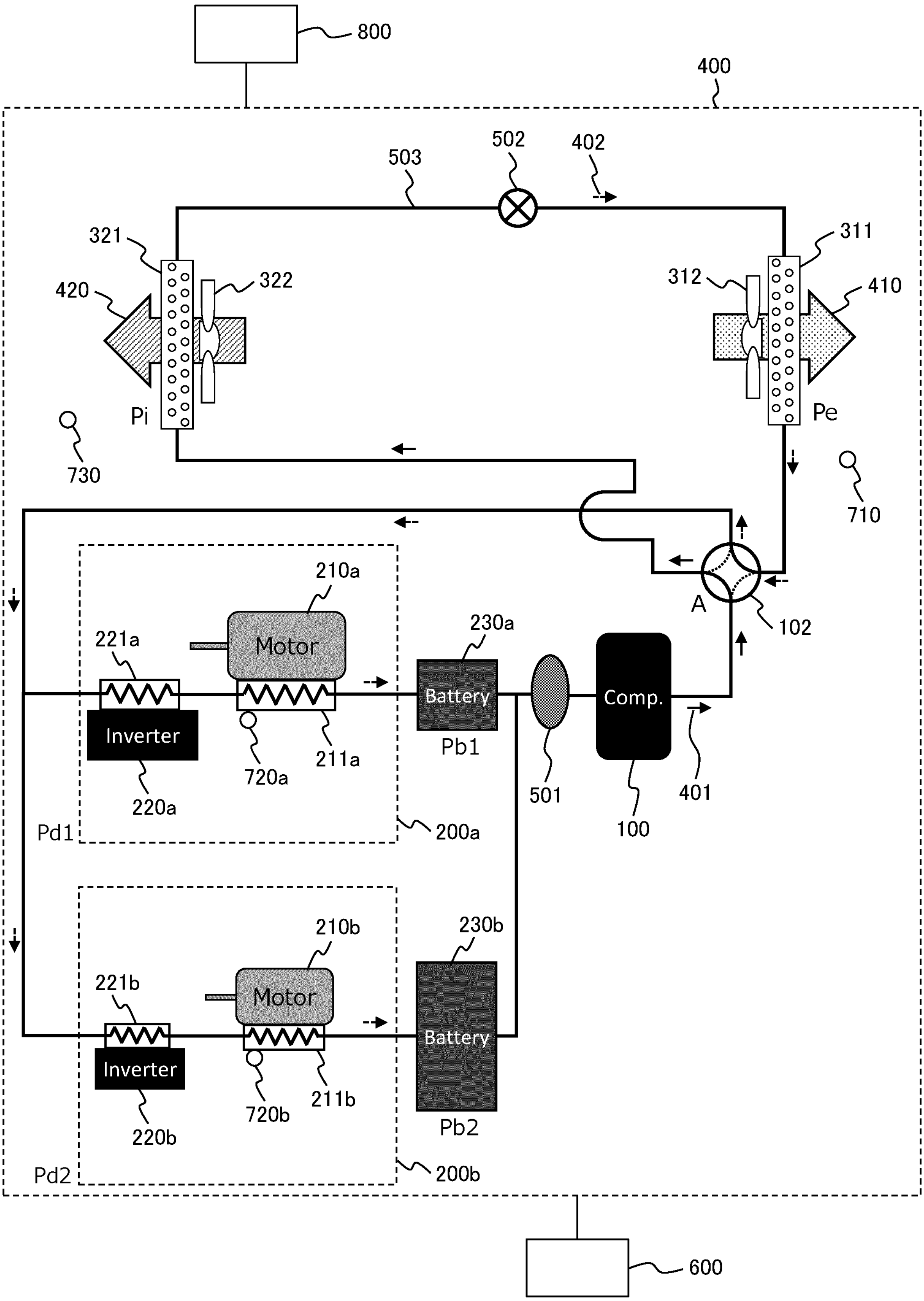
800
400
503
502
402
321
311
322
312
420
410
Pi
Pe
730
710
A
102
210a
Motor
230a
221a
Battery
Comp.
Inverter
Pb1
211a
720a
501
401
220a
100
Pd1
200a
210b
230b
221b
Motor
Battery
Inverter
720b
211b
Pb2
220b
Pd2
200b
600

FIG. 7B

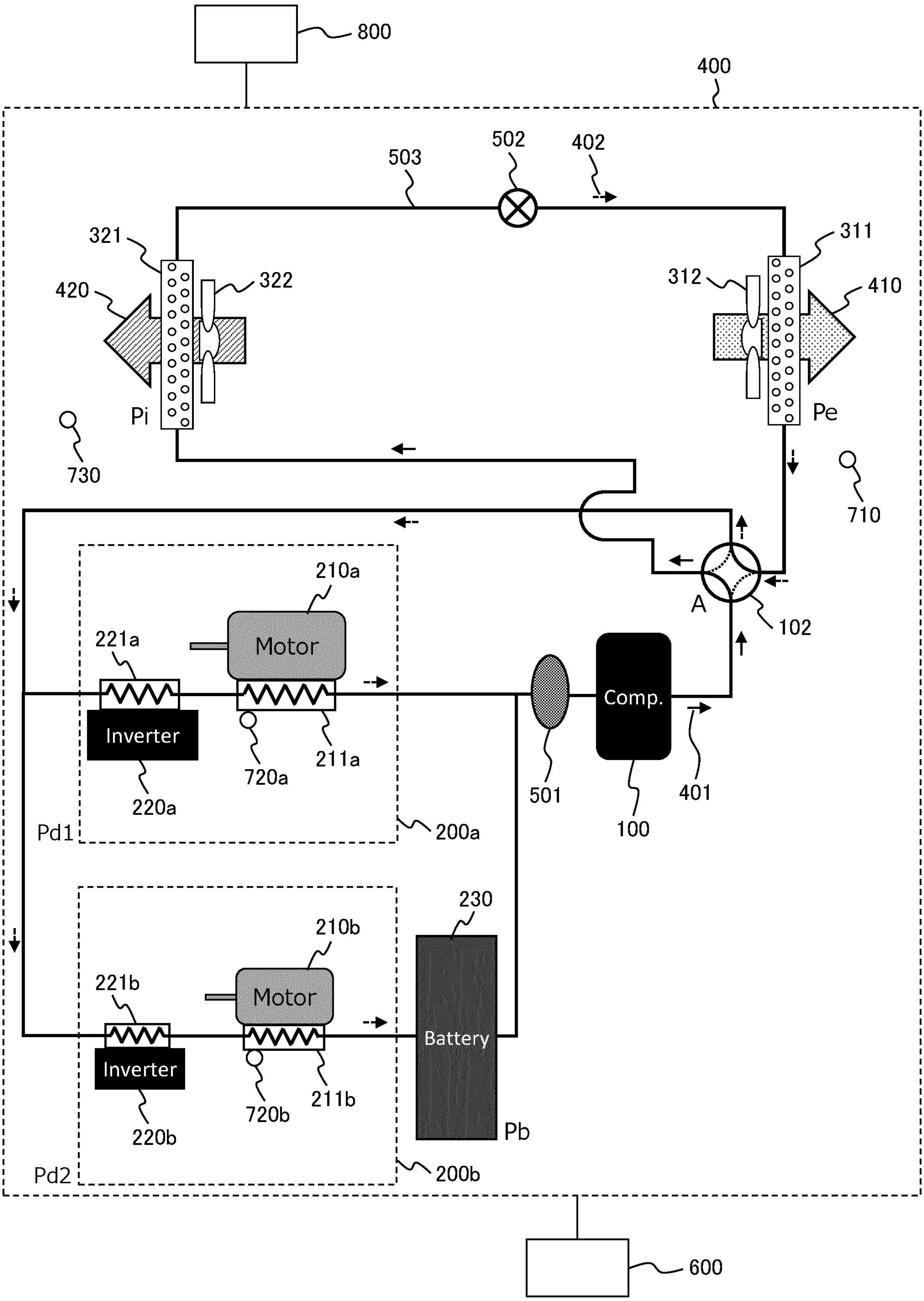
800
400
503
502
402
321
322
420
311
312
410
Pi
Pe
730
710
A
102
210a
221a
Motor
Inverter
220a
720a
211a
Comp.
501
100
401
Pd1
200a
230
210b
221b
Motor
Inverter
220b
720b
211b
Battery
Pb
Pd2
200b
600

FIG. 8A

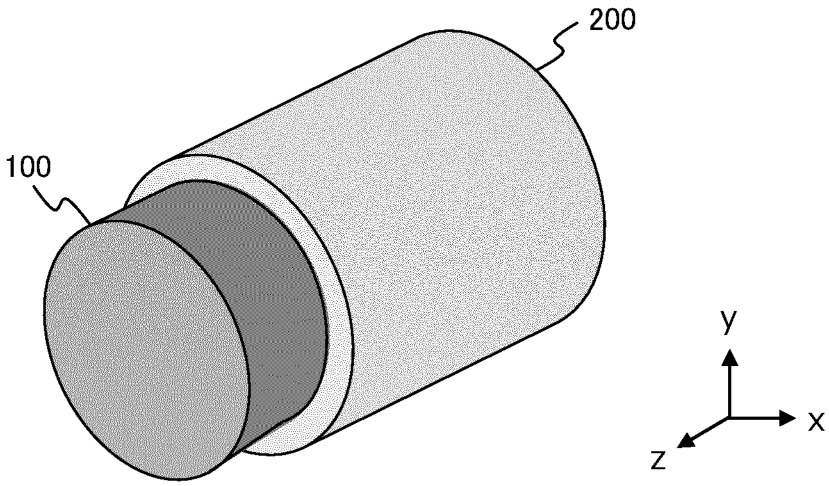


FIG. 8B

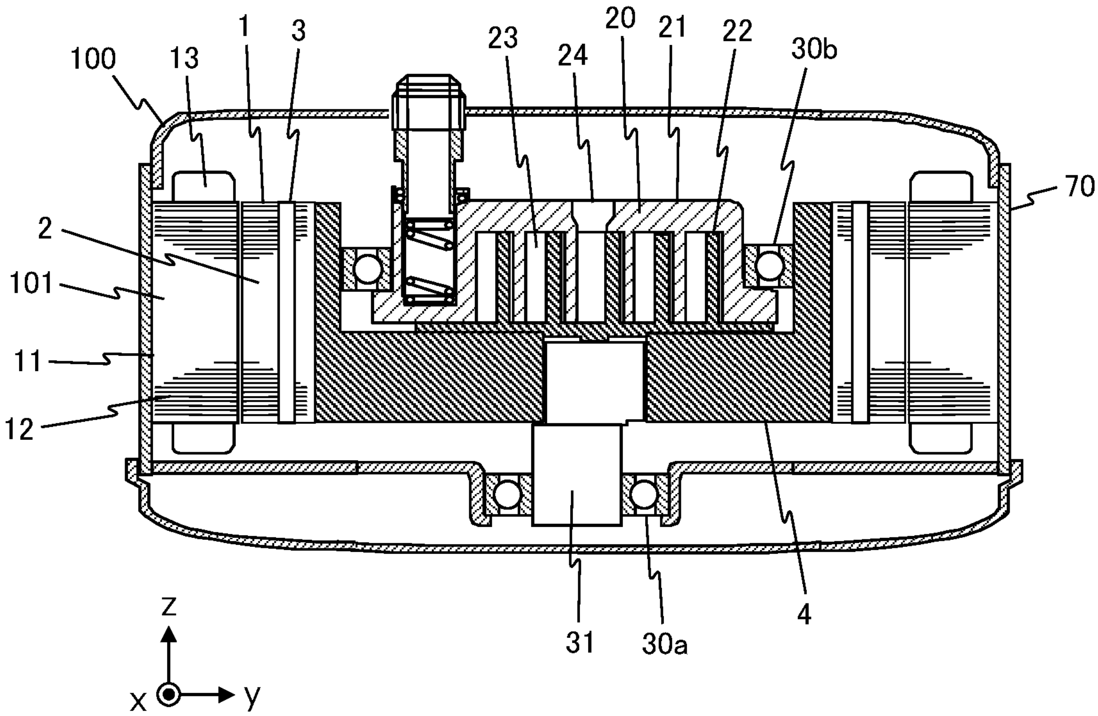

FIG. 9A

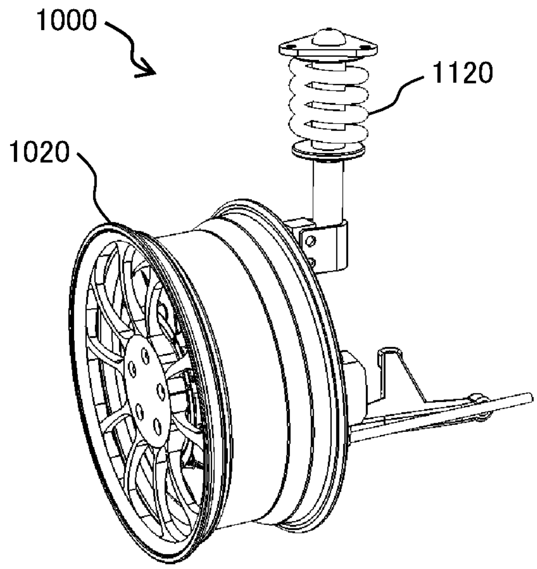
1000
1120
1020

FIG. 9B

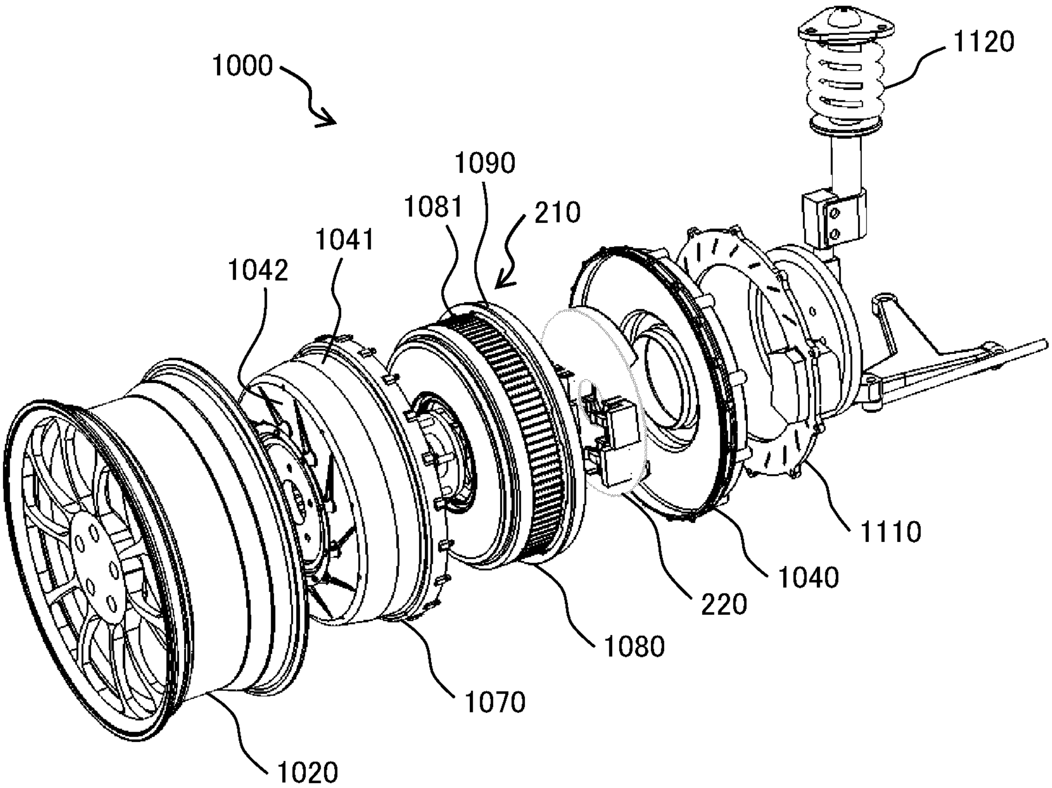
1000
1120
1090
1081
210
1041
1042
1110
1040
220
1080
1070
1020

FIG. 10

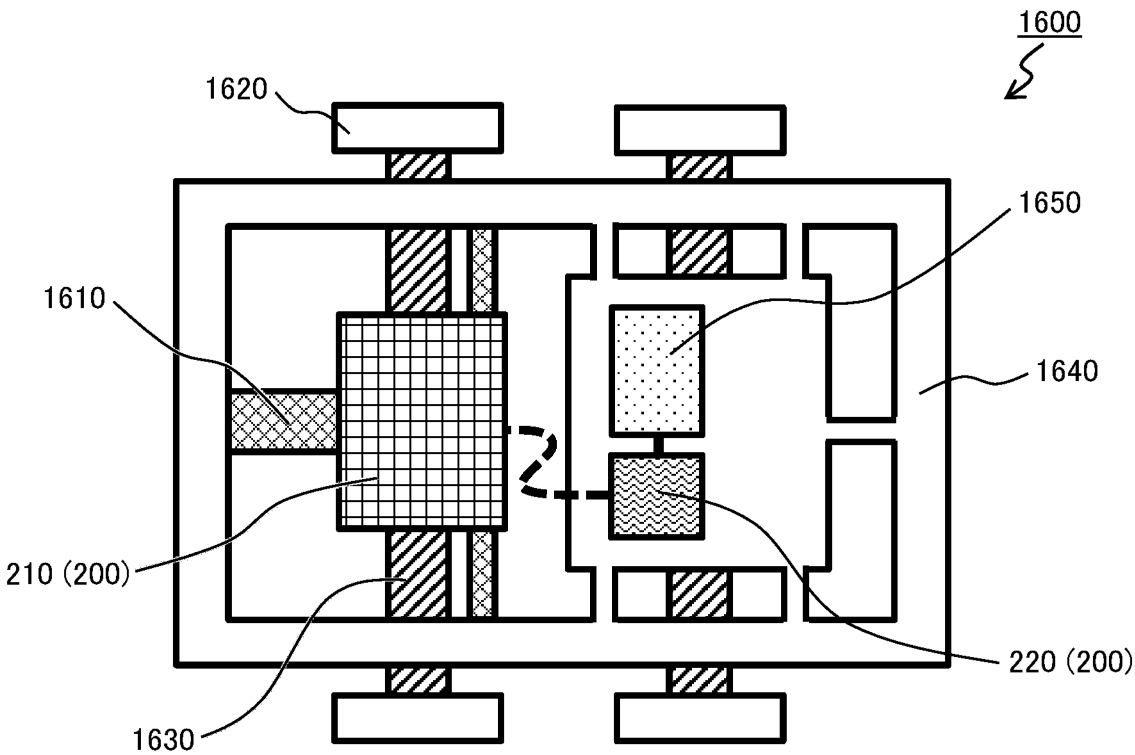

## INTERNATIONAL SEARCH REPORT

International application No.
**PCT/JP2022/025646**

**A. CLASSIFICATION OF SUBJECT MATTER**

***B60K 1/04***(2019.01)i; ***B60H 1/22***(2006.01)i; ***B60K 7/00***(2006.01)i; ***B60K 11/04***(2006.01)i; ***H02K 9/19***(2006.01)i
FI: B60K1/04 Z; B60H1/22 651C; B60H1/22 671; B60K7/00; B60K11/04 G; H02K9/19 Z

According to International Patent Classification (IPC) or to both national classification and IPC

**B. FIELDS SEARCHED**

Minimum documentation searched (classification system followed by classification symbols)

B60K1/04; B60H1/22; B60K7/00; B60K11/04; H02K9/19

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-105151 A (HITACHI, LTD) 02 June 2011 (2011-06-02) paragraphs [0008]-[0054], fig. 1-7 | 1-33 |
| A | WO 2013/161011 A1 (HITACHI, LTD) 31 October 2013 (2013-10-31) paragraphs [0011]-[0081], fig. 1-10 | 1-33 |
| A | JP 2019-31200 A (TOYOTA JIDOSHA KABUSHIKI KAISHA) 28 February 2019 (2019-02-28) paragraphs [0048]-[0152], fig. 1-18 | 1-33 |
| A | JP 2014-37180 A (CALSONIC KANSEI CORPORATION) 27 February 2014 (2014-02-27) paragraphs [0013]-[0144], fig. 1-17 | 1-33 |
| A | CN 112046239 A (GREE ELECTRIC APPLIANCES, INC. OF ZHUHAI) 08 December 2020 (2020-12-08) paragraphs [0028]-[0052], fig. 1-11 | 1-33 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/025646**

| Patent document cited in search report | Publication date (day/month/year) | Patent family member(s) | Publication date (day/month/year) |
|---|---|---|---|
| JP 2011-105151 A | 02 June 2011 | US 2012/0222446 A1<br>paragraphs [0019]-[0072], fig. 1-7<br>WO 2011/061981 A1<br>EP 2502767 A1<br>CN 102470724 A | |
| WO 2013/161011 A1 | 31 October 2013 | US 2015/0075199 A1<br>paragraphs [0024]-[0149], fig. 1-10<br>EP 2846111 A1<br>CN 104272036 A | |
| JP 2019-31200 A | 28 February 2019 | US 2019/0047364 A1<br>paragraphs [0068]-[0162], fig. 1-18<br>EP 3442074 A2<br>CN 109386369 A | |
| JP 2014-37180 A | 27 February 2014 | US 2015/0217623 A1<br>paragraphs [0029]-[0160], fig. 1-17<br>WO 2014/027507 A1 | |
| CN 112046239 A | 08 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6213531 A
- WO 2019098224 A